# EUROPEAN PATENT APPLICATION

(11) **EP 4 769 651 A1**
(43) Date of publication of application: **01.07.2026**
(21) Application number: 25226273.8
(22) Date of filing: 15.12.2025
(51) Int. Cl.: H01M 10/613, H01M 10/625, H01M 10/6567, H01M 50/213, H01M 50/291, H01M 50/296, H01M 50/249, H01M 50/258, H01M 50/284

(54) **BATTERY PACK**

(30) Priority: 17.12.2024 US 202463735305 P; 09.12.2025 US 202519414143
(62) Divisional of application: 25223533.8
(71) Applicant: Xing Power Inc., Victoria, Mahe (SC)
(72) Inventor: Lin, Yu-Chung, 333 Taoyuan City (TW); Tu, Kai-Hsiang, 333 Taoyuan City (TW); Chi, Yu-Shun, 333 Taoyuan City (TW); Liao, Tzu-Wen, 333 Taoyuan City (TW); Wang, Teng-I, 333 Taoyuan City (TW); Dai, Shang-Chih, 333 Taoyuan City (TW); Chuang, Chin-Yao, 333 Taoyuan City (TW); Wu, I-Jung, 333 Taoyuan City (TW)
(74) Representative: Straus, Alexander

(57) **Abstract**

A battery pack includes a battery module (3010) comprising a liquid-limiting casing (0080) configured as a tubing structure and at least one cell holder (0050). The liquid-limiting casing (0080) features a cell-holder stopping structure (0140) protruding from an inner wall surface (0101) to restrict vertical movement of the cell holder (0050). The liquid-limiting casing (0080) further comprises a cell-holder fixing structure (0150) that is configured to mechanically limit displacement in every direction via a fixing fastener (0152). This combination ensures robust, omni-directional retention of the cell holder (0050) and the plurality of battery cells (0020) within the immersion environment. Inner wall surfaces (0101) may be formed as curved surfaces conforming to the battery cells (0020) to reduce module volume.

## Description

### Field of the Invention

The present disclosure generally relates to the integration of battery cells that is configured as a device that can both store and release electric energy according to the pre-characterizing clause of claim 1. To be specific, the present disclosure generally relates to a machine that is assembled from battery cells wherein all the battery cells are immersed in thermal-management liquid while operating.

### Background of the Invention

Electrical energy is widely used to power modern machines. At various stages of the life cycle of electric energy, such as generation, distribution, and consumption, the temporary storage and subsequent release of energy as needed are both significant and necessary.

A rechargeable battery cell is a device that stores electrical energy by converting it into chemical energy (i.e., during the charging process) and then reconverting it into electrical energy (i.e., during the discharging process). Depending on the application, battery cells are integrated through a variety of methods to meet the required electrical performance parameters.

The integration of battery cells, or in other words, a battery cell assembly, is typically considered a subsystem of an electric equipment. In this disclosure, the phrase "electric equipment" may be referred to an electrically powered machinery, a vehicle that has an electric motor as a prime mover, or an electric energy storage system that is connected electrically to a grid or power plant, or a computing machine (e.g. a server with IT gears, circuit boards, and/or integrated circuit component that are configured to perform computational or information processing functions). Thus, it is also critical to consider the integration between the battery cell assemblies and the electrical equipment.

Furthermore, it is well-known that integrating battery cells involves incorporating thermal management systems and battery management systems.
With the above-mentioned design considerations, optimizing the integration of battery cells presents significant challenges.

### Summary of the Invention

### 1. Technical Problem

In high-density battery modules, battery cells (0020) and their supporting structures are subjected to high vibrations and structural forces, particularly in the vertical (gravitational) and lateral (inertial) directions. Traditional cell retention methods often lack omni-directional support or rely solely on adhesives (which degrade in thermal-management liquid). This leads to cell movement, contact fatigue, and safety risks. Furthermore, conventional support structures often introduce unnecessary volume that reduces energy density.

### 2. Technical Solution

To address the aforementioned issues, the present disclosure provides a robust mechanical assembly method. In accordance with an aspect of the present invention, there is provided a battery pack. The battery pack includes at least one battery module and two lid modules arranged at opposite vertical ends of the at least one battery module. Each battery module comprises a plurality of battery cells (BCs), at least one cell holder, at least one battery-cell-connecting member (BCCM), and a liquid-limiting casing (LLC) configured as a tubing structure. Each BC has a positive electrode and a negative electrode, and at least part of the electrodes collectively define an electrode surface. The at least one cell holder includes a plurality of cell receiving structures distributed along a lateral direction, with a part of a body of each BC being disposed in a corresponding cell receiving structure so that the position of each BC is limited. The at least one BCCM is disposed on the cell holder and arranged on the electrode surface, and is mechanically engaged with the cell holder to limit relative movement between the BCCM and the cell holder while electrically connecting the electrodes of the BCs.

The LLC includes a peripheral wall that laterally surrounds a space and extends vertically from a first vertical end to a second vertical end. The space is configured to accommodate the BCs, the at least one cell holder, and the at least one BCCM. The first and second vertical ends of the peripheral wall respectively define a first opening and a second opening. At least one mechanical interlocking structure is disposed on the first or the second vertical end of the LLC. At least one modular-electric-energy-interface (MEEI) is electrically connected to the at least one BCCM. The two lid modules comprise at least one high-voltage interface connector (HVIC) configured to relay electrical energy of the battery pack to a downstream load, at least one interface liquid connector (ILC) configured to introduce a thermal-management liquid into or out of the battery pack, at least one lid interlocking structure configured to be mechanically engaged with the mechanical interlocking structure of the LLC to limit relative displacement between the lid modules and the at least one battery module, at least one lid electrical interface electrically connected to the HVIC and the MEEI, and at least one lid liquid channel in fluid communication with the ILC and the first and second openings of the LLC.

The peripheral wall of the LLC of the at least one battery module and the two lid modules are vertically stacked and assembled to collectively form a liquid-tight battery-pack enclosure. The liquid-tight battery-pack enclosure encloses a battery-pack space that is configured to accommodate the thermal-management liquid such that the plurality of battery cells, the at least one cell holder, and the at least one BCCM are immersed in the thermal-management liquid. The liquid-limiting casing further comprises at least one cell-holder stopping structure protruding from an inner wall surface of the peripheral wall and configured to abut against the at least one cell holder so as to limit vertical movement of the at least one cell holder within the LLC.

According to some aspects of the present invention, the peripheral wall comprises four side walls arranged to form a rectangular tubing structure. The at least one cell-holder stopping structure may protrude laterally and inwardly from the inner wall surface of the peripheral wall. In certain aspects, the at least one cell holder comprises two cell holders, and the cell-holder stopping structure has a height smaller than a height of the peripheral wall so that a first space is defined between the first opening of the LLC and the cell-holder stopping structure and a second space is defined between the second opening of the LLC and the cell-holder stopping structure, each of the first and second spaces being configured to accommodate a respective one of the two cell holders. The LLC may comprise two cell-holder stopping structures respectively disposed on inner surfaces of two opposite side walls of the peripheral wall.

In further aspects of the present invention, the at least one cell-holder stopping structure comprises an inner boundary facing the at least one cell holder, the inner boundary being spaced from the inner wall surface of the peripheral wall by a predetermined lateral distance so as to laterally position the at least one cell holder within the LLC. The inner boundary may be formed as a curved surface having a radius of curvature corresponding to a curved periphery of the at least one cell holder and/or the plurality of battery cells, such that the inner boundary at least partially surrounds the plurality of battery cells and provides additional space to accommodate the battery cells. The cell-holder stopping structure can also be implemented as a plurality of discrete cell-holder stopping structures that are disposed on the inner wall surface of one of the side walls of the peripheral wall.

According to additional aspects of the present invention, the at least one cell holder comprises an internal surface configured to abut against the at least one cell-holder stopping structure when the at least one cell holder is assembled within the LLC. The LLC may further comprise at least one cell-holder fixing structure extending from the inner wall surface of the peripheral wall and having a fastener hole formed therein. The at least one cell holder comprises at least one fixing plane protruding laterally from a peripheral edge of the cell holder and having a fixing hole aligned with the fastener hole. A fixing fastener is vertically inserted through the fixing plane and the cell-holder fixing structure to fix the at least one cell holder to the LLC while the cell-holder stopping structure vertically supports the cell holder. In certain aspects, the fixing plane is a side plane disposed at a lateral side of the cell holder, extending outward from the peripheral edge in a lateral direction, and a thickness of the side plane in a radial direction of the plurality of battery cells is smaller than a thickness of the cell holder in the radial direction.

In yet other aspects of the present invention, inner wall surfaces of the peripheral wall are formed as curved surfaces conforming to a curved periphery of the at least one cell holder and/or the plurality of battery cells. This reduces a volume of the at least one battery module and allows the curved inner wall surfaces to serve as guide structures when the cell holder is placed into the LLC during assembly.

According to further aspects, a peripheral wall of the LLC may comprise one or more module-wall-vertical-channels extending in a vertical direction and module-wall-lateral-channels formed on inner wall surfaces of two opposite side walls of the peripheral wall. The module-wall-vertical-channels are communicated with the module-wall-lateral-channels so that a module-wall-vertical-flow of the thermal-management liquid flowing within the module-wall-vertical-channels flows through the module-wall-lateral-channels into the battery-pack space as a module-wall-lateral-flow. The at least one cell holder can comprise a plurality of flow guides disposed on an internal surface of the cell holder and between the cell receiving structures, the plurality of flow guides being disposed corresponding to the module-wall-lateral-channels so as to at least partially block and redirect the module-wall-lateral-flow and guide the thermal-management liquid to flow simultaneously in both a first lateral direction and a second lateral direction within the battery-pack space. As a result, the liquid temperature distribution within the battery-pack space is made more uniform while the positions of the at least one BCCM are also limited and protected by the flow-guide geometry.

### 3. Beneficial Effects

The structural assembly method of the present disclosure offers significant mechanical advantages:
- Robust, Omni-directional Retention: The separation of function between the stopping structure (vertical support) and the fixing structure (omni-directional restraint) ensures that the cell holder (0050) is securely retained in all three spatial dimensions, enhancing safety and structural rigidity.
- Simplified Assembly and Maintenance: The cell holder (0050) can be vertically placed into the LLC (0080) until it abuts the stopping structure (0140), and is then secured by simply inserting and fastening the fixing fastener (0152). This two-step process streamlines module assembly.
- High Energy Density: The use of curved inner wall surfaces (0101) and corresponding curved inner boundaries (0141) within the peripheral wall maximizes the utilization of the available space, directly supporting an increase in the module's energy density.
- Component Versatility: The modular design of the stopping structure allows for configurations such as using a plurality of discrete cell-holder stopping structures (Claim 8) or forming the inner boundary as a curved surface (Claim 7), providing flexibility for accommodating various cell sizes and maximizing cell-to-cell liquid flow.

### Brief Description of the Drawings

In the following, the invention is further illustrated by way of example, taking reference to the accompanying drawings thereof:
FIG. 1 is a conceptual circuit diagram showing a charging-discharging circuit (0040) including a battery cell assembly (0010), battery cells (0020), and battery cell strings (0030),
FIG. 2A and FIG. 2B are perspective views of an embodiment of the battery cell assembly (0010); FIG. 2B is an exploded view showing a cell holder (0050), cell receiving structures (0060), and electrode surfaces (0024),
FIG. 2C is a perspective exploded view of a battery cell assembly (0010) showing battery-cell-connecting members (0026) and a cell holder (0050),
FIG. 2D is a detail view showing plate-holes (0029) of the battery-cell-connecting members (0026) engaged with vertical limiting structures (0070) of the cell holder (0050),
FIG. 3A and FIG. 3B are conceptual perspective views showing two battery cell assemblies (0010) arranged in a stacked configuration (FIG. 3A) and in a side-by-side configuration (FIG. 3B),
FIG. 4A, FIG. 4B and FIG. 4C are top views of liquid-limiting casings (0080) of tubing form with a peripheral wall (0090),
FIG. 5A and FIG. 5B are perspective views of a battery cell assembly (0010) arranged within a liquid-limiting casing (0080); FIG. 5B is a vertically exploded view showing a top opening (0094), a bottom opening (0095), and two cell holders (0050),
FIG. 6A is a top view of a rectangular liquid-limiting casing (0080) with side walls (0091) designated east (0096), south (0097), west (0098), and north (0099),
FIG. 6B is a view of a liquid-limiting casing (0080) showing inner wall surfaces (0101), outer wall-surfaces (0106), inner corners (0120), outer corners (0125), corner pillars (0130), and side walls (0091),
FIG. 6C is a view of a peripheral wall (0090) assembled from two partially surrounding walls,
FIG. 6D is a view of a peripheral wall (0090) assembled from four independent side walls (0091),
FIG. 7A, FIG. 7B and FIG. 7C are top views of a liquid-limiting casing (0080) showing cell-holder stopping structures (0140) extending inward from the inner surface of the peripheral wall (0090) and inner boundaries (0141); FIG. 7C includes a battery cell assembly (0010) with a cell holder (0050) and a section line A-A',
FIG. 7D is a vertical section view taken along A-A' of FIG. 7C showing relative positions of a peripheral wall (0090), a cell-holder stopping structure (0140), and spaces above and below the stopping structure,
FIG. 7E is a view of a liquid-limiting casing (0080) showing discrete cell-holder stopping structures (0140) on an inner-north surface (0105) of a north wall (0099),
FIG. 8A, FIG. 8B and FIG. 8C illustrate cell-holder fixing structures (0150) within a liquid-limiting casing (0080); FIG. 8A is a top view showing fixing structures (0150) with fastener holes (0151); FIG. 8B is a top view showing a cell holder (0050) with fixing fasteners (0152); FIG. 8C is a section view along line B-B' showing a cell holder (0050), a stopping structure (0140), and fixing fasteners (0152),
FIG. 9A and FIG. 9B are perspective views showing two stacked battery cell assemblies (0010),
FIG. 10A is a view of a liquid-limiting casing (0080) showing a top wall surface (0160), a bottom wall surface (0170), top surface interlocking structures (0180), and bottom surface interlocking structures (0190),
FIG. 10B is a view of two liquid-limiting casings (0080) stacked with the interlocking structures (0180, 0190) engaged,
FIG. 11A and FIG. 11B show sealing features at an interface between liquid-limiting casings (0080); FIG. 11A shows a sealing-member-accommodating structure (0220) and a sealing-member-positioning structure (0210); FIG. 11B shows a sealing member (0200), such as an O-ring, disposed in the accommodating structure,
FIG. 12A is a view showing a vertical-wall-channel (0230) with a PCB of a cell monitoring device (0260) associated with a battery-cell-connecting member (0026),
FIG. 12B is a view showing a vertical-wall-channel (0230) with a conductor rod (0280).
FIG. 13 is a section view of a battery pack (3030) including battery modules (3010), a terminal module (3040), an interface module (3050), and interfaces,

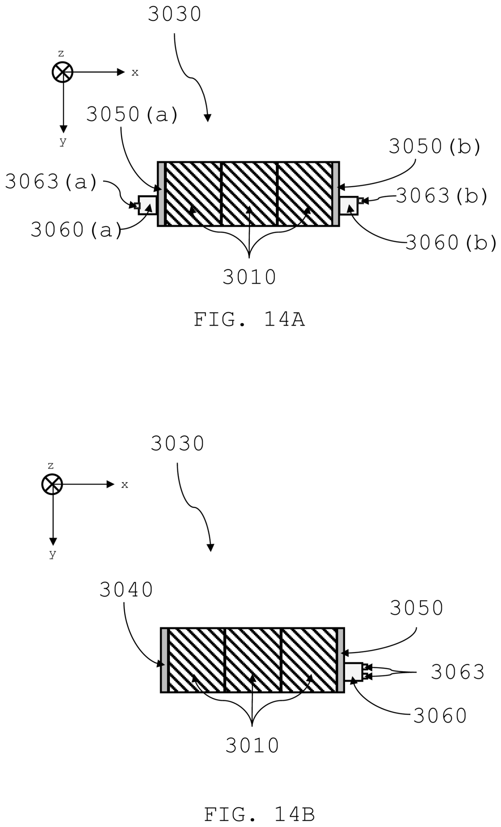

FIG. 14A and FIG. 14B are conceptual diagrams of battery pack architectures: FIG. 14A shows multiple battery modules (3010) stacked between first and second interface modules (3050a, 3050b) with electrical energy interface modules (3060a, 3060b) and high-voltage interface connectors (3063) at opposite vertical ends; FIG. 14B shows battery modules between a terminal module (3040) and an interface module (3050) with an electrical energy interface module (3060) and two high-voltage interface connectors (3063) on the same vertical end, and vertical-wall-channels (0230) sealed to form a vertical through-hole with a conductor rod (0280),
FIG. 15A and FIG. 15B are conceptual diagrams illustrating orientations relative to a gravity vector,
FIG. 16A is a conceptual perspective diagram of a cross-sectional view of the BP (3030),
FIG. 16B is a conceptual perspective diagram of a cross-sectional view of the BP (3030),
FIG. 16C is a conceptual perspective diagram of a cross-sectional view of the BP 3030,
FIG. 16D is a conceptual perspective diagram of a cross-sectional view of the BP (3030,
FIG. 16E is a conceptual perspective diagram of a cross-sectional view of the BP (3030),
FIG. 17A is a conceptual diagram of an exemplary BCA (0010),
FIG. 17B is a conceptual diagram of an exemplary BCA (0010),
FIG. 17C is a conceptual diagram of an exemplary lid module,
FIG. 17D is a conceptual diagram of an exemplary lid module,
FIG. 18 illustrates the BP (3030), according to an example implementation of the present disclosure,
FIG. 19A, FIG. 19B, and FIG. 19C illustrate other structures of the BP (3030) illustrated in FIG. 18, according to example implementations of the present disclosure,
FIG. 20A and FIG. 20B illustrate liquid flow structures of BPs, according to example implementations of the present disclosure,
FIG. 21A and FIG. 21B are conceptual diagram of the flowing directions of the thermal-management liquid when the two ILCs are respectively disposed on two opposite lid modules, and FIG. 21C is a perspective view corresponding to FIG. 21A and FIG. 21B,
FIG. 21D and FIG. 21E are conceptual diagram of the flowing directions of the thermal-management liquid when the two ILCs being disposed on the same lid module, and FIG. 21F is a perspective view corresponding to FIG. 21D and FIG. 21E,
FIG. 22A and FIG. 22B illustrate perspective views of the BP (3030), according to an example implementation of the present disclosure,
FIG. 23 illustrates a partially exploded view of the BP (3030) illustrated in FIG. 22B, according to an example implementation of the present disclosure,
FIG. 24A and FIG. 24B illustrate, respectively, a front view and a back view of the lid module (3090(a)) illustrated in FIG. 22A, according to an example implementation of the present disclosure,
FIG. 24C illustrates a back view of the lid module (3090(a)) illustrated in FIG. 24B without the flow divider (3109(a)), according to an example implementation of the present disclosure, and FIG. 24D illustrates a perspective view of the flow divider (3109(a)) illustrated in FIG. 24B, according to an example implementation of the present disclosure,
FIG. 25A and FIG. 25B illustrate, respectively a front view and a back view of the lid module (3090(b)) illustrated in FIG. 22B, according to an example implementation of the present disclosure,
FIG. 25C illustrates a back view of the lid module (3090(b)) illustrated in FIG. 25B without the flow divider (3109(b)), according to an example implementation of the present disclosure,
FIG. 26A illustrates a perspective view of the BM (3010) illustrated in FIG. 23, according to an example implementation of the present disclosure, and FIG. 26B illustrates a front view of the BM (3010) illustrated in FIG. 23, according to an example implementation of the present disclosure,
FIG. 27A illustrates a partially enlarged view of a top-left corner of the BM (3010) illustrated in FIG. 26A, according to an example implementation of the present disclosure,
FIG. 27B illustrates a cross-sectional view of the BM (3010) taken along line C-C' of FIG. 26B, according to an example implementation of the present disclosure,
FIG. 27C illustrates an enlarged view of a region B illustrated in FIG. 26B, according to an example implementation of the present disclosure,
FIG. 28 illustrates a partially enlarged view of a top-left corner of the BM (3010), according to another example implementation of the present disclosure,
FIG. 29A is a conceptual perspective diagram of a cross-sectional view of the BP (3030),
FIG. 29B is a partial cross-sectional view of the BP (3030) in FIG. 29A along line D-D',
FIG. 29C and FIG. 29D are cross-sectional views of the BP (3030) in FIG. 29A along line E-E',
FIG. 30B illustrates a perspective view of a cell holder (0050'), according to an example implementation of the present disclosure, and FIG. 30A illustrates a perspective view of a combination of the BM (3010) illustrated in FIG. 26A and the cell holder (0050') illustrated in FIG. 30B, according to an example implementation of the present disclosure,
FIG. 31A illustrates a front view of the combination of the BM (3010) and the cell holder (0050') illustrated in FIG. 30B, according to an example implementation of the present disclosure,
FIG. 31B illustrates a cross-sectional view of the combination of the BM (3010) and the cell holder (0050') illustrated in FIG. 31A, taken along line F-F' of FIG. 31A, according to an example implementation of the present disclosure,
FIG. 32A illustrates a perspective view of the BP (3030) illustrated in FIG. 22B without the LLCs (0080) illustrated in FIG. 23, according to an example implementation of the present disclosure,
FIG. 32B illustrates electronic connection structures of cell monitoring circuits (3110 and 3120) illustrated in FIG. 32A, according to example implementations of the present disclosure, and
FIG. 33 illustrates a circuit diagram of the BCs (0020), the cell monitoring circuit (3110), and the cell sensing circuits (3111) illustrated in FIG. 32A and FIG. 32B, according to an example implementation of the present disclosure.

### Detailed Description

Before the disclosure is described in greater detail, it should be noted that where considered appropriate, reference numerals have been repeated among the figures to indicate corresponding or analogous elements, which may optionally have similar characteristics.

To aid in describing the disclosure, directional terms may be used in the specification and claims to describe portions of the present disclosure (e.g., front, rear, left, right, top, bottom, etc.). Unless specifically defined, these directional definitions are intended to merely assist, in describing and claiming the disclosure and are not intended to limit the disclosure in any way.

The following contains specific information pertaining to example implementations in the present disclosure. The drawings and their accompanying detailed disclosure are directed to merely example implementations of the present disclosure. However, the present disclosure is not limited to merely these example implementations. Other variations and implementations of the present disclosure will occur to those skilled in the art. Unless noted otherwise, like or corresponding elements among the figures may be indicated by like or corresponding reference numerals. Moreover, the drawings and illustrations in the present disclosure are generally not to scale and are not intended to correspond to actual relative dimensions.

For consistency and ease of understanding, like features are identified (although, in some examples, not illustrated) by numerals in the example figures. However, the features in different implementations may differ in other respects, and thus shall not be narrowly confined to what is illustrated in the figures.

References to "one implementation," "an implementation," "example implementation," "various implementations," "some implementations," "implementations of the present disclosure," etc., may indicate that the implementation(s) of the present disclosure may include a particular feature, structure, or characteristic, but not every possible implementation of the present disclosure necessarily includes the particular feature, structure, or characteristic. Further, repeated use of the phrase "in one implementation," "in an example implementation," or "an implementation," do not necessarily refer to the same implementation, although they may. Moreover, any use of phrases like "implementations" in connection with "the present disclosure" are never meant to characterize that all implementations of the present disclosure must include the particular feature, structure, or characteristic, and should instead be understood to mean "at least some implementations of the present disclosure" includes the stated particular feature, structure, or characteristic. The term "coupled" is defined as connected, whether directly or indirectly through intervening components, and is not necessarily limited to physical connections. The term "comprising," when utilized, means "including but not necessarily limited to"; it specifically indicates open-ended inclusion or membership in the disclosed combination, group, series, and the equivalent.

Additionally, for a non-limiting explanation, specific details, such as functional entities, techniques, protocols, standards, and the like, are set forth for providing an understanding of the disclosed technology. In other examples, detailed disclosure of well-known methods, technologies, systems, architectures, and the like are omitted so as not to obscure the present disclosure with unnecessary details.

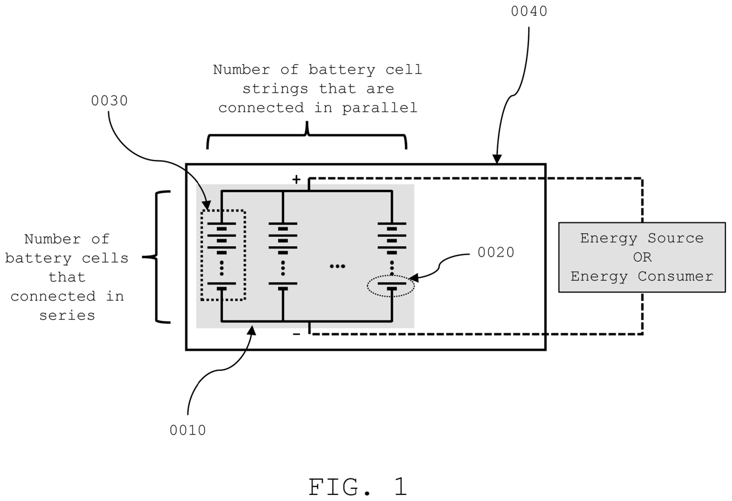

FIG. 1 is a conceptual circuit diagram of a charging-discharging circuit 0040. In FIG. 1, the charging-discharging circuit comprises a "battery cell assembly" 0010 (hereafter, BCA). The BCA 0010 is configured for meeting the required electrical performance, for example, a required target output voltage, Ampere or power. To meet such requirements, battery cells may be integrated, e.g. be assembled, in a mechanical and electrical manner, into a BCA 0010 to provide a collective performance.

As illustrated in FIG.1, in some embodiments, a BCA 0010 may comprise one or more battery cell strings 0030 (hereafter, BCS) that are connected electrically in parallel. The number of BCSs 0030 that are connected in parallel would determine the overall current output of the BCA 0010. Furthermore, each of the BCSs 0030 may comprise one or more battery cells 0020 (hereafter, BC) that are connected electrically in series. The number of BCs 0020 in each of the BCSs 0030, that are connected in series, would determine the overall voltage output of the BCS 0030 and the BCA 0010.

The charging-discharging circuit 0040 may be connected to an energy source such as a charging station therefore to charge the BCA 0010. The charging-discharging circuit may also be connected to an energy consumer such as a prime mover of an electric vehicle therefore power the prime mover.

In some embodiments (not shown in FIG. 1), the charging-discharging circuit 0040 may comprise more than one BCAs 0010, to meet certain design considerations such as design considerations for manufacturing and/or assembling process of the charging-discharging circuit 0040 itself or the assemble of charging-discharging circuit 0040 and the electrical equipment.

Referring back to the FIG. 1, depending on the technology used, BCs 0020 may have different specifications in aspects such as shape, electrical performance (such as: output voltage, current, power, charging rate, discharging rate, or working temperatures, etc.), materials, and other characteristics. For example, BCs 0020 can be encapsulated in various forms, such as cylindrical, prismatic, or pouch. In this disclosure, unless specifically specified, those skilled in this art should understand that the technological features disclosed hereby would not necessarily be limited to certain type of BCs 0020.

To be configured as the fundamental component to transfer electric energy into chemical energy, or reversely, a BC 0020 may comprise positive and negative electrodes as the interface between: 1. the charging-discharging circuit 0040 to which the BC 0020 connected; and 2. the cathode material and the anode material that is encapsulated in the BC 0020.

Furthermore, BCs 0020, configured as fundamental energy-storing building blocks of the BCA 0010 and the charging-discharging circuit 0040, must be connected electrically. No matter if a BC 0020 is a cylindrical, prismatic or pouch type, the electrodes of the BC 0020 are usually disposed on the top-end, on the bottom-end, or on both ends of the body of the BC 0020 respectively. In such cases, BCs 0020 are usually mechanically aligned side-by-side, so the electrodes of each of the BCs 0020 may be aligned approximately on the same plane. As a result, the body of BCA 0010 may comprise at least one electrode-surface 0024, where the electrodes of BCs 0020 are located and distributed.

In some embodiments, BCA 0010 may comprise battery-cell-connecting members 0026 (hereafter, BCCM) that are electrical conductors configured to connect to the electrodes of the BCs 0020. Through BCCM 0026, the BCs 0020 are electrically connected in parallel, or in series. For example, planar shaped conductor plates may be arranged on the electrode-surface 0024, to connect electrodes of the BCs 0020.

In this disclosure, when referring the direction, the terms "lateral" and "laterally" refer to the directions that lies on the plane on which the electrodes of BCs 0020 of a BCA 0010 be arranged on and refer to the directions that are parallel to the lines that lie on the plane on which the BCs 0020 of a BCA 0010 side-by-side distributed. In FIGs of this disclosure, the lateral directions are marked as the directions that are parallel to the lines that lie on the y-z plane. The term "top-viewed" means the section viewing from the positive x-direction towards the minus-x-direction.

In this disclosure, the terms "vertical" and "vertically" means a direction that is not a "lateral direction" and is orthogonal to "any lateral direction". By this definition, the electrodes of the BC 0020 are usually disposed on at least one the vertical ends of the body of the BC 0020. In FIGs of this disclosure, the vertical direction refers to the direction along the x-direction.

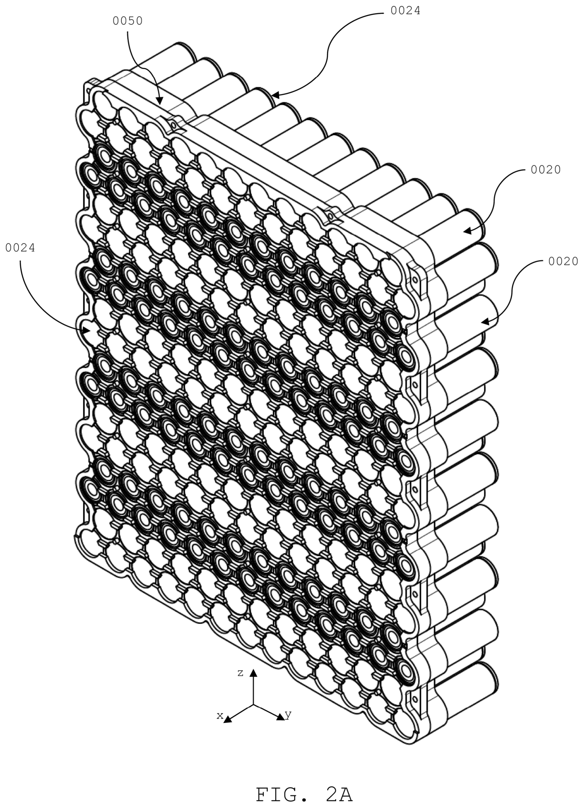

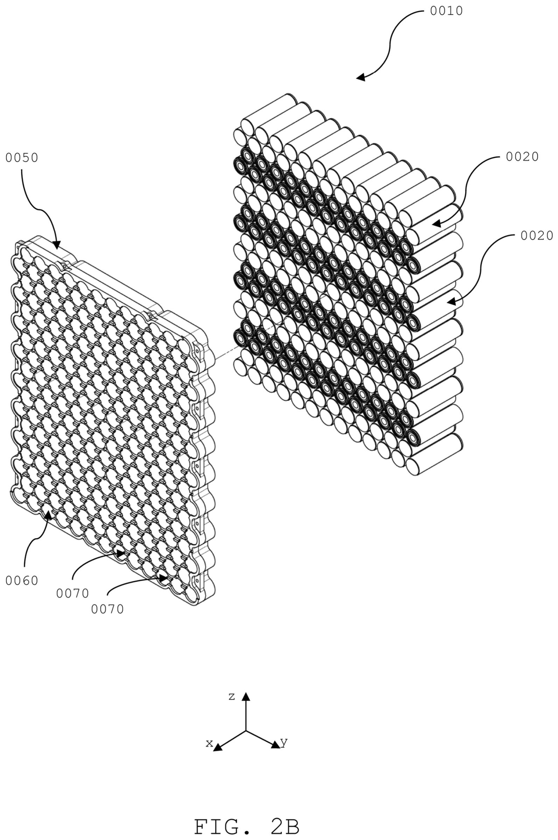

For example, referring to FIG. 2A and FIG. 2B, that are perspective views of an embodiment of BCA 0010 (not all the components of the BCA 0010 are depicted); wherein FIG. 2B is an exploded view of FIG. 2A. In FIG. 2A and FIG. 2B, the body of BCs 0020 may extend vertically (along the x-direction). Furthermore, the top-bottom axis of the BCs 0020 is parallel to the x-direction; and the BCs 0020 are side-by-side aligned along the y-z plane.

To integrate the BCs 0020 mechanically or structurally, in some embodiments, the BCA 0010 may comprise at least one cell holder 0050 which may have a primary function of limiting the position of each of the BC 0020 in a certain configuration. For example, the limiting of the position of a BC 0020 may be: 1. limiting the relative position of a specific BC 0020 respect to any other BCs 0020 that belong to the same BCA 0010 of the specific BC 0020; and 2. Limiting the relative position of a specific BC 0020 respect to the body of the BCA 0010. For example, in FIG. 2A, part of the body of each BCs 0020 are disposed in a corresponded cell receiving structures 0060 of the cell holder 0050. The cell receiving structures 0060 are distributed periodically along the lateral direction. Therefore, once the BCs 0020 are disposed in the cell receiving structures 0060, these BCs 0020 may by arranged with such periodically spatial distribution laterally.

In some embodiments, the cell holder 0050 may comprise vertical limiting structures 0070 to limit the vertical movement of the BCs 0020. The body and electrodes of all BCs 0020 of a BCA 0010 may be aligned in an identical vertical position, therefore, formed as the electrode surface 0024 of the BCA 0010. For example, in FIG. 2A, the BCA 0010 comprises two electrode surfaces 0024 at both sides of x-direction.

In some embodiments, adhesives might be used to provide the displacement limiting function. For example, after placing the BCs 0020 within the supporting holes of the cell holder 0050, glues might be introduced to fix the BCs 0020 additionally.

In some embodiments, to integrate the BCs 0020 electrically, the BCA 0010 may comprise BCCM 0026 that is located on the electrode-surface 0024. Furthermore, the BCA 0010 may comprise mechanical means that is configured to maintain the relative position between the electrode-surface 0024 and BCCM 0026 in static. For example, as the BCs 0020 are fixed mechanically with the cell holder 0050, BCCM 0026 may be connected mechanically with the cell holder 0050.

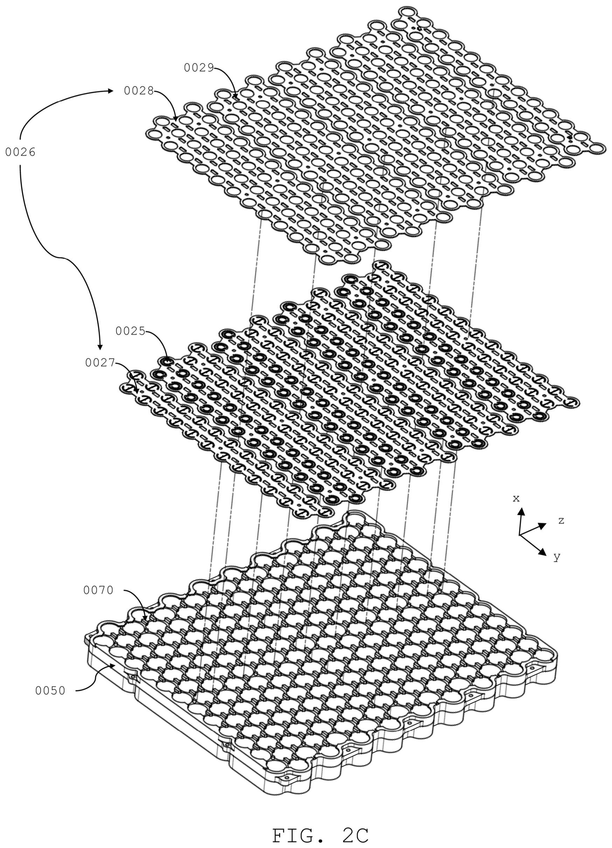

For example, in FIG. 2C, a perspective exploded view of an exemplary BCA 0010 (the BCs and some components are not shown), the BCA 0010 comprises a cell holder 0050 and BCCMs 0026. The BCCMs 0026 is conductive material that formed in plate-shaped. The BCCMs 0026 are configured to be disposed on the cell holder 0050, also, be disposed on the electrode-surface 0024 of the BCA 0010.

In some embodiments, the BCCM 0026 may comprise a cell-contact-plate 0027 and a current-transport-plate 0028.

The cell-contact-plate 0027 may be configured to directly contact the electrode of the BCs. Connecting processes such as welding, crimping, fastening, or the use of conductive adhesives, may be used to connect the cell-contact plate 0027 and the electrodes of the BCs. Furthermore, in some cases, the cell-contact plate 0027 may comprise a fusing welding structure 0025, that is configured to be melted when the current is overloaded.

The current-transport-plate 0028 may be configured to transport the collective current of multiple BCs 0020. In such a purpose, the current-transport-plate 0028 may have a greater thickness than the cell-contact-plate 0027. Furthermore, the current-transport-plate 0028 may have greater conductivity than the cell-contact-plate 0027. For example, the cell-contact-plate 0027 may be a nickel plate, and the current-transport-plate 0028 may be a copper plate.

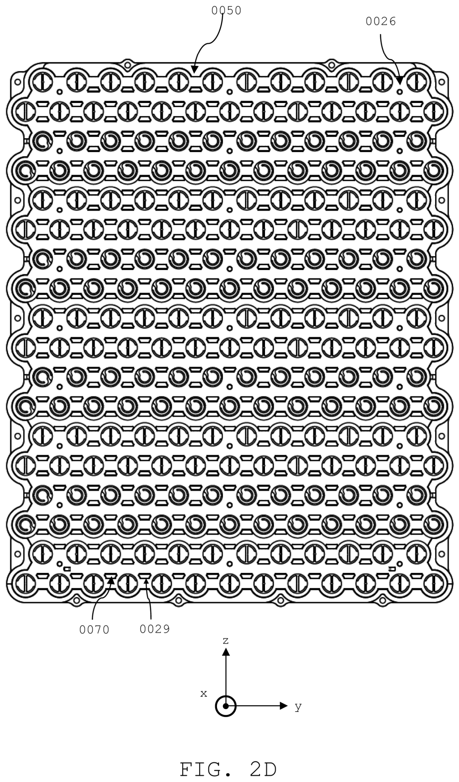

In some embodiments, the BCCM 0026 may comprise structures that are configured for arranging the BCCM 0026 on the cell holder 0050. For example, the BCCM 0026 may comprise extrusions or protrusions that are configured to be engaged with a hollow structure on the cell holder 0050. For another example, the BCCM 0026 may comprise holes that are configured to be engaged with extrusions or protrusions on the cell holder 0050. For example, in FIG. 2C and FIG. 2D, the BCCMs 0026 comprises plate-holes 0029 that is engaged with the vertical limiting structures 0070 of the cell holder 0050. The vertical limiting structures 0070 penetrate through the plate holes 0029 of the BCCMs 0026 to limit the relative movement of the BCCMs 0026 respect to the cell holder 0050. For example, the lateral and vertical relative movement of the BCCMs 0026 respect to the cell holder 0050 may be limited. In various embodiments, the mechanical engagement may be achieved via interference fits, snap-fits, fasteners, or geometric interlocking features such as the hole-and-pillar arrangement described herein.

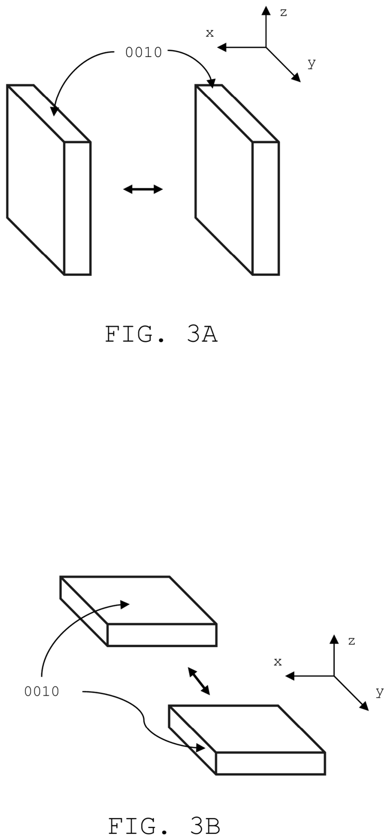

FIG. 3A and 3B are conceptual perspective views of the integration between two BCAs 0010. Depending on the available space to install the BCAs 0010 on the electric equipment, the BCAs 0010 may be integrated in a stacking manner or in a side-by-side manner. For example, in FIG. 3A, the BCAs 0010 are integrated in a stacking manner, and it's suitable to be arranged in a narrow and long space, such as the front and rear compartments of a passenger vehicle. In another example, in FIG. 3B, the BCAs 0010 are integrated in a side-by-side manner, and it's suitable to be arranged in a space with ample width but limited height, such as the floor space under the cabinet of a passenger vehicle.

In this disclosure, the terms "vertical" and "vertically" also refers to the stacking direction of the BCAs of stacking type integration. For example, in FIG. 3A, the stacking type integrated BCAs are stacked along the vertical direction, also, the x-direction.

To prevent the thermal runaway event, maintain the working temperature of the BCA 0010 and BCs 0020, or both. It is known to make the BCs 0020 directly contact thermal-management liquid, so that the thermal-management liquid may transport heat to maintain the working temperature of the BCs 0020 in a predetermined range or to prevent a combustion reaction. For example, the BCA(s) 0010 or BCs 0020 may be partially or entirely immersed in the thermal-management liquid. In the case of the entire immersion of the BCA(s) 0010, the BCA 0010 and some other components that are intended to be integrated with the BCA 0010 may direct contact with the thermal-management liquid, therefore has a better effect on thermal management.

To immerse the BCA 0010 in the thermal-management liquid, the BCA 0010 may be integrated with a liquid-limiting casing 0080 (hereafter, LLC). The LLC 0080 may be configured to limit the movement of the thermal-management liquid. For example, in the space described by the Cartesian coordinate system, certain volumes of thermal-management liquid may have displacement or velocity that may be described by a vector comprising components of unit-vectors of x, y, or z-direction times coefficient respectively. LLC 0080 may comprise means to limit the movement of the thermal-management liquid in at least part of those six directions, to maintain the relative position between the BCA 0010 and the thermal-management liquid in state that the BCA 0010 is immersed in the thermal-management liquid.

In some embodiments, impervious materials may be used to form certain structures that entirely encapsulate or partially cover the thermal-management liquid, therefore to limit the movement of the thermal-management liquid in all directions or in some direction. For example, LLC 0080 may be formed as a tubing shape with two openings, such as triangular tube, square tube or round tube. The tubing shaped LLC 0080 may comprise a peripheral wall 0090 (or in other words, the circumferential wall).

In some embodiments, peripheral wall of the LLC 0080 may comprise impervious membranes to limit the movement of the thermal-management liquid.

In some embodiments, the LLC 0080 may comprise rigid structure such as impervious walls to limit the movement of the thermal-management liquid.

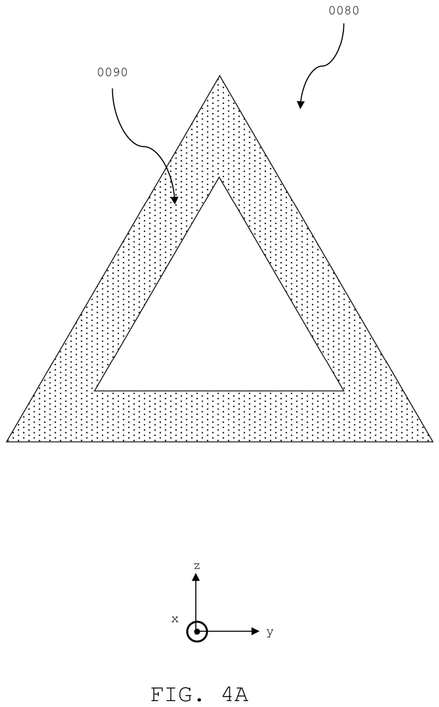

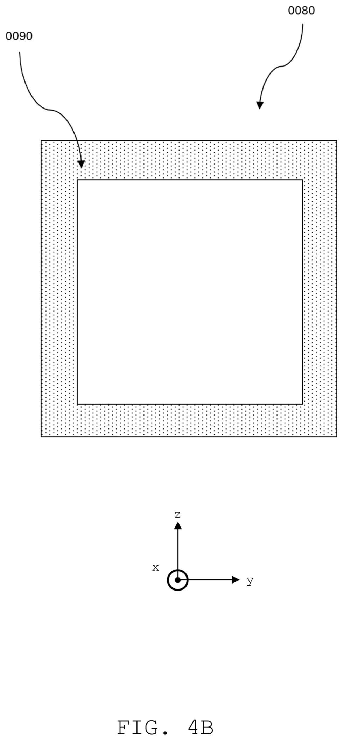

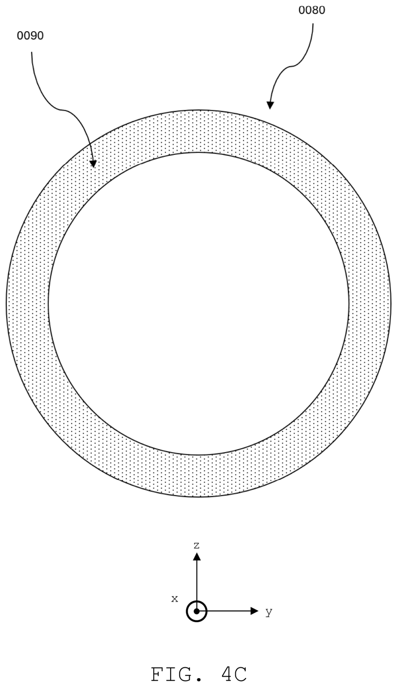

For example, FIG. 4A, FIG. 4B and FIG. 4C are conceptual LLC 0080 in tubing structures depicted in top views. In other examples, the lateral view (i.e. top view) of the tubing structure may be asymmetrical geomatics. In FIG. 4A, FIG. 4B and FIG. 4C, each of the depicted LLCs 0080 comprises a peripheral wall 0090 that surrounds a space laterally. The peripheral wall 0090 may extend vertically, i.e. along the x-direction in FIG. 4A, FIG. 4B and FIG. 4C. Therefore, the three-dimensional space surrounded by the LLC 0080 may be used to accommodate the thermal-management liquid, the BCA 0010, and some components that are intended to be integrated with the BCA 0010. With the impervious property of the peripheral wall 0090, the thermal-management liquid that accommodated in the LLC 0080 may only move in the vertical direction.

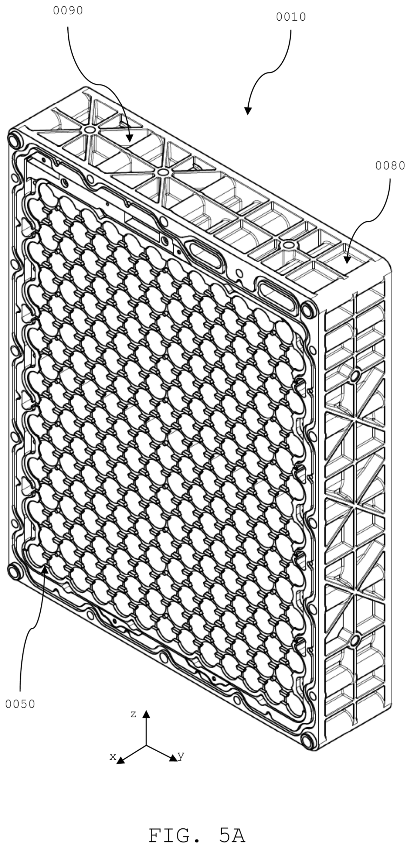

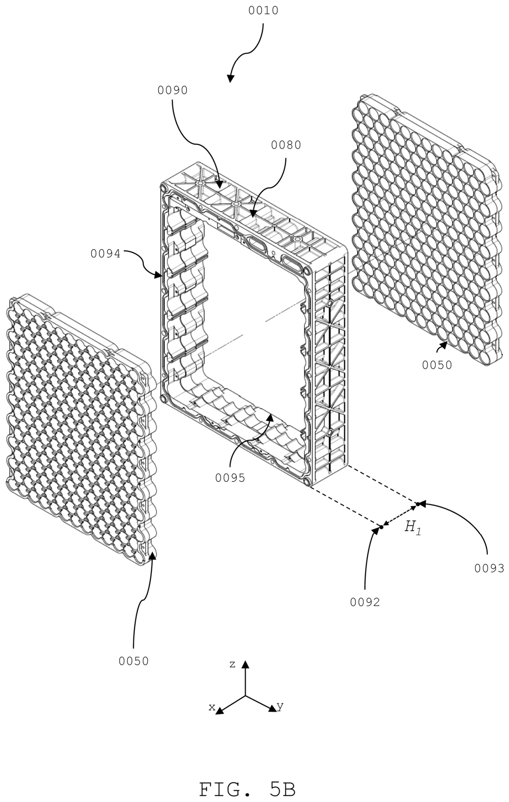

FIG. 5A and FIG. 5B are perspective views of one exemplary embodiment of the BCA 0010, where not all components of the BCA 0010 are shown, for the purpose of clearly specifying the means to make the BCA 0010 be immersed in the thermal-management liquid. For example, the BCs 0020 are not shown in FIG. 5A and FIG. 5B.

FIG. 5B is a vertically exploded perspective view of FIG 5A. In the embodiment of FIG. 5A and FIG. 5B, the BCA 0010 comprises two cell holders 0050 that are integrated with the BCs 0020 (BCs 0020 are not shown in FIG. 5A and FIG. 5B). The cell holders 0050, the BCs 0020, and some other not-shown components that are intended to be integrated with the BCA 0010 may be arranged within the space surrounded by the LLC 0080.

In the embodiments that the LLC 0080 is formed in a tubing shape, the peripheral wall 0090 may be formed as a material that extends between a top vertical position 0092 and a bottom vertical position 0093, along the vertical direction. At the top vertical position 0092, the inner-edge of the peripheral wall 0090 defines a top opening 0094 of the LLC 0080; and, at the bottom vertical position 0093, the inner edge of the peripheral wall 0090 may define a bottom opening 0095 of the LLC 0080. The top opening 0094 and the bottom opening 0095 may be configured as the entrance or exit of the space surrounded by the peripheral wall 0090. Components such as the BCs 0020, cell holders 0050 and other components that are intended to be arranged within the LLC 0080, may be arranged into the inside space of the LLC 0080 through at least one of the top opening 0094 and the bottom opening 0095.

For example, in the embodiment depicted in FIG. 5B, the peripheral wall is extended between the top vertical position 0092 and the bottom vertical position 0093. The vertical length of the LLC 0080 (that is, the height) is equal to the vertical distance between the top vertical position 0092 and the bottom vertical position 0093 H1. The two cell holders are disposed into the space surrounded by the peripheral wall 0090 through the top opening 0094 and the bottom opening 0095.

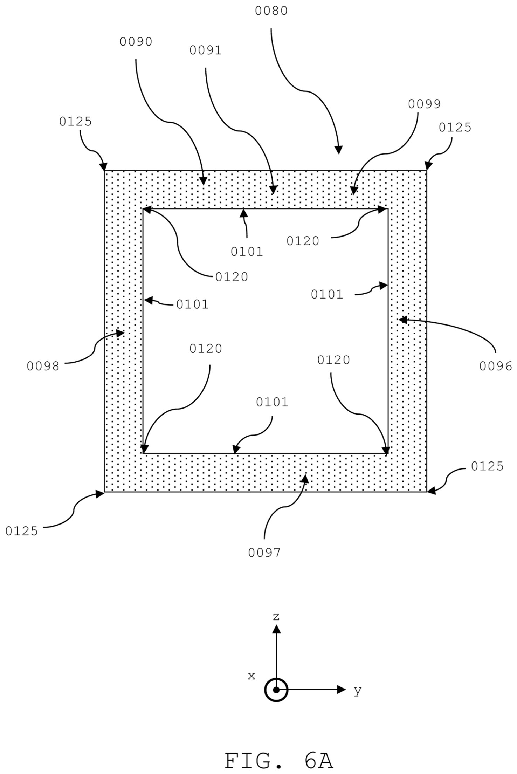

In some embodiments that the LLC 0080 are formed in a rectangular tubing shape, the peripheral wall 0090 of the LLC 0080 may further comprise four planar side walls 0091 that are arranged circumferentially surround and parallel to a vertical axis. For example, in FIG. 6A, a top view of an exemplary LLC 0080 is depicted. The LLC 0080 comprises four side walls 0091: an east wall 0096, a south wall 0097, a west wall 0098, and a north wall 0099, that are arranged circumferentially surround a vertical axis.

In some embodiments, the LLC 0080 may be manufactured through integral forming processes such as injection molding or die casting. Alternatively, a lathe machining process may be employed to produce the LLC 0080.

Referring to FIG. 6A-6B, in some embodiments that the LLC 0080 are formed in a rectangular tubing shape, the peripheral wall 0090 of the LLC 0080 may comprise four inner corners 0120 and four outer corners 0125. The four inner corners 0120 may further include: an inner-northeast corner 0121, an inner-southeast corner 0122, an inner-southwest corner 0123, and an inner-northwest corner 0124. The four outer corners 0125 may further comprise: an outer-northeast corner 0126, an outer-southeast corner 0127, an outer-southwest corner 0128, and an outer northwest-corner 0129.

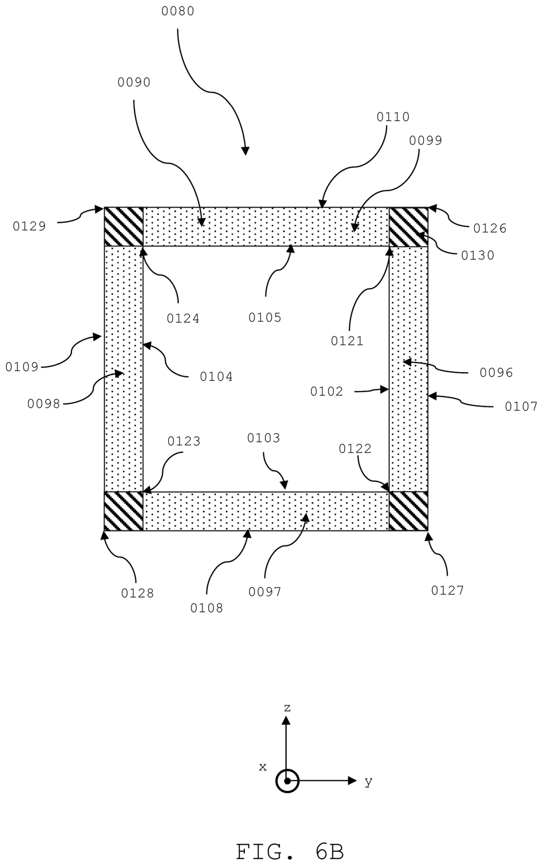

In some embodiments, each of the side walls may comprise an inner wall surface 0101 and an outer wall-surface 0106. The outer wall-surfaces 0106 of each side walls 0091 may be an outer planar surface that may extend between one of the two outer corner of the corresponding side wall 0091. For example, in FIG. 6B, the east wall 0096 comprises an outer-east surface 0107 that extends between the outer-northeast corner 0126 and the outer-southeast corner 0127; the south wall 0097 comprises an outer-south surface 0108 that extends between the outer-southeast corner 0127 and the outer-southwest corner 0128; the west wall 0098 comprises an outer-west surface 0109 that extends between the outer-southwest corner 0128 and the outer-northwest corner 0129; and the north wall 0099 comprises an outer-north surface 0110 that extends between the outer-northwest corner 0129 and the outer-northeast corner 0126.

Furthermore, the inner wall surfaces 0101 of each side walls 0091 may be an inner planar surface that extends between one of the two adjacent inner corners of the underlying side wall 0091. For example, in FIG. 6B, the east wall 0096 comprises an inner-east surface 0102 that extends between the inner-northeast corner 0121 and the inner-southeast corner 0122; the south wall 0097 comprises an inner-south surface 0103 that extends between the inner-southeast corner 0122 and the inner-southwest corner 0123; the west wall 0098 comprises an inner-west surface 0104 that extends between the inner-southwest corner 0123 and the inner-northwest corner 0123; and the north wall 0099 comprises an inner-north surface 0105 that extends between the inner-northwest corner 0124 and the inner-northeast corner 0121.

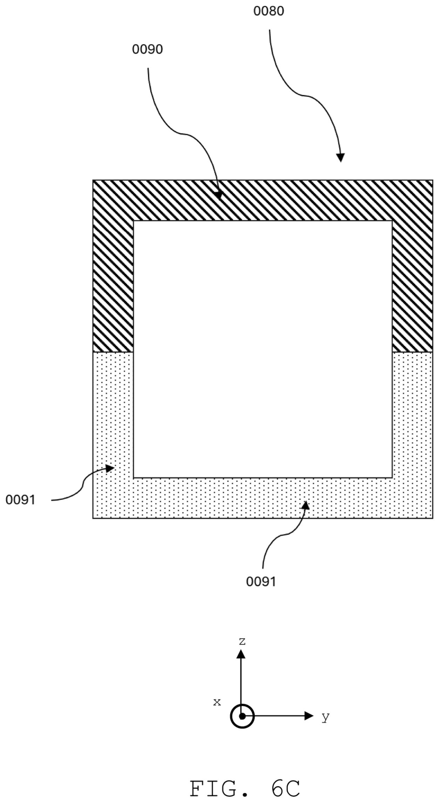

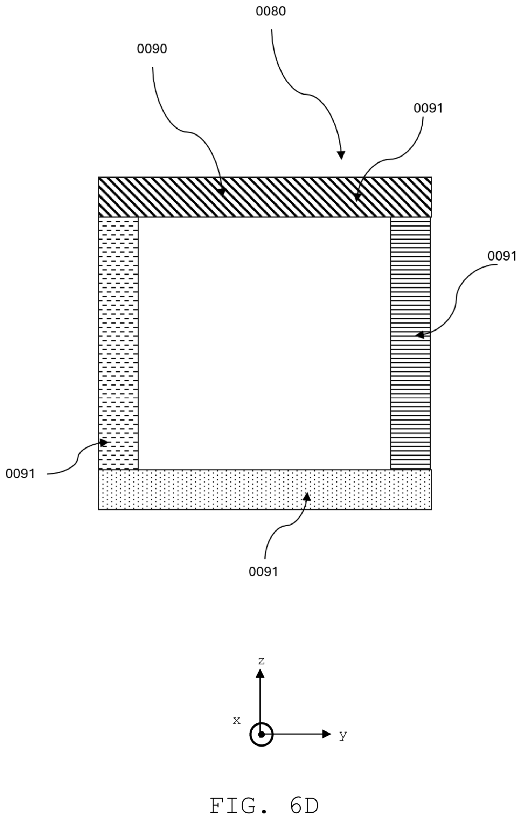

In some embodiments, the peripheral wall 0090 may be assembled by discrete components. For example, in FIG. 6B, the LLC 0080 comprises four corner pillars 0130 that are independent components to be assembled with the side walls 0091 (i.e. the east wall 0096, the south wall 0097, the west wall 0098, and the north wall 0099) to form the peripheral wall 0090. In other examples, referring to FIG. 6C, the peripheral wall 0090 may be assembled by two partially-surrounding walls. In other examples, referring to FIG. 6D, the peripheral wall 0090 may be assembled by four independent side walls 0091.

In some embodiments, the LLC 0080 may comprise structures that are configured for the integration of the cell holder 0050 and the LLC 0080. In the cases that the LLC 0080 is in the tubing shape such as depicted in FIG. 4A, FIG. 4B and FIG. 4C, the cell holder 0050 may be disposed in the space surrounded by the LLC 0080 through one of the top opening 0094 and the bottom opening 0095 at the two vertical ends of the tubing structure. The LLC 0080 may comprise at least one cell-holder stopping structure 0140 that extends from one of the inner surfaces of the peripheral wall 0090 and extends inwardly along the lateral direction.

The vertically relative position on the inner surface of the peripheral wall 0090, and the vertical size of the cell-holder stopping structure 0140 would define the vertical depth (vertical range) that the cell holder 0050 may arrive vertically in the space surrounded by the LLC. Therefore, such a lateral structure (i.e. the cell-holder stopping structure 0140) may limit the vertical movement of the cell holder 0050, by providing a vertical force on the cell holder 0050. Such vertical force is against the vertical movement of the cell holder 0050 in the space surrounded by the peripheral wall 0090.

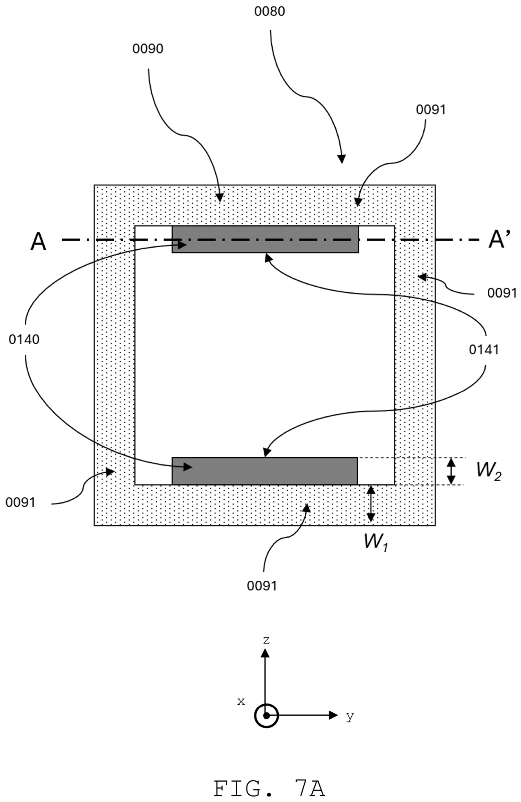

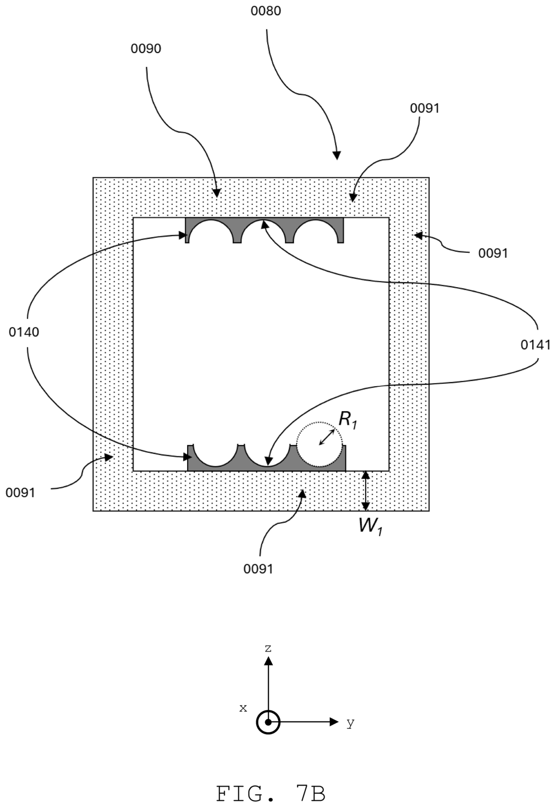

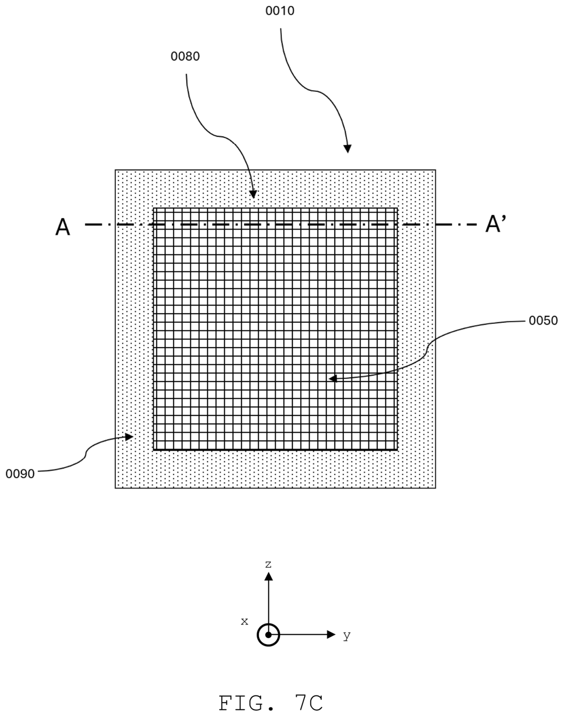

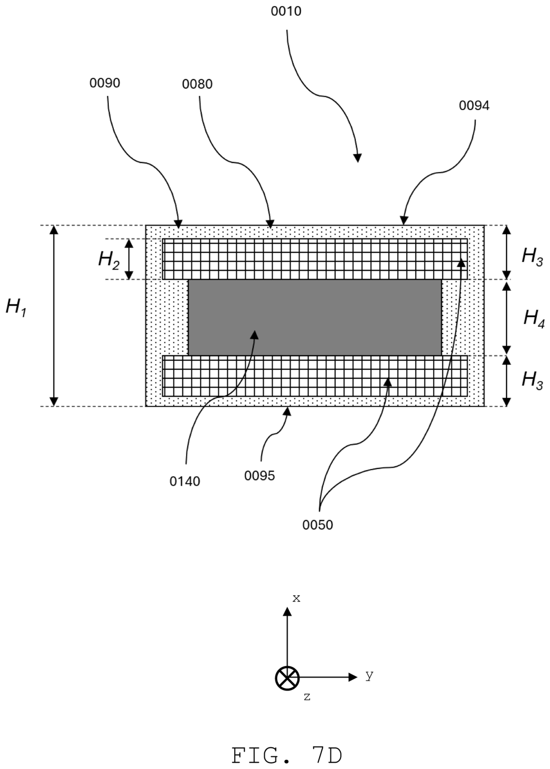

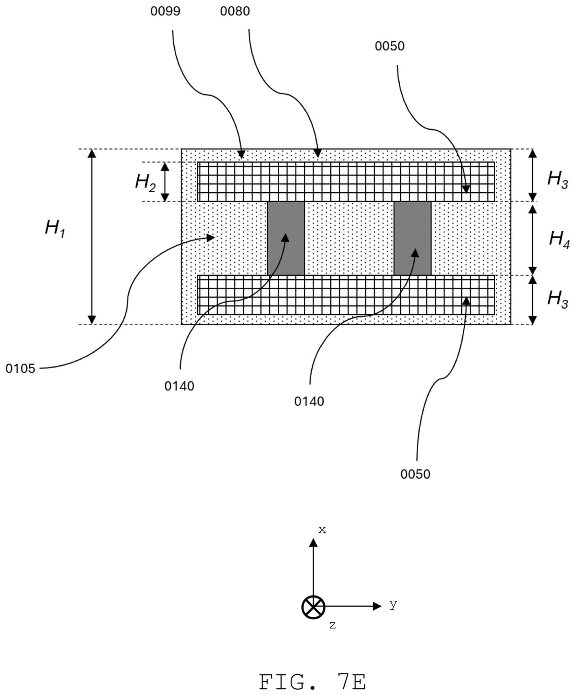

For example, FIG. 7A, FIG. 7B, FIG. 7C, FIG. 7D and FIG. 7E are conceptual diagrams of an exemplary BCA 0010. FIG. 7A, FIG. 7B and FIG. 7C are top-view of exemplary BCAs 0010. In FIG. 7A, the BCA 0010 (hidden in the FIG. 7A) is integrated with an LLC 0080, and the LLC 0080 comprises a peripheral wall 0090. The peripheral wall comprises four side walls 0091. The LLC 0080 further comprises two cell-holder stopping structures 0140 that extend laterally and inwardly from the inner surface of the peripheral wall 0090. Each of the two cell-holder stopping structures 0140 may comprise an inner boundary 0141. The lateral section view (top-view) of the inner boundary 0141 may be a line on the lateral plane. In the embodiment depicted in FIG. 7A, each of the inner boundaries 0141 is a planar surface that is parallel to the side wall on which the cell-holder stopping structure 0140 disposed; and the lateral section view of the inner boundary 0141 is a straight line along the y-direction. In FIG. 7A, the maximum distance between the inner boundary 0141 and the inner surface of the side wall 0091 on which the cell-holder stopping structure 0140 disposed is a constant number; for example, in FIG. 7A, such a constant distance is equal to W2.

In other embodiments, the inner boundaries 0141 may not be a plane, that is, the distance between the inner boundary 0141 and the inner surface of the side wall 0091 on which the cell-holder stopping structure 0140 may not be a constant number. For example, in FIG. 7B, the inner boundaries 0141 are curved surfaces; and the lateral section view of the inner boundaries 0141 are curved lines on the lateral plane.

To be noted, the inner wall surfaces 0101 of the peripheral wall 0090 could be curved surfaces, the shape of which conforms to a curved periphery of the cell holder 0050, or conforms to a curved periphery of the battery cell 0020. Since the inner wall surfaces 0101 are curved surfaces to fit the curved periphery of the cell holder 0050 or the battery cell 0020, a volume of a battery module can be reduced. The inner wall surfaces 0101 in a curved shape can also serve as a guide structure when the cell holder 0050 is placed into the LLC 0080 during the assembly process of the battery module.

In some embodiments, such as depicted in FIG. 7B, the curve-shaped inner boundaries 0141 of the cell-holder stopping structure 0140 may provide additional space to accommodate components of the BCA 0010, such as the BCs 0020 or others. In some cases, the curved part of the inner boundaries 0141 may comprise a lateral section view that is a curved line with a radius of curvature equal to or greater than the radius of the BC's laterally section-viewed radius. Therefore, the BCs 0020 may be disposed in the space that is partially surrounded by the curved parts of the inner boundaries 0141 of the cell-holder stopping structures 0140.

In FIG. 7C, an exemplary BCA 0010 is depicted. The BCA 0010 comprises a cell holder 0050 that is disposed in the space that is surrounded by the peripheral wall 0090 of the LLC 0080. The dashed line A-A' is marked respect to the section that is shown in FIG. 7D.

In FIG. 7D, the vertical section view along the dashed line A-A' in FIG. 7C is depicted. The BCA 0010 is integrated with an LLC 0080 which further comprises a peripheral wall 0090. The LLC also comprises two cell holders 0050; and two cell-holder stopping structures 0140 (only one is shown). The cell-holder stopping structure 0140 is located at the inner surface of the peripheral wall 0090. Vertically, the middle of the cell-holder stopping structure 0140 is aligned with the middle of the peripheral wall 0090.

In some embodiments, the vertical length (hereafter, height) of the cell-holder stopping structure 0140 is less than the height of the peripheral wall 0090; therefore, the difference between the height of the cell-holder stopping structure 0140 and the height of the peripheral wall 0090 may provide a space to accommodate the cell holder 0050. For example, in FIG. 7D, the height of the cell-holder stopping structures 0140 is equal to H4, and the height of the peripheral wall 0090 is equal to H1. The difference between H1 and H4 is equal to two times of the H3. Therefore, the cell holder 0050 may be accommodated in the space between the top opening 0094 of the LLC 0080 and the cell-holder stopping structure 0140, such a space has a height equal to H3; and the cell holder 0050 may also be accommodated in the space between the bottom opening 0095 of the LLC 0080 and the cell-holder stopping structure 0140, such a space has a height equal to H3.

In some embodiments, the LLC 0080 may comprise discrete cell-holder stopping structures 0140 that are disposed on the inner surface of a side wall 0091. For example, referring to FIG. 7E, the LLC 0080 comprises a north wall 0099, and two cell-holder stopping structures that are disposed on the inner-north surface 0105.

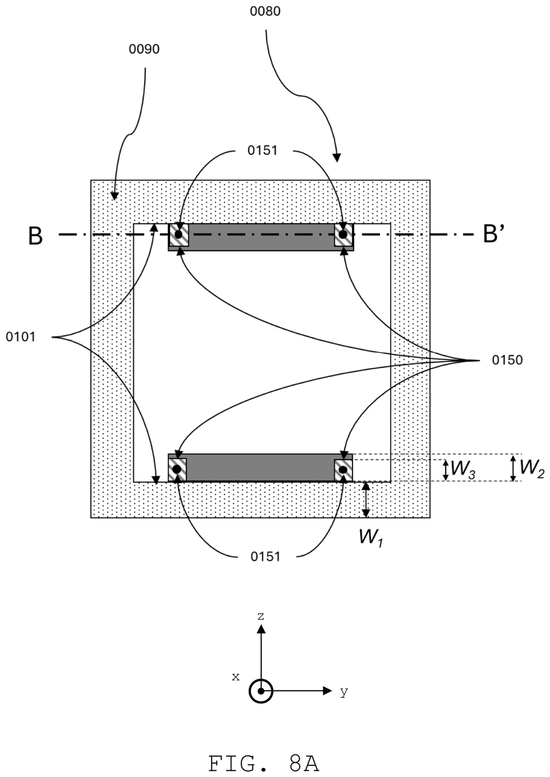

In some embodiments, the LLC 0080 may comprise at least one cell-holder fixing structure 0150 that provides mechanical means to limit the displacement of the cell holder in every direction. For example, referring to FIG. 8A, the top-viewed LLC 0080 comprises four cell-holder fixing structures 0150 that are extended from the inner wall surfaces 0101 of the peripheral wall 0090. In this embodiment, the cell-holder fixing structures 0150 comprises fastener holes 0151 for using fixing fasteners to limit the relative movement between the LLC 0080 and the cell holder 0050. In some embodiments, the cell-holder fixing structure 0150 and the cell-holder stopping structure may be different in multiple aspects such as shape, lateral position, and vertical position.

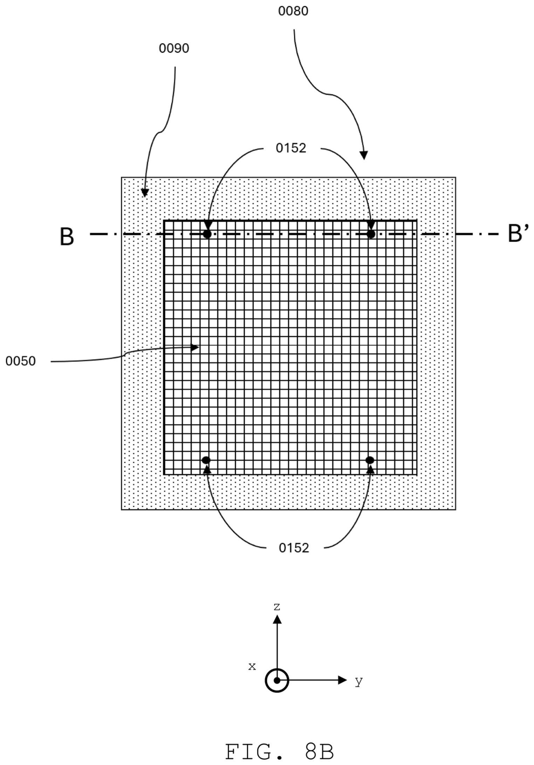

Referring to FIG. 8B, a top view of the LLC 0080 is depicted. In FIG. 8B, the cell holder 0050 is disposed in the space surrounded by the peripheral wall of the LLC 0080. The LLC 0080 comprises four fixing fasteners 0152 that are vertically inserted through the cell holder 0050 and the cell-holder fixing structures 0150 (not shown in FIG. 8B).

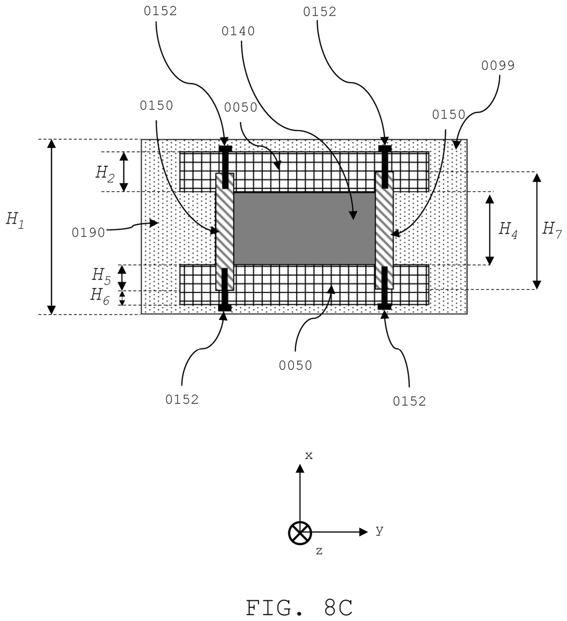

Referring to FIG. 8C, a section view along the dashed-line B-B' of the LLC 0080 depicted in FIG. 8B. As illustrated, the cell holder 0050 is stopped vertically by the cell-holder stopping structure 0140 and is fixed with the LLC 0080 by fastening the cell holder 0050 and the LLC 0080, by the fixing fasteners 0152.

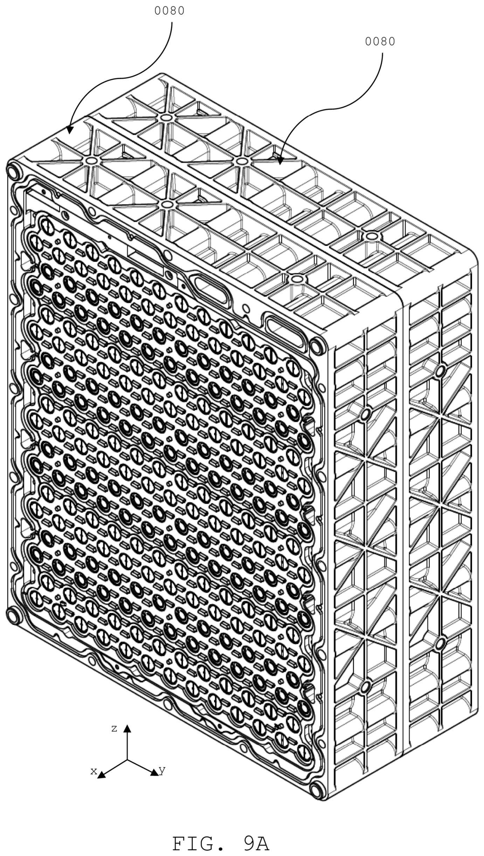

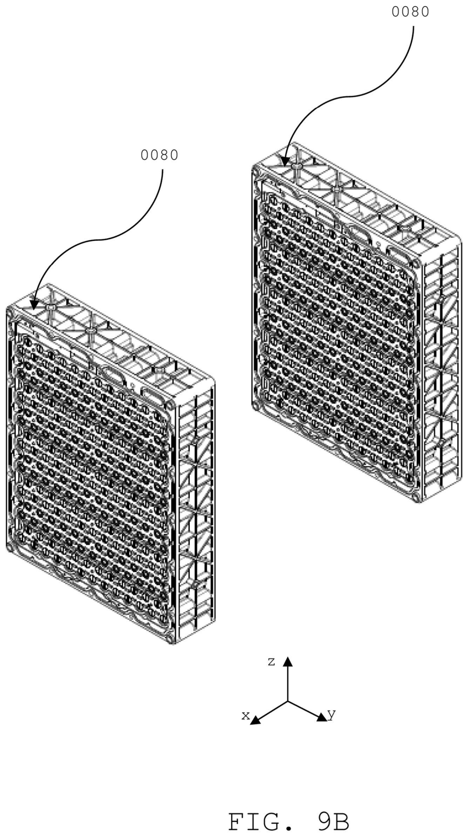

Referring to FIG. 9A and FIG. 9B, which are perspective views of the stacking of two BCAs (with LLC 0080 integrated).

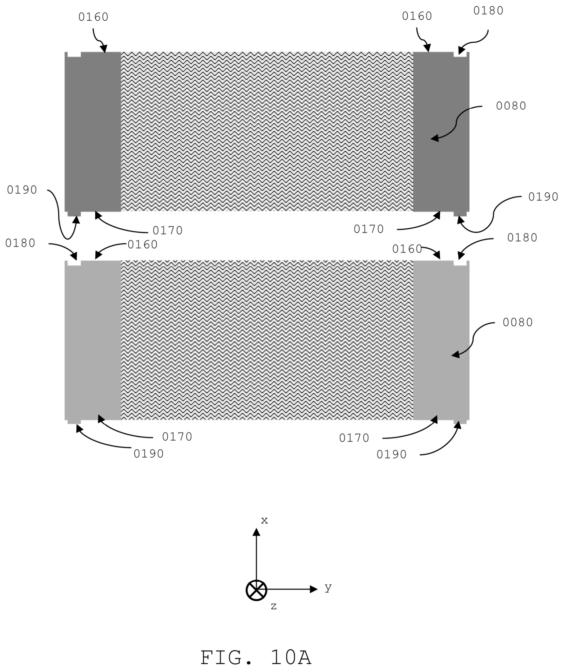

In some embodiments, as illustrated in FIG. 10A, LLC 0080 may comprise a top wall surface 0160 and a bottom wall surface 0170 that are surfaces, that extend along the lateral direction, of the vertical ends of the LLC 0080.

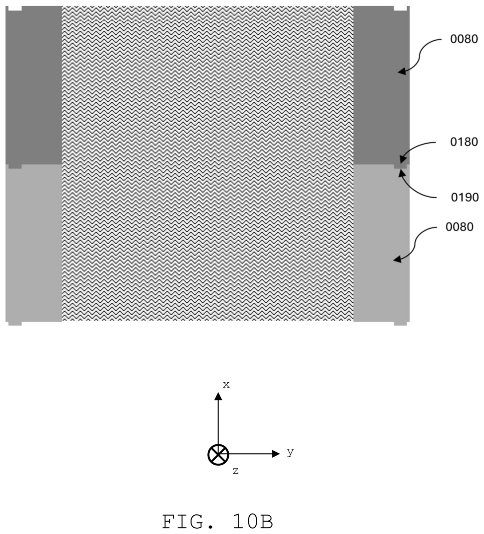

In some embodiments, the top wall surface 0160 and bottom wall surface 0170 may comprise complementary interlocking features configured to resist lateral shear when vertically stacked. For example, the top wall surface 0160 may comprise at least one top surface interlocking structures 0180, and the bottom wall surface 0170 may comprise at least one bottom surface interlocking structures 0190, as illustrated in FIG. 10A. The top surface interlocking structures 0180 and the bottom surface interlocking structures 0190 may be located at certain lateral positions so that when two LLCs 0080 are stacked vertically (as illustrated in FIG. 10B), the top surface interlocking structures 0180 and the bottom surface interlocking structures 0190 may combined and therefore provide lateral forces to limit the relative displacement between the two stacked LLCs 0080. For example, a pair of top surface interlocking structure 0180 and bottom surface interlocking structure 0190 may be a protrusion structure and a receiving structure.

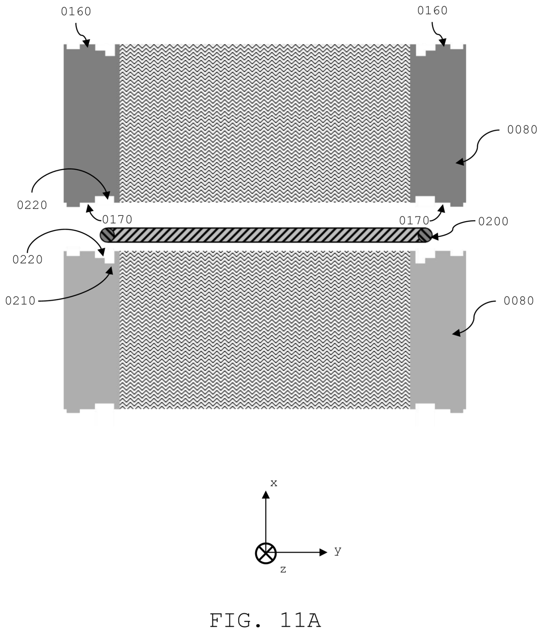

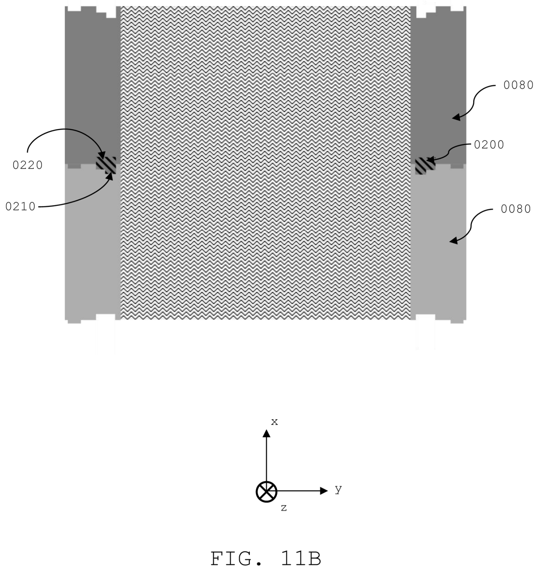

Referring to FIG. 11A and FIG. 11B, in some embodiments, at least one of the top wall surface 0160, the bottom wall surface 0170 or both, may comprise at least one sealing-member-accommodating structure 0220, that is configured to provide a space to accommodate sealing members that is arranged at the interface of two LLCs 0080 to prevent liquid leaking from the interface of the two LLCS. For example, the sealing member 0200 may be an O-ring or adhesive materials. In some embodiments, the bottom wall surface 0170 or both, may further comprise at least one sealing-member-positioning structure 0210 that is configured for limiting the lateral movement of the sealing member 0200. For example, in FIG. 11A and FIG. 11B, the sealing-member-positioning structure 0210 is a gap configured to provide the lateral force to limit the lateral movement of the sealing member 0200. As depicted in FIG. 11B, the sealing member 0200 may be filled with the space provided by the sealing-member-accommodating structure 0220 to provide the sealing effect.

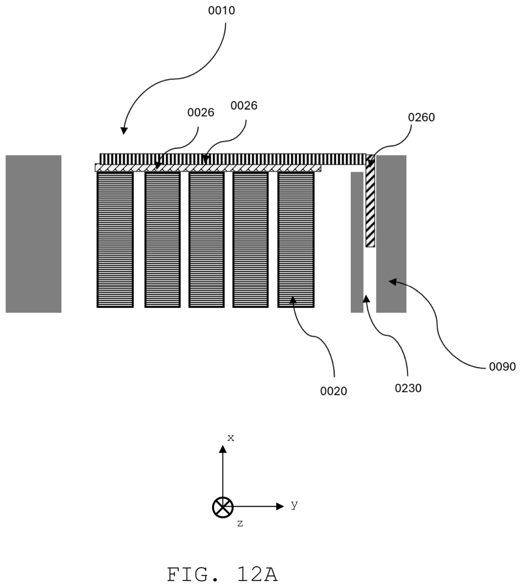

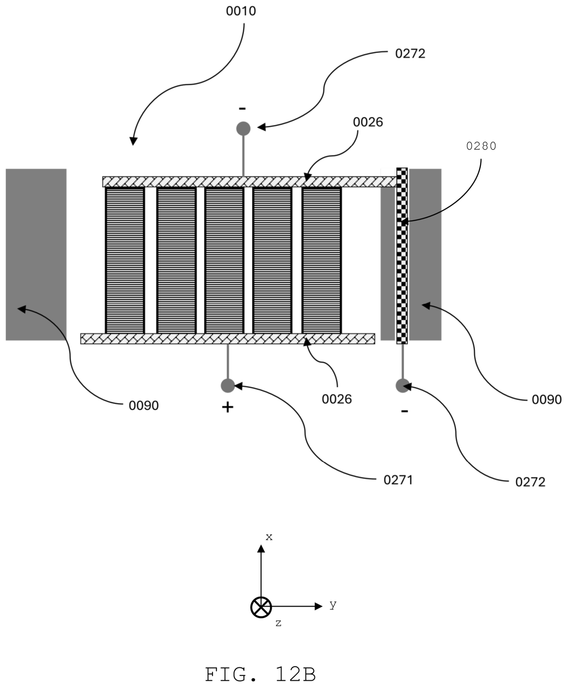

In some embodiments, the peripheral wall 0090 may comprise vertical-wall-channel 0230 that is a hollow space in the peripheral wall 0090. The vertical-wall-channel 0230 may be a through-hole that penetrates the peripheral wall 0090 vertically. The vertical-wall-channel 0230 may be used to accommodate a PCB of a cell monitoring device 0260, which is signally connected to the BCCM 0026 of the BCA 0010, as in FIG. 12A. The vertical-wall-channel 0230 may be used to accommodate a conductor rod 0280, which is used to make both of the positive electrode 0271 and negative electrode 0272 to be disposed at the same terminal of the BCA 0010, as in FIG. 12B.

As disclosed in the '417 application (i.e., Application No. 18/211,417), the vertical-wall-channel 0230 may be used to provide a vertical flow channel that allows the liquid flow vertically. For example, the vertical-wall-channel 0230 may refer to the "inlet channel" and "outlet channel" that is disclosed in the'417 application.

In some embodiments, a BCA 0010 may be integrated with components to form a battery module (hereafter, BM) 3010. For example, BM 3010 may be an assembly that is composed of a BCA 0010 and other components such as: an LLC 0080, heat-regulating components such as heat-dissipation-components, battery-cell monitoring circuit, and other components. The manufacturing of a BM 3010 is usually an intermediate step in the production of the whole system. That is, the BM 3010 is considered as an intermediate building block to form a higher-level energy storage system, while the BM 3010 is also integrated by a more fundamental building block - the BCs 0020. Therefore, the BM 3010 may also comprise modular interfaces that are configured to integrate the BM 3010 to other BM 3010, and/or to other modules of the underlying larger energy storage system. For example, the BM 3010 may comprise modular-electric-energy-interfaces 3020 (hereafter, MEEI), that is configured to provide electrical connection for the communication (to charge or to discharge) of the electrical energy of the that is stored in or released from the BM 3010. The MEEI 3020 may be electrodes or connectors disposed on the BM 3010. For example, the MEEI 3020 may be a conductor that directly contacts one of the current-transport-plates 0028 of a first BM 3010, and also directly contacts one of the current-transport-plates 0028 of a second BCA 0010. Such a MEEI 3020 then functions as the electric connector between the two BMs 3010.

For example, the BM 3010 may comprise interfaces of the heat-regulating components such as a liquid connector for a thermal-controlling liquid to flow into and out of a BM 3010 to another liquid container or channel, such as the top opening 0094 and the bottom opening 0095 of the LLC 0080. For example, the BM 3010 may comprise interfaces for connecting mechanically to another BM and/or to other modules, such as the top surface interlocking structures 0180 and the bottom surface interlocking structures 0190.

In the present disclosure, the phrase "battery pack" (hereafter, BP) 3030 refers to an assembled, manufactured and encapsulated energy storage system, designed for integration into an electrical equipment (such as EVs, BESS, or others) that is to be powered by the electrical energy discharged from the BP 3030. It is typically produced as a distinct product, often by an entity who supplies the original equipment manufacturer (hereafter, OEM) of the final equipment. The BP 3030 is mechanically stable to ensure its integrity during shipping and final equipment. For example, the integration and assembling processes may be an assembling process of an EV. Additionally, a BP 3030 is equipped with standardized interfaces to facilitate electrical and mechanical integration with the larger system in which it is installed. The spatial dimension of a BP 3030 is also designed with the consideration of available space of the underlying electrical equipment.

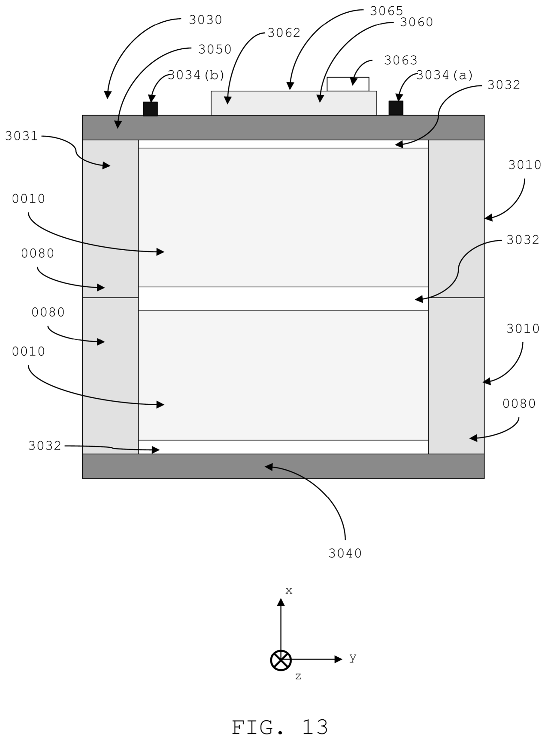

Referring to FIG. 13, which is a concept diagram of a section view of a BP 3030. In some embodiments, as depicted in FIG. 13, the BP 3030 may comprise two BMs 3010 that are assembled with each other in a stacking manner. In other cases, the BP 3030 may comprise only one BM 3010 or more than two BMs 3010. The BP may also comprise a terminal module (hereafter, TM) 3040 that serves as a lid of the BP 3030. The TM 3040 provides electrical insulation so that the BCs 0020 (not shown in FIG. 13) are electrically isolated from the external of the BP 3030. The BP 3030 may also comprise an interface module (hereafter, IM) 3050. The IM 3050 serves not only as a lid but also as an interface of the BP 3030. It is noted that each of BMs 3010 in FIG. 13 may be formed (assembled) by an LLC 0080 and a BCA 0010 as previously disclosed in this disclosure.

In some embodiments, the BP 3030 may be liquid-tight so that the BCAs 0010 of the BMs 3010 enclosed in the BP 3030 may be immersed by thermal-management liquid. For example, the LLCs 0080 of each BMs 3010, the TM 3040 and the IM 3050 may be assembled to form a liquid-tight "battery-pack enclosure" 3031 (hereafter, BP-enclosure). In such an example, the BP-enclosure 3031 is assembled by the LLCs 0080 that provides lateral fluid barrier, and lids on the vertical terminal ends provide vertical fluid barriers. For example, the lids may be the TM 3040 or IM 3050. These lateral and vertical fluid barriers define a "battery-pack space" 3032 (here after, BP-space) that is enclosed by the BP-enclosure 3031 (while enclosed by those vertical and lateral fluid barriers).

In some embodiments, the BP-enclosure 3031 may be electrically insulated so that the circuit encapsulated inside the BP-enclosure 3031 does not leak to the outside. For example, the LLC 0080 and the lids may be formed of electrically insulating materials, or may each include at least one layer of an electrically insulating material.

In some embodiments, the TM 3040 and the IM 3050 may also comprise mechanical interfaces for mating, connecting, or sealing to a corresponding BM 3010 or the corresponding LLC 0080. For example, TM 3040 may comprise top surface interlocking structures 0180 and the IM 3050 may comprise bottom surface interlocking structures 0190. For example, the TM and the IM may comprise the sealing member sealing-member-accommodating structure 0220 as earlier mentioned in this disclosure.

As depicted in FIG. 13, the BP 3030 may also comprise an "electrical energy interface module" (hereafter, EEIM) 3060. The EEIM 3060 may comprise an EEIM-casing 3062 which encloses or surrounds an EEIM-space 3061 (not shown in the FIG. 13) that is configured for accommodating circuits for battery management, high-voltage circuits (e.g. the circuit for relaying the high-voltage electrical energy of the BP 3030 to a downstream load such as the EV), or both. The EEIM-casing 3062 may be integrally formed or formed from a plurality EEIM-walls 3065. For example, EEIM-walls 3065 may be portions of the integrally formed EEIM-casing 3062 or may be independent components. The EEIM 3060 may be disposed on the IM 3050 through an assembling process.

In some embodiments, the IM 3050 may comprise an IM-casing 3052 which encloses or surrounds an IM-space 3054 (not shown in the FIG. 13) that is configured for accommodating component that is configured for interfacing the BM 3010 and the EEIM 3060.

In some embodiments, the IM 3050 may further comprise an IM-busbar 3053 (not shown in FIG. 13). One terminal of the IM-busbar 3053 is configured to be electrically connected to the MEEI 3020 of the BM 3010; and another terminal end of the IM-busbar 3053 is configured to be electrically connected to high-voltage circuits arranged in the EEIM-space 3061. The EEIM 3060 may comprise "high-voltage interface connectors" 3063 (hereafter, HVIC), which may be arranged on the EEIM-casing 3062 or may be arranged on the BP-enclosure 3031. The HVICs 3063 may be configured to directly contact the high-voltage circuits arranged in the EEIM-space 3061, therefore the HVIC 3063 may function as the high-voltage circuit interface between the charging-discharging circuit 0040 and the electric equipment. Therefore, the HVIC 3063 may be considered as the terminals of the charging-discharging circuit 0040.

In the present disclosure, the interface module 3050 and the terminal module 3040 (which serve as vertical lids and may be collectively referred to as "lid modules") may each comprise at least one "lid electrical interface" configured to provide an electrical connection path therein. The lid electrical interface is electrically connected between the HVIC 3063 and the MEEI 3020 of the battery module. In some embodiments, the lid electrical interface may be implemented as a rigid busbar (e.g., the IM-busbar 3053), a flexible busbar, a wire cable, a conductive trace on a PCB, or any other suitable conductive member capable of transmitting high-voltage electrical energy.

In some embodiments, the EEIM-space 3061 and BP-space 3032 may be hydraulically continuous, so that the components in the EEIM-space 3061 may be immersed by the thermal-management liquid.

In other embodiment, the EEIM-space 3061 and BP-space 3032 may be hydraulically isolated. In such cases, the IM 3050 may comprise at least one IM-electric-channel 3051 (not shown in the figures) that is configured to provide a channel between the EEIM-space 3061 and BP-space 3032. For example, the IM-electric-channel 3051 may be a through-hole disposed on the side wall of the IM 3050. In some embodiments, the IM-busbar 3053 (not shown in the figures) may be disposed in the IM-electric-channel 3051 and extend to the EEIM-space 3061 and the BP-space 3032 to provide electrical connection between the components in these two accommodation spaces. In some embodiments, to prevent the liquid passing through the IM-electric-channel 3051, the IM 3050 may further comprise at least one sealing member such as an O-ring that is arranged in the IM-electric-channel 3051 and is mated tightly both with the inner-wall of the IM-electric-channel 3051 and with the IM-busbar 3053.

In some embodiments, the BP 3030 may comprise at least one liquid interface 3034 for introducing liquid into and/or out of the BP 3030. For example, the liquid interface may be a liquid connector that is disposed on the BP enclosure 3031. For example, the liquid interface 3034 may be disposed on a wall of the IM 3050 or a wall of the TM 3040 as an inlet and/or outlet. In some embodiments, the BP 3030 may comprise a first liquid interface 3034(a) as an inlet of the BP-enclosure 3031 and a second liquid interface 3034(b).

In some embodiments, the liquid interface 3034 may be configured to connect to an external liquid circulation system, such as a liquid source or a liquid circulation system with a pump.

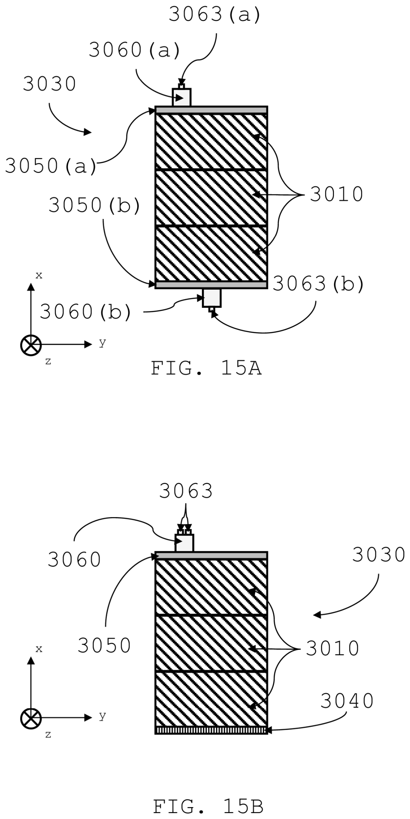

FIG. 14A, FIG. 14B, FIG. 15A and FIG. 15B are conceptual diagrams of embodiments of BP 3030.

In some embodiments, as depicted in FIG. 14A, the BP 3030 may comprise multiple BMs 3010 that are stacked in the vertical direction. The BP 3030 may further comprise and be assembled with a first IM 3050(a) configured as a first vertical lid and a second IM 3050(b) configured as a second vertical lid at the opposite vertical ends of the stacked BMs 3010. The BP 3030 may further comprise a first EEIM 3060(a) and a second EEIM 3060(b). The first EEIM 3060(a) is disposed on the first IM 3050(a) and the second EEIM 3060(b) is disposed on the second IM 3050(b). The first EEIM 3060(a) may further comprise a first HVIC 3063(a) that is disposed at one of the two vertical ends of the BP 3030; and the second EEIM 3060(b) may further comprise a second HVIC 3063(b) that is disposed at the other vertical end of the BP 3030. Such a configuration is configured for connection to a downstream load with terminals disposed separately.

In some embodiments, as depicted in FIG. 14B, the BP 3030 may comprise multiple BMs 3010 that are stacked in the vertical direction. The BP 3030 may further comprise and be assembled with a TM 3040 configured as a first vertical lid and an IM 3050 configured as a second vertical lid at the opposite vertical ends of the stacked BMs 3010. The BP 3030 may further comprise an EEIM 3060. The EEIM 3060 is disposed on the IM 3050. The EEIM 3060 may further comprise two HVICs 3063 that are disposed on the same one of the two opposite vertical ends of the BP 3030. Such a configuration is configured for connection to a downstream load with terminals disposed closely. The LLCs 0080 may further comprise the vertical-wall-channels 0230. The vertical-wall-channels 0230 of each LLCs 0080 may be sealed together to form a vertical through-hole vertically extends through the entire assembly of the stacked BMs 3030. The BP 3030 may further comprise a conductor rod 0280 that is configured to make the first electrode and the second electrode of the circuit formed by all the battery cells connected in series and/or in parallel being both disposed at the second vertical end of the entire assembly of the stacked BMs 3030.

In some embodiments, the conductor rod 0280 may be connected to a first electrode of the circuit formed by electrically connecting all the BCs 0020 in series and/or in parallel through the BCCMs 0026 and MEEIs 3020, at a first vertical end of the entire assembly of the stacked BMs 3030, the first vertical end being adjacent to the TM 3040. The conductor rod may be arranged in the vertical through-hole, may extend vertically along the vertical through-hole that vertically extends through the entire assembly of the stacked BMs 3030, and may protrude from a second vertical end of the entire assembly of the stacked BMs 3030, the second vertical end being adjacent to the IM 3050. Thus, the first electrode and the second electrode of the circuit formed by all the battery cells connected in series and/or in parallel are both disposed at the second vertical end of the entire assembly of the stacked BMs 3030.

In some embodiments, when the HVICs 3063 of the BP 3030 are disposed at the same vertical end of the stacked BMs 3010, the HVICs 3063 of the BP 3030 may be arranged on the same vertical end of the stacked BMs 3010. Such an arrangement facilitates system integration, since both the liquid connection to the external coolant channels and the electrical connection to the downstream load can be implemented from the same side of the battery pack. This not only reduces the complexity of installation and maintenance, but also improves the compactness and reliability of the battery pack assembly.

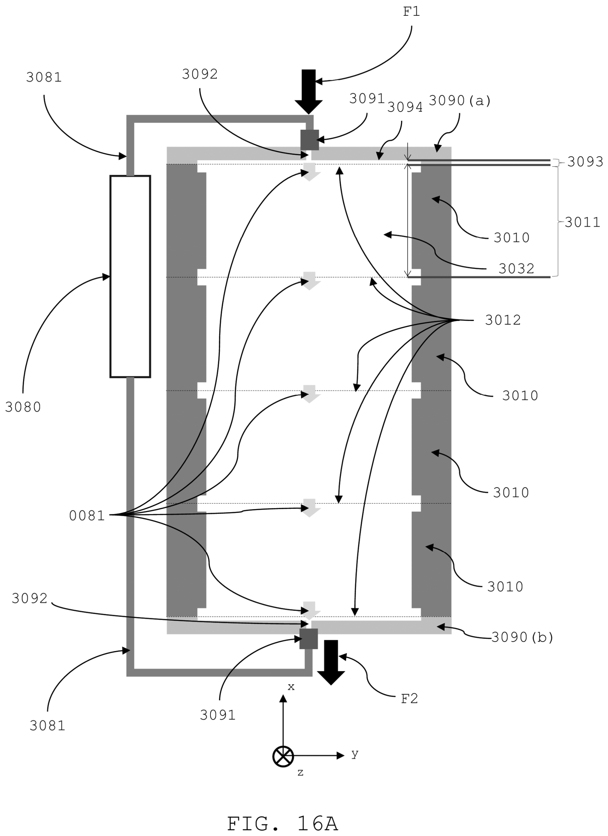

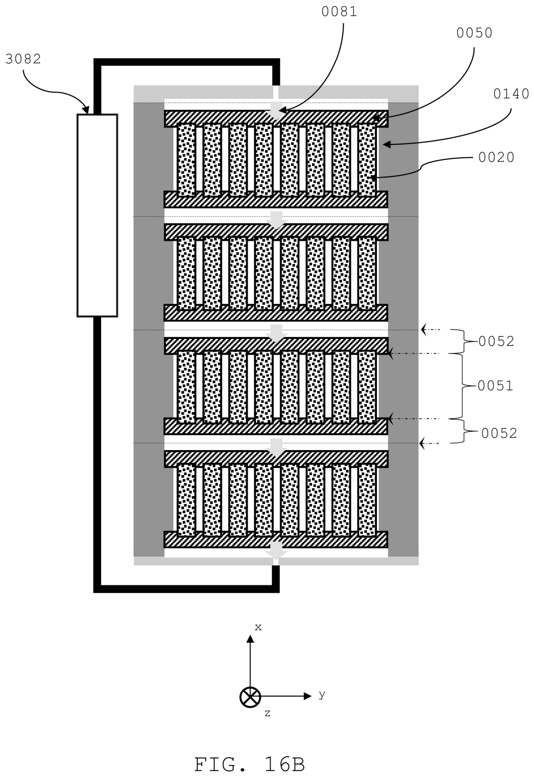

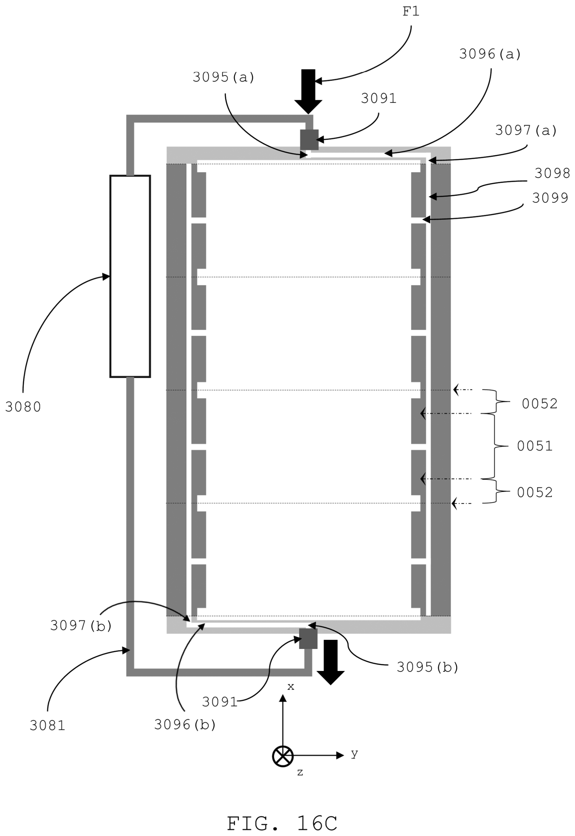

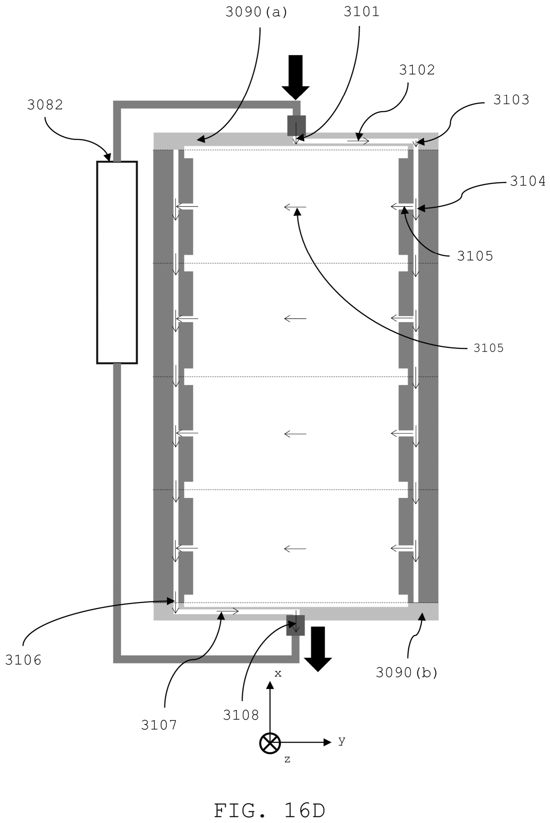

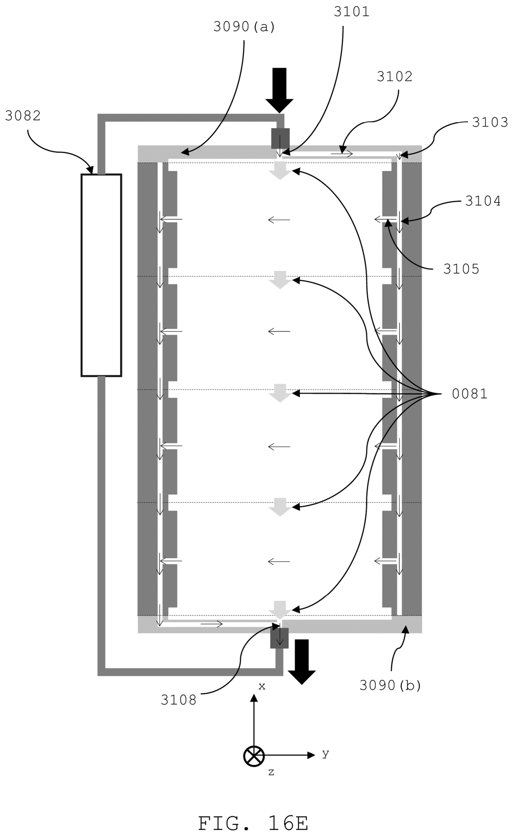

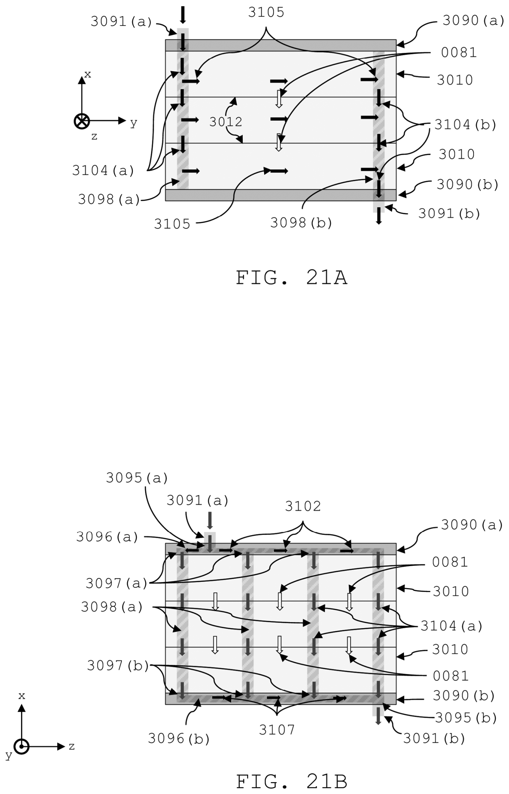

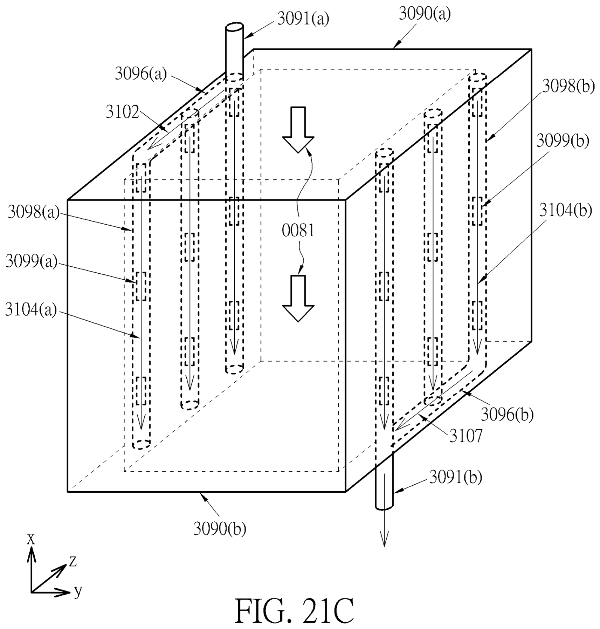

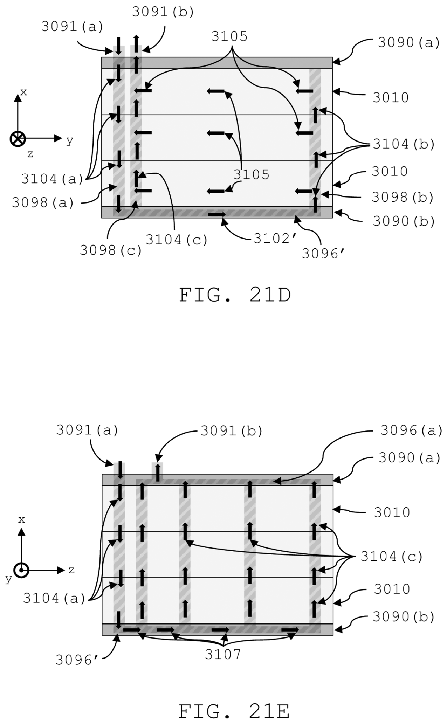

Please refer to FIG. 16A, which is a conceptual perspective diagram of a cross-sectional view of the BP 3030. Components both mentioned in this embodiment and the aforesaid embodiments or with similar reference numerals represent components with similar structures or functions, and the related description is omitted herein. To be noted, FIG. 16A, FIG. 16B, FIG. 16C, FIG. 16D, FIG. 16E, FIG. 21A, FIG. 21B, FIG. 21D, FIG. 21E, is not a precise cross-sectional view of the BP 3030. FIG. 16A is intended to illustrate multiple structural features of the BP 3030 that can be observed from the cross-sectional view. Although these structural features are shown on the same plane, it does not mean that these technical features must be located in the same x-y section. Furthermore, the term "lateral" refers to any vector on the y-z plane in FIG. 16A, FIG. 16B, FIG. 16C, FIG. 16D, FIG. 16E, FIG. 21A, FIG. 21B, FIG. 21C, FIG. 21D, and FIG. 21E. For example, a lateral liquid flow could be a liquid flow on the y-z plane that moves only in the z-direction; a lateral channel could be a channel located on the y-z plane that extends only in the z-direction.

In some embodiments, the BP 3030 could be communicated with the circulation and heat exchange system 3080 to form a closed-loop liquid circulation system. When the closed-loop liquid circulation system is filled with liquid and pressure is applied by a pump to activate liquid circulation, the liquid flow is generated accordingly.

In general, a battery pack is assembled by a plurality of BMs and lid modules. For example, as shown in FIG. 16A, four BMs 3010 (but not limited thereto, meaning that the number of BMs 3010 may vary depending on the practical applications of the BP 3030) and two lid modules 3090(a) and 3090(b) are stacked to form the BP 3030, wherein the lid modules 3090(a) and 3090(b) could be the aforementioned IM or TM, or other types of lid modules. In some embodiments, the BMs 3010 and the lid modules 3090(a) and 3090(b) may be assembled to form a liquid-tight BP enclosure with the BP-space 3032. By introducing thermal-management liquid into the BP-space 3032, the related BP components within the BP-space 3032 can be immersed in the thermal-management liquid for heat dissipation. For example, as shown in FIG. 16A, each BM 3010 comprises the liquid-tight LLC 0080 that provides a lateral fluid barrier (i.e., the peripheral wall 0090). The BMs 3010 are stacked to cooperatively form a BM stack, and the peripheral walls 0090 are also stacked to cooperatively form a stacked peripheral wall. The lid modules 3090(a) and 3090(b) are used as vertical lids to form the liquid-tight BP enclosure together with the stacked peripheral wall. To be noted, any two stacked BMs 3010 could adopts the aforesaid sealing design to prevent liquid leaking from the interface between the two stacked BMs 3010, and the related description could be reasoned by analogy according to FIG. 11A and FIG. 11B and is omitted herein.

As shown in FIG. 16A, the BP 3030 is communicated with the circulation and heat exchange system 3080 via liquid circulation pipes 3081, and each lid module may comprise at least one "interface liquid connector" 3091 (hereafter, ILC) connected to the liquid circulation pipe 3081. The circulation and heat exchange system 3080 drives the thermal-management liquid to flow into the BP 3030 through one ILC 3091 in an inflow direction F1, then through the entire BP-space 3032, and out of the BP 3030 through another ILC 3091 in an outflow direction F2. The circulation and heat exchange system 3080 may comprise a heat exchanger or other means of regulating the temperature of the thermal-management liquid, so that the temperature can be adjusted before entering a next circulation for flowing into the BP 3030.

To be more specific, referring to FIG. 16A, the BP 3030 may comprise multiple structural features to guide the flow of the thermal-management liquid. As shown in FIG. 16A, each lid module comprises a lid vertical channel 3092, which is a through-hole extending in the vertical direction, allowing the thermal-management liquid to flow vertically within the through-hole. In some embodiments, the lid vertical channel 3092 is directly communicated with the ILC 3091 and the BP-space 3032, allowing the thermal-management liquid to flow into or out of the BP-space 3032 via the lid vertical channel 3092.

After the thermal-management liquid flows into the BP-space 3032 via the lid vertical channel 3092, the scope through which the thermal-management liquid may arrive or reach could be vertically divided into a lid module zone 3093 and a battery module zone 3011. Specifically, the lid module zone 3093 refers to a zone of the BP-space 3032 that is covered within each lid module. For example, the lid module 3090(a) in FIG. 16A may comprise an inner lid surface 3094. The lid module zone 3093 could be defined by a portion of the BP-space 3032 extending from a module interface reference line 3012 between the lid module 3090(a) and the BM 3010 to the inner lid surface 3094. Specifically, the battery module zone 3011 refers to a portion of the BP-space 3032 that is covered within the peripheral wall 0090 of the LLC 0080. With a tight fit between the lid module 3090(a) and the BM 3010 to prevent liquid leakage, the thermal-management liquid can flow from the lid module zone 3093 into the battery module zone 3011 through the module interface reference line 3012. The aforesaid liquid flow across the stacked BMs 3010 through the tubular openings of the LLCs 0080 is referred to as an LLC liquid flow 0081 in the present disclosure.

Please refer to FIG. 16B, which is a conceptual perspective diagram of a cross-sectional view of the BP 3030, wherein some reference numerals shown in FIG. 16A but not in FIG. 16B can be used in FIG. 16B.

Referring to FIG. 16B, in some situations, components or structures within the BP-space 3032 may generate flow resistance. For example, the BCA 0010 may at least comprise (but not limited thereto) the cell holder 0050, the BCs 0020, and the BCCMs 0026 (not shown in FIG. 16B). The LLC 0080 may also comprise the cell-holder stopping structures 0140 or other structures assembled with the cell holder 0050. These structures or components can generate vertical flow resistance or localized vortexes, affecting the uniformity of the flow field distribution and thus causing hotspots within the BP-space 3032, so as to lead to the heat dissipation problems.

Furthermore, since the thermal-management liquid enters the BP-space 3032 and flows sequentially through each BM 3010 in a one-by-one manner, this causes a first one of the BMs 3010 and a last one of the BMs 3010 to have different heat dissipation conditions. For example, in each circulation, the temperature of the thermal-management liquid after leaving the heat exchanger is in an initial state. The further the thermal-management liquid travels, the more the temperature of the thermal-management liquid deviates from the initial state. In the entire flow loop, the BM 3010 closest to a pump outlet 3082 is referred to as the closest BM 3010 (i.e., the first one of the BMs 3010), and the BM 3010 farthest from the pump outlet 3082 is referred to as the farthest BM 3010 (i.e., the last one of the BMs 3010). The temperature of the closest BM 3010 may be closest to the predetermined target temperature, or have the smallest fluctuation relative to the predetermined target temperature. On the other hand, the temperature of the farthest BM 3010 may have the largest difference from the predetermined target temperature, or have the largest fluctuation relative to the predetermined target temperature.

As shown in FIG. 16B, in this disclosure, the portion of the BP-space 3032 that vertically extends between the two cell holders 0050 in the BM 3010 could be defined as a cell zone 0051, and the portion of the BP-space 3032 that extends from the two cell holders 0050 to the tubular openings at top and bottom ends of the LLC 0080 are defined as edge zones 0052. As mentioned above, since the cell holders 0050 and other components connected to the cell holders 0050, such as BCCMs 0026, may generate the flow resistance, the flow resistance from the edge zone 0052 toward the cell zone 0051, or from the cell zone 0051 toward the edge zone 0052, is relatively large. In the aforementioned one-by-one manner where the flow channels are connected in series, the flow resistance will increase with the number of BMs 3010.

Please refer to FIG. 16C, which is a conceptual perspective diagram of a cross-sectional view of the BP 3030, wherein some reference numerals shown in FIG. 16A and FIG. 16B but not in FIG. 16C can be used in FIG. 16C. To be noted, the gravity vector in the figures is not necessarily pointing in the minus-x-direction, meaning that when the BP 3030 is placed on an electrical device, the BP 3030 may not be configured in the direction shown in the figures.

In some embodiments, the BP 3030 may comprise the structural design shown in FIG. 16C and the liquid flow design shown in FIG. 16D. As shown in FIG. 16C, the lid module 3090(a) may comprise a first lid vertical channel 3095(a), a lid lateral channel 3096(a) and a second lid vertical channel 3097(a). The first lid vertical channel 3095(a) is communicated with the ILC 3091 of the lid module 3090(a) and the BP-space 3032. The lid lateral channel 3096(a) is communicated with the first lid vertical channel 3095(a) for guiding the thermal-management liquid to flow laterally to the peripheral wall 0090 of the LLC 0080. The lid vertical channel 3097(a) is communicated with the lid lateral channel 3096(a) for guiding the thermal-management liquid to flow into at least one module-wall-vertical channel 3098 within the peripheral wall 0090 of the LLC 0080. In some embodiments, the first lid vertical channel 3095(a) may directly penetrate the lid module 3090(a) to be communicated with the BP-space 3032. In some embodiments, the BM 3010 may further comprise the module-wall-vertical-channel 3098, which could be regarded as an embodiment of the vertical-wall-channel 0230 as mentioned above. The module-wall-vertical-channel 3098 is located within the peripheral wall 0090 of the LLC 0080 in the lateral direction and extends vertically to penetrate the LLC 0080. Each of the two stacked BMs 3010 could have at least one module-wall-vertical-channel 3098. In some embodiments, the module-wall-vertical-channels 3098 of the two stacked BMs 3010 are laterally aligned with each other, allowing the thermal-management liquid to flow from the module-wall-vertical-channels 3098 within the BM 3010 to the module-wall-vertical-channels 3098 within another BM 3010. In some embodiments, the module-wall-vertical-channels 3098 are tightly joined in the vertical direction. In some embodiments, the module-wall-vertical-channels 3098 are not tightly joined in the vertical direction, but rather have a gap (not shown). In some embodiments of the module-wall-vertical-channel 3098 being laterally aligned with the second lid vertical channel 3097(a), the module-wall-vertical-channel 3098 and the second lid vertical channel 3097(a) are not tightly joined in the vertical direction, but rather have a gap (not shown). At least one module-wall-lateral-channel 3099 is formed on the peripheral wall 0090 and is a lateral through-hole. One end of the module-wall-lateral-channel 3099 is in fluid communication with the BP-space 3032, and the other end of the module-wall-lateral-channel 3099 is in fluid communication with the module-wall-vertical-channel 3098, so as to make the module-wall-vertical-channel 3098 in fluid communication with the BP-space 3032. To be noted, although the module-wall-lateral-channel 3099 appears to penetrate the cell-holder stopping structure 0140, the present disclosure is not limited thereto, meaning that the module-wall-lateral-channel 3099 appearing to penetrate the cell-holder stopping structure 0140 could be offset from the cell-holder stopping structure 0140 along the z-direction in another embodiment.

In some embodiments, a vertical-extending range of the module-wall-lateral-channel 3099 in the x-direction may comprise the two edge zones 0052 and the cell zone 0051 of the BM 3010, allowing lateral flowing of thermal-management liquid in the BM 3010 to occur within the two edge zones 0052 and the cell zone 0051.

In some embodiments, there may be at least one module-wall-lateral-channel 3099 arranged vertically along the module-wall-vertical-channel 3098. In some embodiments, for a specific one module-wall-vertical-channel 3098, there may be at least one module-wall-lateral-channel 3099 arranged vertically along the module-wall-vertical-channel 3098. For example, in some embodiments, there may be at least one module-wall-lateral-channel 3099 that extends vertically in the cell zone 0051 or at least one extends vertically in at least one of the edge zone 0052. In some embodiments, the at least one module-wall-lateral-channel 3099 may extend vertically only in the cell zone 0051. In some embodiments, the at least one module-wall-lateral-channel 3099 may extend vertically only in the edge zone 0052.

Please refer to FIG. 16D, which is a conceptual perspective diagram of a cross-sectional view of the BP 3030, wherein some reference numerals shown in FIG. 16A, FIG. 16B and FIG. 16C but not in FIG. 16D can be used in FIG. 16D.

In some embodiments, the BP 3030 could be communicated with the circulation and heat exchange system 3080 to form a closed-loop liquid circulation system. When the closed-loop liquid circulation system is filled with liquid and pressure is applied by a pump to activate liquid circulation, the liquid flow is generated accordingly.

For example, as shown in FIG. 16C and FIG. 16D, the BP 3030 may comprise the plurality of BMs 3010, the lid module 3090(a) close to the pump outlet 3082, and the lid module 3090(b) away from the pump outlet 3082, so as to generate the liquid flow within the lid module 3090(a) and the liquid flow within the lid module 3090(b). The liquid flow within the lid module 3090(a) may comprise a first proximal lid vertical flow 3101, a proximal lid lateral flow 3102, and a second proximal lid vertical flow 3103. The first proximal lid vertical flow 3101 flows within the first lid vertical channel 3095(a) and receives the thermal-management liquid from the ILC 3091 on the lid module 3090(a). The proximal lid lateral flow 3102 flows within the lid lateral channel 3096(a) and flows toward the peripheral wall 0090 of the LLC 0080, for guiding the thermal-management liquid into the module-wall-vertical-channel 3098. The second proximal lid vertical flow 3103 flows within the second lid vertical channel 3097(a). The second proximal lid vertical flow 3103 receives the proximal lid lateral flow 3102 and then flows into the BP-space 3032, the module-wall-vertical-channel 3098, or both.

The liquid flow within the lid module 3090(b) may comprise a second distal lid vertical flow 3106, a distal lid lateral flow 3107, and a first distal lid vertical flow 3108. The second distal lid vertical flow 3106 flows within a second lid vertical channel 3097(b) of the lid module 3090(b) and receives the module-wall-vertical-flow 3104 from the BP-space 3032. The distal lid lateral flow 3107 flows within a lid lateral channel 3096(b) of the lid module 3090(b) and flows away from the peripheral wall 0090 of the LLC 0080, for guiding the thermal-management liquid into a first lid vertical channel 3095(b) of the lid module 3090(b). The first distal lid vertical flow 3108 flows within the first lid vertical channel 3095(b) and receives the thermal-management liquid of the distal lid lateral flow 3107 from the lid lateral channel 3096(b).

Please refer to FIG. 16E, which is a conceptual perspective diagram of a cross-sectional view of the BP 3030, wherein some reference numerals shown in FIG. 16A, FIG. 16B, FIG. 16C and FIG. D but not in FIG. 16E can be used in FIG. 16E.

In some embodiments, the BP 3030 could be communicated with the circulation and heat exchange system 3080 to form a closed-loop liquid circulation system. When the closed-loop liquid circulation system is filled with liquid and pressure is applied by a pump to activate liquid circulation, the liquid flow is generated accordingly.

For example, as shown in FIG. 16E, the BP 3030 may comprise the plurality of BMs 3010, the lid module 3090(a) close to the pump outlet 3082, and the lid module 3090(b) away from the pump outlet 3082, so as to generate the LLC liquid flow 0081, the liquid flow within the lid module 3090(a), the liquid flow within the lid module 3090(b), and the liquid flow within the BMs 3010.

The LLC liquid flow 0081 may comprise the LLC liquid flow between the lid module 3090(a) and the closest BM 3010, the LLC liquid flow between the lid module 3090(b) and the farthest BM 3010, and the LLC liquid flow between any two adjacent BMs 3010. The liquid flow within the lid module 3090(a) may comprise the first proximal lid vertical flow 3101, the proximal lid lateral flow 3102, and the second proximal lid vertical flow 3103. The first proximal lid vertical flow 3101 flows within the first lid vertical channel 3095(a) and receives the thermal-management liquid from the ILC 3091 on the lid module 3090(a). The proximal lid lateral flow 3102 flows within the lid lateral channel 3096(a) and flows toward the peripheral wall 0090 of the LLC 0080, for guiding the thermal-management liquid into the module-wall-vertical-channel 3098. The second proximal lid vertical flow 3103 flows within the second lid vertical channel 3097(a). The second proximal lid vertical flow 3103 receives the proximal lid lateral flow 3102 and then flows into the BP-space 3032, the module-wall-vertical-channel 3098, or both.

The liquid flow within the lid module 3090(b) may comprise the second distal lid vertical flow 3106, the distal lid lateral flow 3107, and the first distal lid vertical flow 3108. The second distal lid vertical flow 3106 flows within the second lid vertical channel 3097(b) and receives the module-wall-vertical-flow 3104 from the BP-space 3032. The distal lid lateral flow 3107 flows within the lid lateral channel 3096(b) and flows away from the peripheral wall 0090 of the LLC 0080, for guiding the thermal-management liquid into the first lid vertical channel 3095(b). The first distal lid vertical flow 3108 flows within the first lid vertical channel 3095(b) and receives the thermal-management liquid of the distal lid lateral flow 3107 from the lid lateral channel 3096(b). The liquid flow with the BM 3010 may comprise the module-wall-vertical-flow 3104 flowing within the module-wall-vertical-channel 3098 and the module-wall-lateral-flow 3105 flowing within the BP-space 3032.

In some embodiments, the sealing member 0200 may be arranged to surround a perimeter of the top opening 0094 or the bottom opening 0095 of the liquid-limiting casing 0080. Specifically, the sealing member 0200 forms a continuous closed loop that laterally encompasses both the space surrounded by the peripheral wall 0090 and the peripheral wall 0090 itself (i.e., covering the wall thickness where the module-wall-vertical-channels 3098 are located). In such a configuration, the sealing member 0200 creates a comprehensive seal that prevents the thermal-management liquid from leaking out of the battery pack, regardless of whether the liquid is in the battery-pack space 3032 or within the module-wall-vertical-channels 3098.

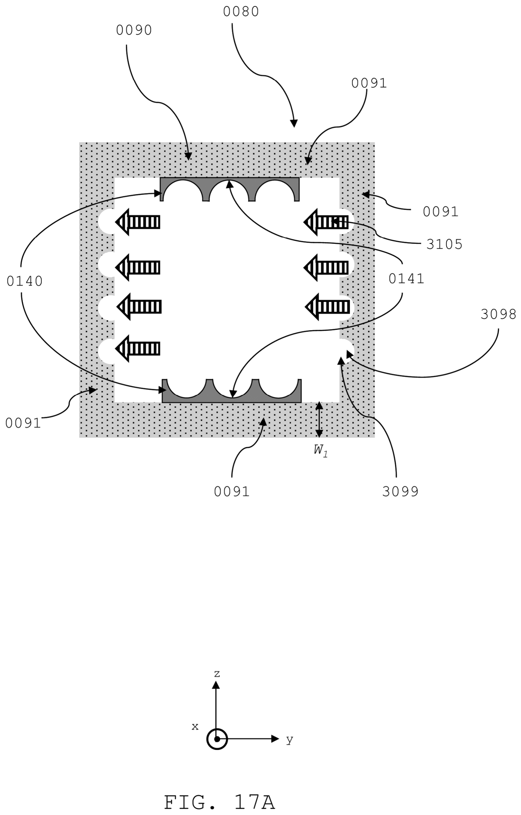

Please refer to FIG. 17A, which is a conceptual diagram of an exemplary BCA 0010. Components both mentioned in this embodiment and the aforesaid embodiments or with similar reference numerals represent components with similar structures or functions, and the related description is omitted herein.

As shown in FIG. 17A, the peripheral wall 0090 of the LLC 0080 has four side walls 0091. The side wall 0091 at the right side of the peripheral wall 0090 (i.e., the east wall) has multiple module-wall-vertical-channels 3098 along the z-direction on the lateral plane, and the side wall 0091 at the left side of the peripheral wall 0090 (i.e., the west wall) has multiple module-wall-vertical-channels 3098 along the z-direction on the lateral plane, so as to allow the thermal-management liquid to flow from the east wall to the west wall (but not limited thereto). In some embodiments, the cell-holder stopping structure 0140 could be only formed on the side walls 0091 at the top and bottom sides of the peripheral wall 0090, so as to ensure that the east wall and the west wall could have sufficient space for forming the module-wall-vertical-channels 3098.

In some embodiments, the cell-holder stopping structure 0140 and the module-wall-vertical-channels 3098 could be formed on the same side wall 0091. For example, the east and west side walls could have the cell-holder stopping structures 0140 and the module-wall-vertical-channels 3098 formed thereon, while the side walls 0091 at the top and bottom sides of the peripheral wall 0090 (i.e., the north wall and the south wall) could only have the cell-holder stopping structures 0140. With the cell-holder stopping structures 0140 formed on the four sides of the peripheral wall 0090, the cell holder 0050 can be assembled more securely.

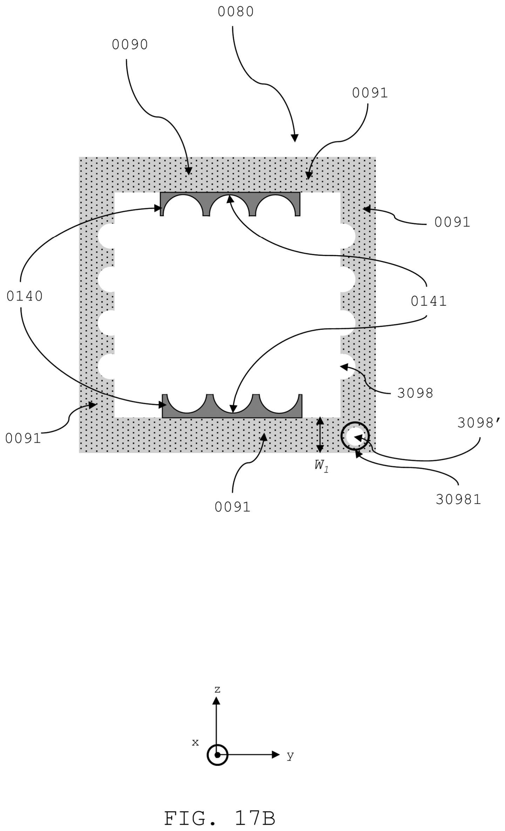

Please refer to FIG. 17B, which is a conceptual diagram of an exemplary BCA 0010. Components both mentioned in this embodiment and the aforesaid embodiments or with similar reference numerals represent components with similar structures or functions, and the related description is omitted herein.

As shown in FIG. 17B, the peripheral wall 0090 of the LLC 0080 may comprise the module-wall-vertical-channels 3098 and a module-wall-vertical-channel 3098'. The module-wall-vertical-channels 3098 are communicated with the module-wall-lateral-channel 3099, and the module-wall-vertical-channel 3098' is a through-hole penetrating the peripheral wall 0090 in the vertical direction and is not communicated with any module-wall-lateral-channel 3099. The module-wall-vertical-channel 3098' guides the thermal-management liquid to directly flow through the stacked BMs 3010 without entering the BP-space 3032. Therefore, the two stacked module-wall-vertical-channels 3098' must be tightly joined. Consequently, there are sealing members (e.g., the sealing member 0200) and sealing structures 30981 (e.g., the sealing-member-accommodating structure 0220 or the sealing-member-positioning structure 0210) formed on the top or bottom wall surface of the peripheral wall 0090, or on the plane corresponding to the lid module. These features are configured to ensure that a liquid-tight fluid connection is established between the two stacked module-wall-vertical-channels 3098', or between the module-wall-vertical-channel 3098' and the second lid vertical channel of the lid module, thereby preventing the thermal-management liquid from leaking at the interface. The related description for the sealing members and the sealing structures could be reasoned by analogy according to FIG. 11A and the corresponding paragraphs and omitted herein.

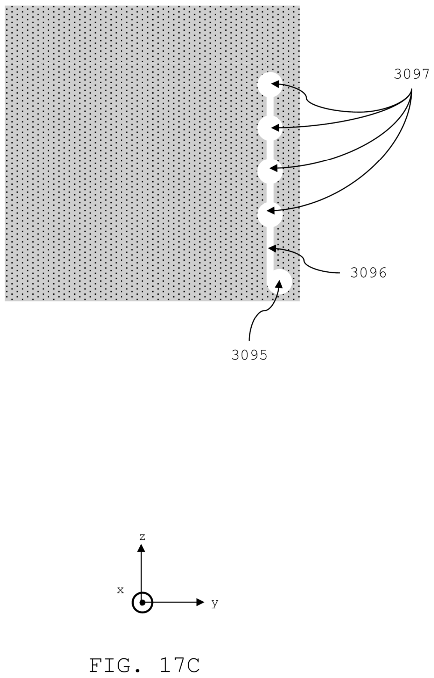

Please refer to FIG. 17C, which is a conceptual diagram of an exemplary lid module. Components both mentioned in this embodiment and the aforesaid embodiments or with similar reference numerals represent components with similar structures or functions, and the related description is omitted herein.

In some embodiments, the lid module may comprise multiple second lid vertical channels. As shown in FIG. 17C, second lid vertical channels 3097 communicated with first lid vertical channels 3095 via a lid lateral channel 3096 are spaced from each other along the z-direction (but not limited thereto) to form a flow divider with divider ports.

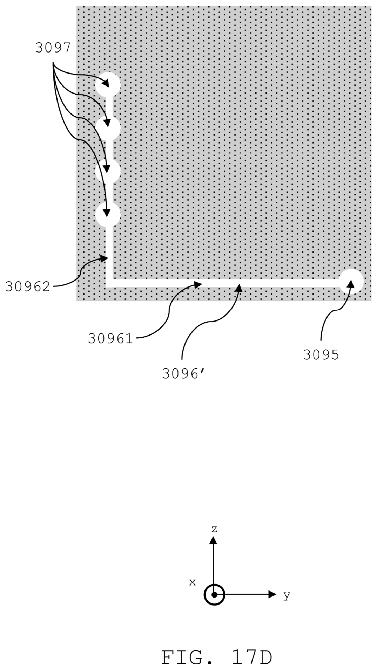

Please refer to FIG. 17D, which is a conceptual diagram of an exemplary lid module. Components both mentioned in this embodiment and the aforesaid embodiments or with similar reference numerals represent components with similar structures or functions, and the related description is omitted herein.

In some embodiments, the lid module may comprise a lid lateral channel 3096'. As shown in FIG. 17D, the lid lateral channel 3096' may comprise a first lateral channel portion 30961 extending along the y-direction and a second lateral channel portion 30962 extending along the z-direction, but the present disclosure is not limited thereto. As such, the first lid vertical channel 3095 can be communicated with the second lid vertical channels 3097 via the first lateral channel portion 30961 and the second lateral channel portion 30962.

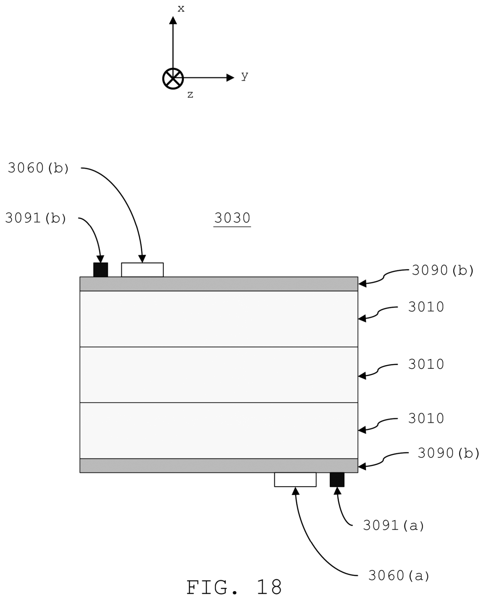

FIG. 18 illustrates the BP 3030, according to an example implementation of the present disclosure. Components both mentioned in this embodiment and the aforesaid embodiments or with similar reference numerals represent components with similar structures or functions, and the related description is omitted herein.

The BP 3030 may include the lid module 3090(a), the plurality of BMs 3010, and the lid module 3090(b). The lid module 3090(a) may be connected to the BM 3010 at the front side of the BP 3030, and the lid module 3090(b) may be connected to the BM 3010 at the back side of the BP 3030. In some embodiments, the number of BMs 3010 in the BP 3030 may be equal to or greater than two. For example, the number of BMs 3010 in the BP 3030 may be equal to two, three, or other positive numbers greater than three. In some embodiments, the lid module 3090(a) may be connected to the first one of the BMs 3010, and the lid module 3090(b) may be connected to the last one of BMs 3010 when the number of BMs 3010 in the BP 3030 is equal to or greater than two. In some embodiments, the BP 3030 may include only one BM 3010 (e.g., only the BM 3010 at the front side of the BP 3030), so the lid modules 3090(a) and 3090(b) may be connected the front and back sides of this BM 3010.

In some embodiments, the lid module 3090(a) may include an ILC 3091(a) and the first EEIM 3060(a), and the lid module 3090(b) may include an ILC 3091(b) and the second EEIM 3060(b). The ILC 3091(a) of the lid module 3090(a) allows the thermal-management liquid to flow into the BP 3030, and the ILC 3091(b) of the lid module 3090(b) allows the thermal-management liquid to flow out of the BP 3030. Thus, the thermal-management liquid may flow through the BMs 3010 by flowing into the BP 3030 through the ILC 3091(a) of the lid module 3090(a) and flowing out of the BP 3030 through the ILC 3091(b) of the lid module 3090(b). In some embodiments, the first EEIM 3060(a) may be one of a positive electrode and a negative electrode of the BP 3030, and the second EEIM 3060(b) may be the other one of the positive electrode and the negative electrode of the BP 3030.

In some embodiments, each of the BMs 3010 may further include the plurality of BCs 0020 (not shown) and a plurality of module electrodes (not shown). In some embodiments, each of the module electrodes may be an electrode plate. Each of the module electrodes may be electrically connected to a portion of the BCs 0020 in a corresponding one of the BMs 3010. In some embodiments, one of the module electrodes in the first one of the BMs 3010 may be electrically connected to the first EEIM 3060(a) and one of the module electrodes in the last one of the BMs 3010 may be electrically connected to the second EEIM 3060(b), when the number of BMs 3010 in the BP 3030 is equal to or greater than two. In addition, another one of the module electrodes in the first one of the BMs 3010 may be electrically connected to another one of the module electrodes in a second one of the BMs 3010 (e.g., neighboring the first one of the BMs 3010), and one of the module electrodes in the last one of the BMs 3010 may be electrically connected to one of the module electrodes, for example, in a penultimate one of the BMs 3010. In some embodiments, one of the module electrodes in the BM 3010 may be electrically connected to the first EEIM 3060(a) and another one of the module electrodes in the BM 3010 may be electrically connected to the second EEIM 3060(b), for example, when the number of BMs 3010 in the BP 3030 is equal to one.

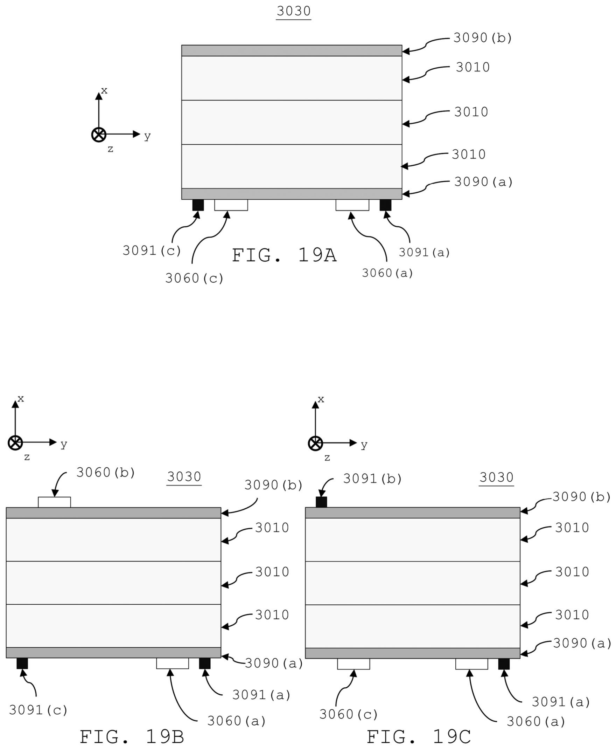

FIG. 19A, FIG. 19B, and FIG. 19C illustrate other structures of the BP 3030 illustrated in FIG. 18, according to example implementations of the present disclosure. Components both mentioned in this embodiment and the aforesaid embodiments or with similar reference numerals represent components with similar structures or functions, and the related description is omitted herein.

In FIG. 19A, the lid module 3090(a) may further include the ILC 3091(a), the first EEIM 3060(a), an ILC 3091(c), and a third EEIM 3060(c). Thus, in FIG. 19A, the first EEIM 3060(a) may be one of the positive electrode and the negative electrode of the BP 3030, and the third EEIM 3060(c) may be the other one of the positive electrode and the negative electrode of the BP 3030. In FIG. 19B, the lid module 3090(a) may further include the ILC 3091(a), the first EEIM 3060(a) and the ILC 3091(c), and the lid module 3090(b) may further include the second EEIM 3060(b). Thus, in FIG. 19B, the first EEIM 3060(a) may be one of the positive electrode and the negative electrode of the BP 3030, and the second EEIM 3060(b) may be the other one of the positive electrode and the negative electrode of the BP 3030. In FIG. 19C, the lid module 3090(a) may further include the ILC 3091(a), the first EEIM 3060(a), and the third EEIM 3060(c), and the lid module 3090(b) may further include the ILC 3091(b). Thus, in FIG. 19C, the first EEIM 3060(a) may be one of the positive electrode and the negative electrode of the BP 3030, and the third EEIM 3060(c) may be the other one of the positive electrode and the negative electrode of the BP 3030.

In some embodiments, the locations of the positive electrode and the negative electrode of the BP 3030 may be modified based on the distribution of the module electrodes and the directions of the BCs 0020. In some embodiments, the locations of the ILC 3091(a) and the ILC 3091(b) of the BP 3030 may be modified based on the liquid flow structures of the BP 3030. In other words, the positive and negative electrodes and the ILCs of the BP 3030 could be disposed on the different lid modules or the same lid module based on the liquid flow structures of the BP 3030.

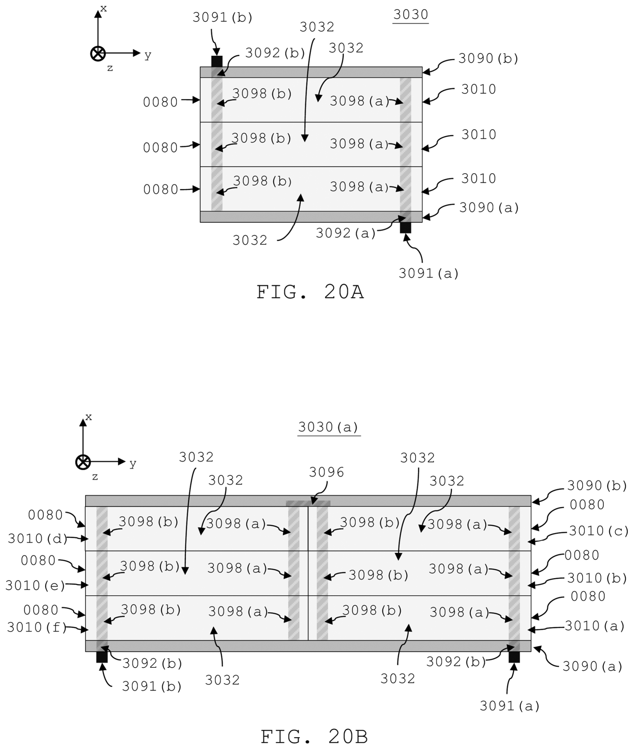

FIG. 20A and FIG. 20B illustrate liquid flow structures of BPs, according to example implementations of the present disclosure.

Components both mentioned in this embodiment and the aforesaid embodiments or with similar reference numerals represent components with similar structures or functions, and the related description is omitted herein.

In order to clearly illustrate the liquid flow structures of the BP 3030, in FIG. 20A and FIG. 20B, the first EEIM 3060(a) and the second EEIM 3060(b) (e.g., as shown in FIG. 18 and FIG. 19A, FIG. 19B and FIG. 19C) are omitted, but each of the BPs 3030 in FIG. 20A and FIG. 20B may still include the first EEIM 3060(a) and the second EEIM 3060(b).

In some embodiments, such as in FIG. 20A, the lid module 3090(a) may further include one or more lid vertical channels 3092(a). Each of the one or more lid vertical channels 3092(a) may be communicated with the ILC 3091(a) for the thermal-management liquid to flow from the lid module 3090(a) into the first one of the BMs 3010. In some embodiments, the lid module 3090(b) may further include one or more lid vertical channels 3092(b). Each of the one or more lid vertical channels 3092(b) may be communicated with the ILC 3091(b) for the thermal-management liquid to flow from the BMs 3010 out of the BP 3030.

In some embodiments, each BM 3010 may include the LLC 0080, one or more first module-wall-vertical-channels 3098(a), one or more second module-wall-vertical-channels 3098(b), and the BP-space 3032.

In some embodiments, each of the one or more first module-wall-vertical-channels 3098(a) may be a through-hole going through a corresponding one of the LLCs 0080 for the thermal-management liquid to flow through the corresponding one of the LLCs 0080. Thus, the first module-wall-vertical-channel 3098(a) of the first one of the BMs 3010 may be communicated with the lid vertical channel 3092(a) for the thermal-management liquid to flow from the lid module 3090(a) into the first one of the BMs 3010, the first module-wall-vertical-channel 3098(a) of the second one of the BMs 3010 may be communicated with the first module-wall-vertical-channel 3098(a) of the first one of the BMs 3010 for the thermal-management liquid to flow from the first one of the BMs 3010 into the second one of the BMs 3010, and the first module-wall-vertical-channel 3098(a) of the last one of the BMs 3010 may be communicated with the first module-wall-vertical-channel 3098 (a) of the second one of the BMs 3010 for the thermal-management liquid to flow from the second one of the BMs 3010 into the last one of the BMs 3010. In some embodiments, the first module-wall-vertical-channel 3098(a) may further include one or more inlet slits (not shown) for the thermal-management liquid to flow into the BP-space 3032 for cooling the BCs 0020 in the BP-space 3032.

In some embodiments, the BP-space 3032 may be communicated with the first module-wall-vertical-channel 3098(a) in the BM 3010 for the thermal-management liquid to flow into the BP-space 3032 through the one or more inlet slits in the BM 3010. In some embodiments, the BP-space 3032 may also be communicated with the second module-wall-vertical-channel 3098(b) in the BM 3010 for the thermal-management liquid to flow out of the BP-space 3010 through the one or more outlet slits (not shown) in the BM 3010 for flowing the thermal-management liquid out of the BP 3030 through the lid vertical channel 3092(b).

In some embodiments, each second module-wall-vertical-channel 3098(b) may include one or more outlet slits for the thermal-management liquid to flow from a corresponding one of the BP-spaces 3032 into a corresponding one of the second module-wall-vertical-channels 3098(b). In some embodiments, each second module-wall-vertical-channel 3098(b) may be a through-hole going through a corresponding one of the LLCs 0080 for the thermal-management liquid to flow through the corresponding one of the LLCs 0080. Thus, each second module-wall-vertical-channel 3098(b) in the first one of the BMs 3010 may be communicated with a corresponding one of the one or more second module-wall-vertical-channels 3098(b) in the second one of the BMs 3010 for the thermal-management liquid to flow from the first one of the BMs 3010 into the second one of the BMs 3010, each module-wall-vertical-channel 3098(b) in the second one of the BMs 3010 may be communicated with a corresponding one of the one or more second module-wall-vertical-channels 3098(b) in the last one of the BMs 3010 for the thermal-management liquid to flow from the second one of the BMs 3010 into the last one of the BMs 3010, and each second module-wall-vertical-channel 3098(b) in the last one of the BMs 3010 may be communicated with a corresponding one of the lid vertical channels 3092(b) for the thermal-management liquid to flow from the last one of the BMs 3010 into the lid module 3090(b) for flowing out of the BP 3030 through the ILC 3091(b).

In some embodiments, as shown in FIG. 20B, a larger BP 3030(a) may include the lid module 3090(a), the lid module 3090(b), and BMs 3010(a)-3010(f). The lid module 3090(a) may include the ILC 3091(a), the ILC 3091(b), one or more lid vertical channels 3092(a), and one or more lid vertical channels 3092(b). Each of BMs 3010(a)-3010(f) in the larger BP 3030(a) may be substantially similar or identical to the BMs 3010 in the BP 3010. Thus, each of BMs 3010(a)-3010(f) may include the LLC 0080, one or more first module-wall-vertical-channels 3098(a), one or more second module-wall-vertical-channels 3098(b), and the BP-space 3032.

In some embodiments, an installation process and method of the BMs 3010 in the BP 3030 may be substantially similar or identical to those of the BMs 3010(a)-3010(f) in the larger BP 3030(a). In addition, a positional relationship between the BMs 3010 in the BP 3030 may be substantially similar or identical to that between the BMs 3010(a)-3010(f) in the larger BP 3030(a). However, an installation direction of the BMs 3010 in the BP 3030 may be substantially similar or identical to one of an installation direction of the BMs 3010(a)-3010(c) and an installation direction of the BMs 3010(d)-3010(f) and opposite to the other one of the installation direction of the BMs 3010(a)-3010(c) and the installation direction of the BMs 3010(d)-3010(f). In FIG. 20B, the installation direction of the BMs 3010 in the BP 3030 may be substantially similar or identical to that of the BMs 3010(a)-3010(c) and opposite to that of the BMs 3010(d)-3010(f). Thus, the lid module 3090(b) may include the lid lateral channel 3096 for communicating the one or more second module-wall-vertical-channels 3098(b) of the BM 3010(c) to the one or more first module-wall-vertical-channels 3098(a) of the BM 3010(d) for the thermal-management liquid to flow from the BM 3010(c) into the BM 3010(d). In addition, the one or more lid vertical channels 3092(b) and the ILC 3091(b) may be included in the lid module 3090(a) for the thermal-management liquid to flow from the BM 3010(f) out of the larger BP 3030(a).

In some embodiments, each of the one or more first module-wall-vertical-channels 3098(a) of the BM 3010(a) may be communicated with a corresponding one of the one or more lid vertical channels 3092(a) for the thermal-management liquid to flow from the lid module 3090(a) into the BM 3010(a). In some embodiments, each of the first module-wall-vertical-channels 3098(a) of the BM 3010(d) may be communicated with the lid lateral channel 3096 for the thermal-management liquid to flow from the lid module 3090(b) into the BM 3010(d). In some embodiments, each of the one or more first module-wall-vertical-channels 3098(a) of the BMs 3010(b), 3010(c), 3010(e) and 3010(f) may be respectively communicated with a corresponding one of the one or more first module-wall-vertical-channels 3098(a) of the BMs 3010(a), 3010(b), 3010(d) and 3010(e) for the thermal-management liquid to flow from a previous one of the BMs 3010(a)-3010(f) into a corresponding one of the BMs 3010(a)-3010(f). In some embodiments, each of the one or more first module-wall-vertical-channels 3098(a) may include one or more inlet slits (not shown) for the thermal-management liquid to flow into a corresponding one of the BP-spaces 3032 for cooling the plurality of BCs 0020 in the BMs 3010(a)-3010(f).

In some embodiments, each of the one or more second module-wall-vertical-channels 3098(b) may include one or more outlet slits (not shown) for the thermal-management liquid to flow from a corresponding one of the BP-spaces 3032 into a corresponding one of the one or more second module-wall-vertical-channels 3098(b). In some embodiments, each of the one or more second module-wall-vertical-channels 3098(b) of the BM 3010(f) may be communicated with a corresponding one of the one or more lid vertical channels 3092(b) for the thermal-management liquid to flow from the BM 3010(f) back to the lid module 3090(a). In some embodiments, each of the one or more second module-wall-vertical-channels 3098(b) of the BM 3010(c) may be communicated with the lid lateral channel 3096 for the thermal-management liquid to flow from the BM 3010(c) into the lid module 3090(b). In some embodiments, each of the one or more second module-wall-vertical-channels 3098(b) of the BMs 3010(a), 3010(b), 3010(d) and 3010(e) may be respectively communicated with a corresponding one of the one or more second module-wall-vertical-channels 3098(b) of the BMs 3010(b), 3010(c), 3010(e) and 3010(f) for the thermal-management liquid to flow from a corresponding one of BMs 3010(a)-3010(f) into a next one of the BMs 3010(a)-3010(f).

In some embodiments, the size of the larger BP 3030(a) may be (substantially) larger than the size of the BP 3030. For example, in some embodiments, the larger BP 3030(a) may be twice as large as the BP 3030. In some other embodiments, the larger BP 3030(a) may be more or less than twice as large as the BP 3030. In some embodiments, the lid module 3090(a) may further include the ILC 3091(c), as shown in FIG. 19A, and the BP 3030 may further include a tube for communicating the one or more lid vertical channel 3092(b) of the lid module 3090(b), as shown in FIG. 20A, with one or more lid vertical channel (not shown) of the lid module 3090(a) for communicating the ILC 3091(c) to the one or more lid vertical channel 3092(b). Thus, even if both of the ILC 3091(a) and the ILC 3091(c) are included in the lid module 3090(a), the number of BMs in the BP 3030 may remain unchanged and the size of the BP 3030 may also (almost) remain unchanged since all ILCs are integrated to the same side of the BP 3030.

Please refer to FIG. 21A, FIG. 21B and FIG. 21C. FIG. 21A and FIG. 21B are conceptual diagram of the flowing directions of the thermal-management liquid when the two ILCs are respectively disposed on two opposite lid modules, and FIG. 21C is a perspective view corresponding to FIG. 21A and FIG. 21B.

Components both mentioned in this embodiment and the aforesaid embodiments or with similar reference numerals represent components with similar structures or functions, and the related description is omitted herein.

In some embodiments, the BP 3030 could be communicated with the circulation and heat exchange system 3080 to form a closed-loop liquid circulation system. When the closed-loop liquid circulation system is filled with liquid and pressure is applied by a pump to activate liquid circulation, the liquid flow is generated accordingly.

In this embodiment, the BP 3030 may comprise the plurality of BMs 3010, the lid module 3090(a) close to the pump outlet 3082, and the lid module 3090(b) away from the pump outlet 3082, so as to generate the liquid flow within the lid module 3090(a) and the liquid flow within the lid module 3090(b).

Referring to FIG. 21B and FIG. 21C, after entering the lid module 3090(a) via the ILC 3091(a), the thermal-management liquid flows into the first lid vertical channel 3095(a) and then enters the lid lateral channel 3096(a) along the z-direction to form the proximal lid lateral flow 3102. Via communication between the lid lateral channel 3096(a) and the plurality of the second lid vertical channels 3097(a), the proximal lid lateral flow 3102 flows from the plurality of second lid vertical channel 3097(a) into the plurality of first module-wall-vertical-channels 3098(a) to form first module-wall-vertical-flows 3104(a).

Referring to FIG. 21A and FIG. 21C, the first module-wall-vertical-flows 3104(a) flow into the BP-space 3032 via a plurality of module-wall-lateral-channels 3099(a) to form the module-wall-lateral-flow 3105.

When the module-wall-lateral-flow 3105 flows within the BP-space 3032, the module-wall-lateral-flow 3105 can flow across the module interface reference line 3012 to form the LLC liquid flow 0081. In such a manner, the thermal-management liquid can flow from one BP-space 3032 into another adjacent BP-space 3032 and then form the module-wall-lateral-flow 3105 again.

The module-wall-lateral-flows 3105 can leave the BP-space 3032 via a plurality of module-wall-lateral-channels 3099(b) and then enter the plurality of second module-wall-vertical-channels 3098(b), so as to form second module-wall-vertical-flows 3104(b). As shown in FIG. 21A, the plurality of second module-wall-vertical-channels 3098(b) and the plurality of first module-wall-vertical-channels 3098(a) are not located on the same x-z plane.

Since the plurality of second lid vertical channels 3097(b) is communicated with the second module-wall-vertical-channels 3098(b) and the lid lateral channel 3096(b), the second module-wall-vertical-flow 3104(b) can flow from the second lid vertical channels 3097(b) into the lid lateral channel 3096(b) to form the distal lid lateral flow 3107. Subsequently, since the lid lateral channel 3096(b) is communicated with the first lid vertical channel 3095(b) within the lid module 3090(b) and the first lid vertical channel 3095(b) is communicated with the ILC 3091(b), the distal lid lateral flow 3107 can flow into the first lid vertical channel 3095(b) and then flow out of the BP 3030 via the ILC 3091(b).

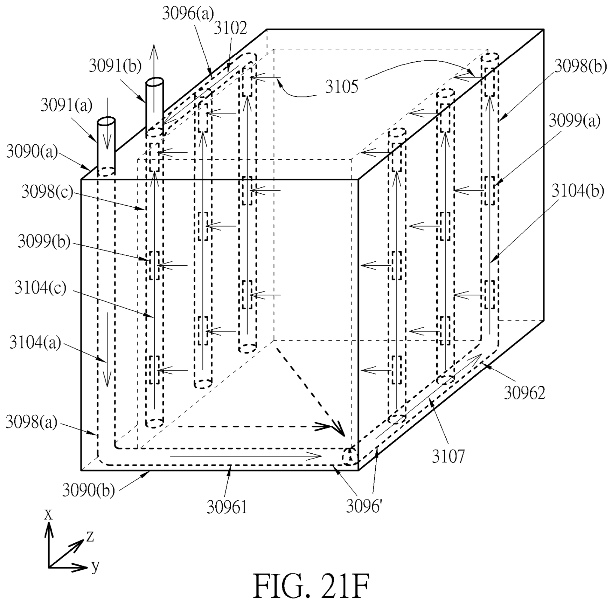

Please refer to FIG. 21D, FIG. 21E and FIG. 21F. FIG. 21D and FIG. 21E are conceptual diagram of the flowing directions of the thermal-management liquid when the two ILCs being disposed on the same lid module, and FIG. 21F is a perspective view corresponding to FIG. 21D and FIG. 21E.

Components both mentioned in this embodiment and the aforesaid embodiments or with similar reference numerals represent components with similar structures or functions, and the related description is omitted herein.

In some embodiments, the BP 3030 could be communicated with the circulation and heat exchange system 3080 to form a closed-loop liquid circulation system. When the closed-loop liquid circulation system is filled with liquid and pressure is applied by a pump to activate liquid circulation, the liquid flow is generated accordingly.

In this embodiment, the BP 3030 may comprise the plurality of BMs 3010, the lid module 3090(a), and the lid module 3090(b).

Referring to FIG. 21D and FIG. 21F, after entering the lid module 3090(a) via the ILC 3091(a), the thermal-management liquid flows from the lid module 3090(a) into the first module-wall-vertical-channel 3098(a) to form the first module-wall-vertical-flow 3104(a). Subsequently, the first module-wall-vertical-flow 3104(a) flows into the lid lateral channel 3096' of the lid module 3090(b) to form the distal lid lateral flow 3107.

Referring to FIG. 21F, the lid lateral channel 3096' may comprise the first lateral channel portion 30961 extending along the z-direction and the second lateral channel portion 30962 extending along the y-direction. The distal lid lateral flow 3107 flows from the first lateral channel portion 30961 to the second lateral channel portion 30962.

Referring to FIG. 21D, 21E and 21F, the distal lid lateral flow 3107 may flow into the plurality of second module-wall-vertical-channel 3098(b) to form the second module-wall-vertical-flows 3104(b) since the lid lateral channel 3096' is communicated with the plurality of second module-wall-vertical-channels 3098(b). Subsequently, the second module-wall-vertical-flows 3104(b) can flow into the BP-space 3032 through the plurality of module-wall-lateral-channels 3099(a), so as to form the module-wall-lateral-flows 3105.

Referring to FIG. 21D and 21F, the module-wall-lateral-flows 3105 may flow from the BP-space 3032 into a plurality of third module-wall-vertical-channels 3098(c) through the plurality of module-wall-lateral-channels 3099(b) to form third module-wall-vertical-flows 3104(c).

Referring to FIG. 21E and 21F, since the plurality of third module-wall-vertical-channels 3098(c) is communicated with the lid lateral channel 3096(a) of the lid module 3090(a), the proximal lid lateral flow 3102 is formed within the lid module 3090(a) after the third module-wall-vertical-flows 3104(c) flow into the lid lateral channel 3096(a). Subsequently, the third module-wall-vertical-flows 3104(c) can flow out of the BP 3030 via the ILC 3091(b).

To be noted, the first module-wall-vertical-channel 3098(a) and the third module-wall-vertical-channel 3098(c) are disposed on the same x-z plane and separated in the z-direction as shown in FIG. 21F. However, the first module-wall-vertical-channel 3098(a) and the third module-wall-vertical-channel 3098(c) are separated in the y-direction as shown in FIG. 21D. This is only for illustrating the liquid flow and does not mean that the first module-wall-vertical-channel 3098(a) and the third module-wall-vertical-channel 3098(c) are actually separated in the y-direction.

In addition, in the lid module 3090(b), bold dashed liquid flows indicate that the lid lateral channel 3096' is not limited to being arranged along the four sides of the lid module 3090(b). In some embodiments, the lid lateral channel 3096' could be arranged along any line connecting opposite sides of the lid module 3090(b), such as along a diagonal line of the lid module 3090(b). For example, the second lid module may comprise at least one lid vertical channel first communicated with a lid lateral channel along the y-direction, then communicated with a lid lateral channel along the z-direction, and finally communicated with another lid lateral channel along the y-direction.

Via the technical features presented in FIG. 21A, FIG. 21B, FIG. 21C, FIG. 21D, FIG. 21E and FIG. 21F, the ILC can be disposed at any position on the lid module. In some embodiments, the plurality of ILCs could be disposed on the opposite lid modules or on the same lid module. In some embodiments, the ILCs could be disposed along the four sides of the lid module or within a central area of the lid module. Regardless of where the ILC is located, the thermal-management liquid can still flow evenly within the BP-space via the aforesaid design, so as to achieve uniform heat dissipation. In such a manner, the present disclosure solves the problem of limited environmental space preventing the installation of piping communicating the BP with the circulation and heat exchange system or resulting in messy piping. The present disclosure also solves the problem of space being occupied by messy piping.

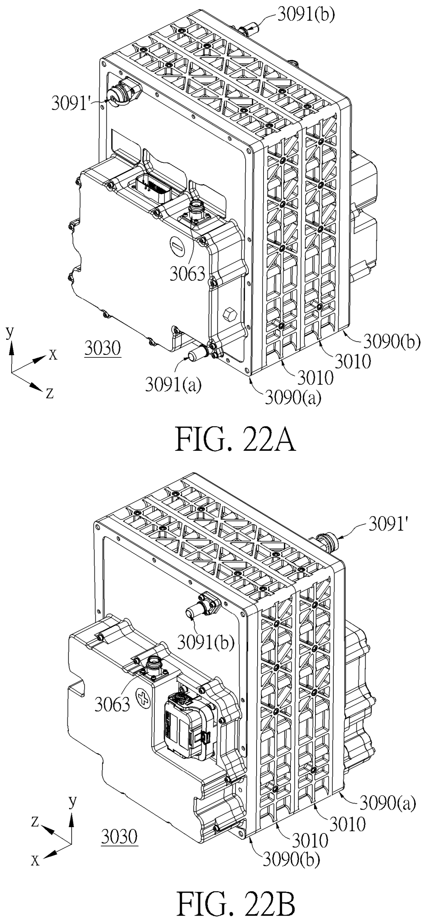

FIG. 22A and FIG. 22B illustrate perspective views of the BP 3030, according to an example implementation of the present disclosure. Components both mentioned in this embodiment and the aforesaid embodiments or with similar reference numerals represent components with similar structures or functions, and the related description is omitted herein.

The BP 3030 may include the lid module 3090(a), the plurality of BMs 3010, and the lid module 3090(b). The lid module 3090(a) may be connected to the first one of BMs 3010, and the lid module 3090(b) may be connected to the last one of the BMs 3010. In some embodiments, the lid module 3090(a), the BMs 3010, and the lid module 3090(b) may be sealed together to prevent the thermal-management liquid from leaking out of the BP 3030.

In some embodiments, the lid module 3090(a) may include the ILC 3091(a) and the HVIC 3063, and the lid module 3090(b) may include the ILC 3091(b) and another HVIC 3063. In some embodiments, the ILC 3091(a) may be included in the lid module 3090(a) for the thermal-management liquid to flow into the BP 3030. In some embodiments, the ILC 3091(b) may be included in the lid module 3090(b) for the thermal-management liquid to flow out of the BP 3030. Thus, the thermal-management liquid may flow into the first one of the BMs 3010 through the ILC 3091(a) of the lid module 3090(a) and flow out of the last one of the BMs 3010 through the ILC 3091(b) of the lid module 3090(b). In some embodiments, the ILC 3091(a) may be disposed on the lid module 3090(b) for the thermal-management liquid to flow into the BP 3030. In some embodiments, the ILC 3091(b) may be included in the lid module 3090(a) (e.g., the ILC 3091(c) in FIG. 19B) for the thermal-management liquid to flow out of the BP 3030. Thus, the ILC 3091(a) and the ILC 3091(b) may be included in the same lid module (e.g., the lid module 3090(a)), or may be included in different lid modules.

In some embodiments, the HVIC 3063 on the lid module 3090(b) may be a negative electrode of the BP 3030, and the HVIC 3063 on the lid module 3090(a) may be a positive electrode of the BP 3030. In some embodiments, the HVIC 3063 on the lid module 3090(b) may be a positive electrode of the BP 3030, and the HVIC 3063 on the lid module 3090(a) may be a negative electrode of the BP 3030.

In some embodiments, the number of BMs 3010 may be equal to two, three, or other positive numbers greater than three. In some embodiments, there may be only one BM 3010 included in the BP 3030.

In some embodiments, the lid module 3090(a) may further include an ILC 3091', and the lid module 3090(b) may further include an ILC 3091" (not shown). In some embodiments, the ILC 3091' and the ILC 3091" may have, respective, the same functions as the ILC 3091(a) and the ILC 3091(b). For example, the thermal-management liquid may flow into the BP 3030 from the ILC 3091" and flow out of the BP 3030 through the ILC 3091'. Thus, the BP 3030 may have two sets of ILCs. In some embodiments, the ILC 3091' and the ILC 3091" could be omitted in the BP 3030, so the BP 3030 may have only one set of ILCs (i.e., the ILC 3091(a) and ILC 3091(b)) for simplifying the ILC configuration of the BP 3030.

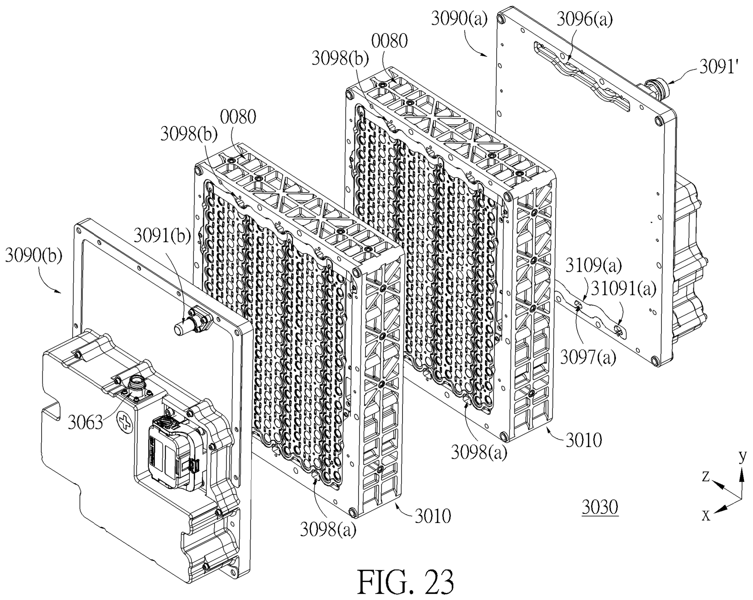

FIG. 23 illustrates a partially exploded view of the BP 3030 illustrated in FIG. 22B, according to an example implementation of the present disclosure. Components both mentioned in this embodiment and the aforesaid embodiments or with similar reference numerals represent components with similar structures or functions, and the related description is omitted herein.

The BP 3030 may include the lid module 3090(a), the BMs 3010, and the lid module 3090(b). The lid module 3090(a) may be connected to the first one of the BMs 3010, and the lid module 3090(b) may be connected to the last one of the BMs 3010.

With reference to FIG. 22A and FIG. 23, in some embodiments, the lid module 3090(a) may further include the ILC 3091(a), one or more second lid vertical channels 3097(a), and a flow divider 3109(a). The flow divider 3109(a) may have one or more divider ports 31091(a). In some embodiments, the one or more second lid vertical channels 3097(a) may be communicated with the ILC 3091(a) for the thermal-management liquid to flow out of the lid module 3090(a) through the one or more second lid vertical channels 3097(a). In some embodiments, the flow divider 3109(a) may cover one or more outlet holes (not shown) of the lid module 3090(a) to generate the one or more second lid vertical channels 3097(a). In some embodiments, the lid module 3090(a) may further include one or more lid lateral channel 3096(a). In some embodiments, sizes and shapes of the one or more outlet holes may be identical (or substantially similar) to or different from sizes and shapes of the one or more lid lateral channel 3096(a). In some embodiments, when the thermal-management liquid flows through the ILC 3091', a flow divider may cover the one or more lid lateral channel 3096(a) to generate one or more first lid openings (not shown).

In some embodiments, the first one of the BMs 3010 may further include the LLC 0080, one or more first module-wall-vertical-channels 3098(a), and one or more second module-wall-vertical-channels 3098(b). In some embodiments, each of the one or more first module-wall-vertical-channels 3098(a) and the one or more second module-wall-vertical-channels 3098(b) of the first one of the BMs 3010 may be a through-hole going through the LLC 0080 of the first one of the BMs 3010, for the thermal-management liquid to flow through the first one of the BMs 3010. Thus, when the first one of the BMs 3010 is connected to the lid module 3090(a), each of the one or more first module-wall-vertical-channels 3098(a) may be communicated with a corresponding one of the one or more second lid vertical channels 3097(a) for receiving the thermal-management liquid via the ILC 3091(a) of the lid module 3090(a) into the first one of the BMs 3010. In some embodiments, when the first one of the BMs 3010 is connected to the lid module 3090(a), each of the one or more first module-wall-vertical-channels 3098(a) may be aligned with a corresponding one of the one or more second lid vertical channels 3097(a) for the thermal-management liquid to flow from the one or more second lid vertical channels 3097(a) into the one or more first module-wall-vertical-channels 3098(a) and to further flow out of the first one of the BMs 3010 from the one or more second module-wall-vertical-channels 3098(b). In some embodiments, each of the one or more first module-wall-vertical-channels 3098(a) may be positioned in a portion of a wall of the LLC 0080, and each of the one or more second module-wall-vertical-channels 3098(b) may be positioned in a portion of another wall of the LLC 0080.

In some embodiments, the last one of the BMs 3010 may further include the LLC 0080, one or more first module-wall-vertical-channels 3098(a), and one or more second module-wall-vertical-channels 3098(b). In some embodiments, each of the one or more first module-wall-vertical-channels 3098(a) and the one or more second module-wall-vertical-channels 3098(b) of the last one of the BMs 3010 may be a through-hole going through the LLC 0080 of the last one of the BMs 3010. Thus, when the last one of the BMs 3010 is connected to the first one of the BMs 3010, each of the one or more first module-wall-vertical-channels 3098(a) of the last one of the BMs 3010 may be communicated with a corresponding one of the one or more first module-wall-vertical-channels 3098(a) of the first one of the BMs 3010. In some embodiments, when the last one of the BMs 3010 is connected to the first one of the BMs 3010, each of the one or more first module-wall-vertical-channels 3098(a) of the last one of the BMs 3010 may be aligned with a corresponding one of the one or more first module-wall-vertical-channels 3098(a) of the first one of the BMs 3010, for the thermal-management liquid to flow from the one or more first module-wall-vertical-channels 3098(a) of the first one of the BMs 3010 into the one or more first module-wall-vertical-channels 3098(a) of the last one of the BMs 3010 and to further flow out of the last one of the BMs 3010. In addition, when the last one of the BMs 3010 is connected to the first one of the BMs 3010, each of the one or more second module-wall-vertical-channels 3098(b) of the last one of the BMs 3010 may be communicated with a corresponding one of the one or more second module-wall-vertical-channels 3098(b) of the first one of the BMs 3010. In some embodiments, when the last one of the BMs 3010 is connected to the first one of the BMs 3010, each of the one or more second module-wall-vertical-channels 3098(b) of the last one of the BMs 3010 may be aligned with a corresponding one of the one or more second module-wall-vertical-channels 3098(b) of the first one of the BMs 3010 for the thermal-management liquid to flow from the one or more second module-wall-vertical-channels 3098(b) of the first one of the BMs 3010 into the one or more second module-wall-vertical-channels 3098(b) of the last one of the BMs 3010 and to further flow out of the last one of the BMs 3010.

With reference to FIG. 22B and FIG. 23, In some embodiments, the lid module 3090(b) may further include the ILC 3091(b), one or more second lid vertical channels 3097(b) (not shown), and the flow divider 3109(b) (not shown), and the flow divider 3109(b) may also have one or more divider ports 3109(b) (not shown). The related description of the second lid vertical channel 3097(b) and the flow divider 3109(b) could be reasoned by analogy according to that of the second lid vertical channel 3097(a) and the flow divider 3109(a). In some embodiments, the one or more second lid vertical channels 3097(b) may be communicated with the ILC 3091(b) for the thermal-management liquid to flow into the lid module 3090(b) through the one or more second lid vertical channels 3097(b) and to flow out of the BP 3030. In addition, when the lid module 3090(b) is connected to the last one of the BMs 3010, each of the one or more second lid vertical channels 3097(b) may be communicated with a corresponding one of the one or more second module-wall-vertical-channels 3098(b) for the thermal-management liquid to flow from the last one of the BMs 3010 to the lid module 3090(b). In some embodiments, when the lid module 3090(b) is connected to the last one of the BMs 3010, each of the one or more second lid vertical channels 3097(b) may be aligned with a corresponding one of the one or more second module-wall-vertical-channels 3098(b) for the thermal-management liquid to flow from the one or more second module-wall-vertical-channels 3098(b) into the one or more second lid vertical channels 3097(b) and to further flow out of the lid module 3090(b) of the BP 3030 from the ILC 3091(b).

In some embodiments, the flow divider 3109(b) of the lid module 3090(b) may cover one or more inlet holes of the lid module 3090(b) (not shown) to generate the one or more second lid vertical channels 3097(b). In some embodiments, the lid module 3090(b) may further include one or more lid lateral channels 3096(b) (not shown). The related description of the lid lateral channel 3096(b) could be reasoned by analogy according to that of the lid lateral channel 3096(a). In some embodiments, the sizes and shapes of the one or more inlet holes of the lid module 3090(b) may be identical to or different from sizes and shapes of the one or more lid lateral channels 3096(b). In some embodiments, when the thermal-management liquid flows through the lid lateral channel 3096(b) on the lid module 3090(b), a flow divider may cover the one or more lid lateral channel 3096(b) to generate one or more second lid openings (not shown).

In some embodiments, when the first one of the BMs 3010 is connected to the lid module 3090(a), each of the one or more second module-wall-vertical-channels 3098(b) of the first one of the BMs 3010 may be connected to a corresponding one of the one or more first lid openings. In some embodiments, when the first one of the BMs 3010 is connected to the lid module 3090(a), each of the one or more second module-wall-vertical-channels 3098(b) may be aligned with a corresponding one of the one or more first lid openings for the thermal-management liquid to flow between the one or more second module-wall-vertical-channels 3098(b) and the one or more first lid openings.

In some embodiments, when the lid module 3090(b) is connected to the last one of the BMs 3010, each of the one or more second lid openings may be connected to a corresponding one of the one or more first module-wall-vertical-channels 3098(a). In some embodiments, when the lid module 3090(b) is connected to the last one of the BMs 3010, each of the one or more second lid openings may be aligned with a corresponding one of the one or more first module-wall-vertical-channels 3098(a) for the thermal-management liquid to flow between the one or more second lid openings and the one or more first module-wall-vertical-channels 3098(a).

In some embodiments, each BM 3010 may further include the LLC 0080, the one or more first module-wall-vertical-channels 3098(a), the one or more second module-wall-vertical-channels 3098(b), and the BP-space 3032. In some embodiments, each of the one or more first module-wall-vertical-channels 3098(a) and the one or more second module-wall-vertical-channels 3098(b) may be a through-hole going through the LLC 0080. Thus, with reference to FIG. 23, when the first one of the BMs 3010 is connected to the lid module 3090(a), each of the one or more first module-wall-vertical-channels 3098(a) may be communicated with a corresponding one of the one or more second lid vertical channels 3097(a). In some embodiments, when the first one of the BMs 3010 is connected to the lid module 3090(a), each of the one or more first module-wall-vertical-channels 3098(a) may be aligned with a corresponding one of the one or more second lid vertical channels 3097(a) for the thermal-management liquid to flow from the one or more second lid vertical channels 3097(a) into the one or more first module-wall-vertical-channels 3098(a) and to further flow out of the first one of the BM 3010 from the one or more first module-wall-vertical-channels 3098(a).

In some embodiments, when the last one of the BMs 3010 is connected to the first one of the BMs 3010, each of the one or more second module-wall-vertical-channels 3098(b) of the last one of the BMs 3010 may be communicated with a corresponding one of the one or more second module-wall-vertical-channels 3098(b) of the first one of the BMs 3010. In some embodiments, when the last one of the BMs 3010 is connected to the first one of the BMs 3010, each of the one or more second module-wall-vertical-channels 3098(b) may be aligned with a corresponding one of the one or more second module-wall-vertical-channels 3098(b) of the first one of the BMs 3010 for the thermal-management liquid to flow from the one or more second module-wall-vertical-channels 3098(b) of the first one of the BMs 3010 into the one or more second module-wall-vertical-channels 3098(b) of the last one of the BMs 3010 and to further flow out of the last one of the BMs 3010 from the one or more second module-wall-vertical-channels 3098(b).

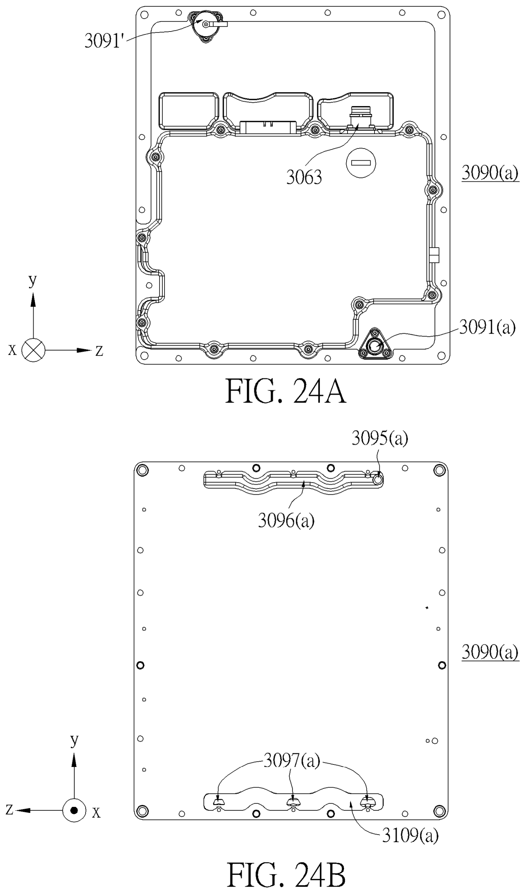

FIG. 24A and FIG. 24B illustrate, respectively, a front view and a back view of the lid module 3090(a) illustrated in FIG. 22A, according to an example implementation of the present disclosure. In some embodiments, an external surface of the lid module 3090(a) may include the ILC 3091(a), the HVIC 3063, and the ILC 3091'. In addition, an internal surface of the lid module 3090(a) may further include the one or more second lid vertical channels 3097(a), the one or more lid lateral channels 3096(a), and the flow divider 3109(a).

In some embodiments, an inlet hole (the related description could be reasoned by analogy according to that of the first lid vertical channel 3095(a)) of the ILC 3091(a) may be a through-hole going through the lid module 3090(a). Thus, the internal surface of the lid module 3090(a) may also include the inlet hole of the ILC 3091(a). In some embodiments, the inlet hole of the ILC 3091(a) may be communicated with the one or more second lid vertical channels 3097(a). Thus, when the thermal-management liquid flows into the lid module 3090(a) through the ILC 3091(a), the thermal-management liquid may flow out of the lid module 3090(a) through the one or more second lid vertical channels 3097(a). In some embodiments, the inlet hole of the ILC 3091(a) may not be aligned with the one or more second lid vertical channels 3097.

In some embodiments, a central hole (the related description could be reasoned by analogy according to that of the first lid vertical channel 3095(a)) of the ILC 3091' may be a through-hole going through the lid module 3090(a). Thus, the internal surface of the lid module 3090(a) may include the central hole of the ILC 3091'. In some embodiments, the central hole of the ILC 3091' may be communicated with the one or more lid lateral channels 3096(a). Thus, when the thermal-management liquid flows into the lid module 3090(a) through the ILC 3091', the thermal-management liquid may flow out of the lid module 3090(a) through the one or more lid lateral channels 3096(a). In some embodiments, when the thermal-management liquid flows out of the lid module 3090(a) through the ILC 3091', the thermal-management liquid may flow into the lid module 3090(a) through the one or more lid lateral channels 3096(a).

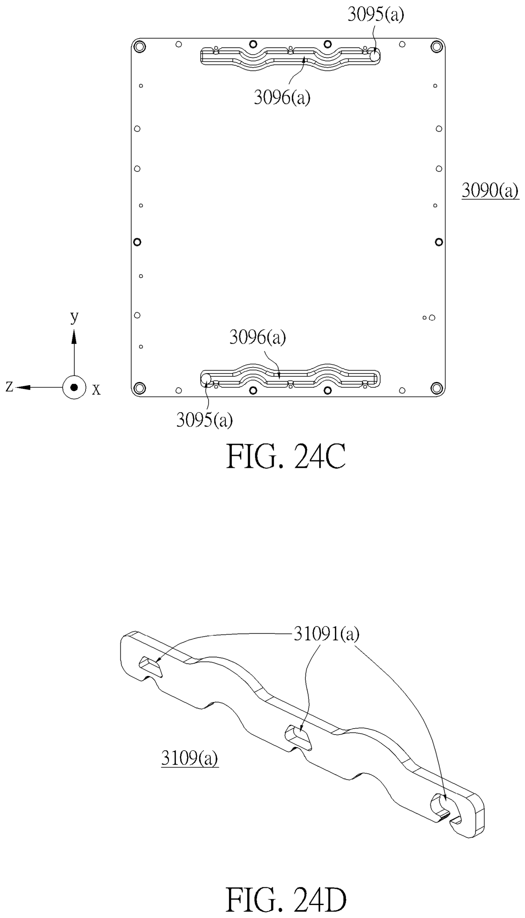

FIG. 24C illustrates a back view of the lid module 3090(a) illustrated in FIG. 24B without the flow divider 3109(a), according to an example implementation of the present disclosure, and FIG. 24D illustrates a perspective view of the flow divider 3109(a) illustrated in FIG. 24B, according to an example implementation of the present disclosure.

In some embodiments, the one or more lid lateral channels 3096(a) and the inlet hole of the ILC 3091(a) may be exposed on the internal surface of the lid module 3090(a) when the flow divider 3109(a) is removed from the lid module 3090(a). As shown in FIG. 24C, compared to FIG. 24B, in some embodiments, the inlet hole of the ILC 3091(a) may not be aligned with the one or more second lid vertical channels 3097(a).

In some embodiments, the flow divider 3109(a) may have one or more divider ports 31091(a). In some embodiments, the one or more divider ports 31091(a) may be different from each other. For example, shapes of the one or more divider ports 31091(a) may be identical to each other, but sizes of the one or more divider ports 31091 (a) may be different from each other. Alternatively, shapes and sizes of the one or more divider ports 31091(a) may be different from each other.

In some embodiments, when the lid module 3090(a) includes the flow divider 3109(a), the one or more divider ports 31091(a) may be regarded as the one or more second lid vertical channels 3097(a). Thus, in some embodiments, each of the one or more second lid vertical channels 3097(a) may be different from the other ones of the second lid vertical channels 3097(a). For example, shapes of the one or more second lid vertical channels 3097(a) may be identical to each other, but sizes of the one or more second lid vertical channels 3097(a) may be different from each other. Alternatively, shapes and sizes of the one or more second lid vertical channels 3097(a) may be different from each other.

In some embodiments, the flow divider 3109(a) may be directly integrated with the lid module 3090(a) to form a single component (e.g., by a one-piece molding process). Thus, the lid module 3090(a) may include one or more first fluid cavities (not shown in the figures, such as an integral-formed manifold structure). In some embodiments, the one or more first fluid cavities may be communicated with each other for the thermal-management liquid to flow between the one or more first fluid cavities and may be communicated with at least one of the one or more second lid vertical channels 3097(a) for the thermal-management liquid to flow out of the lid module 3090(a). In addition, the inlet hole of the ILC 3091(a) may be directly communicated with one of the one or more first fluid cavities for the thermal-management liquid to flow into the lid module 3090(a).

With reference to FIG. 23 and FIG. 24B, in some embodiments, the number of one or more second lid vertical channels 3097(a) may be equal to the number of one or more module-wall-vertical-channels 3098(a), since each of the one or more second lid vertical channels 3097(a) is communicated with a corresponding one of the one or more module-wall-vertical-channels 3098(a). In some embodiments, the number of one or more second lid vertical channels 3097(a) may be equal to one, and the number of one or more module-wall-vertical-channels 3098(a) may also be equal to one. In some embodiments, as shown in FIG. 24B, the number of one or more second lid vertical channels 3097(a) may be equal to three, and the number of one or more module-wall-vertical-channels 3098(a) may also be equal to three. In other words, the lid module 3090(a) may include the plurality of second lid vertical channels 3097(a), and the BM 3010 may also include the same number of module-wall-vertical-channels 3098(a).

With reference to FIG. 23 and FIG. 24B, In some embodiments, when the number of one or more second lid vertical channels 3097(a) is greater than one, one of the one or more second lid vertical channels 3097(a) neighboring the inlet hole of the ILC 3091(a) may be smaller than one of the one or more second lid vertical channels 3097(a) away from the inlet hole of the ILC 3091(a). In some embodiments, the sizes of the one or more second lid vertical channels 3097(a) may be associated with distances between the inlet hole of the ILC 3091(a) and the one or more second lid vertical channels 3097(a). In some embodiments, the sizes of the one or more second lid vertical channels 3097(a) may be determined based on the distances from the inlet hole of the ILC 3091(a) to the one or more second lid vertical channels 3097(a). In some embodiments, the sizes of the one or more second lid vertical channels 3097(a) may be larger when the distances from the inlet hole of the ILC 3091(a) to the one or more second lid vertical channels 3097(a) are increased. Thus, as shown in FIG. 24B, the second lid vertical channels 3097(a) at the leftmost side of the flow divider 3109(a) may be the smallest one of the second lid vertical channels 3097(a), and the second lid vertical channels 3097(a) at the rightmost side of the flow divider 3109(a) may be the largest one of the second lid vertical channels 3097(a). In such a manner, the flow divider 3109(a) provided by the present disclosure can control the flow rate/velocity of the liquid flow at different divider ports 31091(a), so as to make the liquid flow in the BP-space 3032 more uniform.

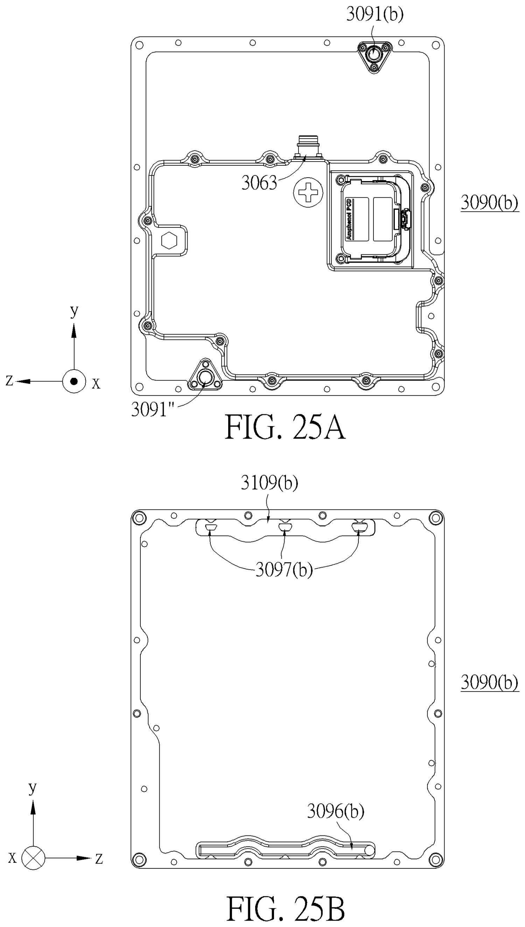

FIG. 25A and FIG. 25B illustrate, respectively a front view and a back view of the lid module 3090(b) illustrated in FIG. 22B, according to an example implementation of the present disclosure. In some embodiments, an external surface of the lid module 3090(b) may include the ILC 3091(b), the HVIC 3063, and the ILC 3091". In addition, an internal surface of the lid module 3090(b) may further include the one or more second lid vertical channels 3097(b), the one or more lid lateral channels 3096(b), and the flow divider 3109(b).

In some embodiments, an outlet hole (the related description could be reasoned by analogy according to that of the first lid vertical channel 3095(b)) of the ILC 3091(b) may be a through-hole going through the lid module 3090(b). Thus, the internal surface of the lid module 3090(b) may also include the outlet hole of the ILC 3091(b). In some embodiments, the outlet hole of the ILC 3091(b) may be communicated with the one or more second lid vertical channels 3097(b). Thus, the thermal-management liquid may first flow into the lid module 3090(b) through the one or more second lid vertical channels 3097(b), and then flow out of the lid module 3090(b) through the ILC 3091(b). In some embodiments, the outlet hole of the ILC 3091(b) may not be aligned with the one or more second lid vertical channels 3097(b).

In some embodiments, a central hole (the related description could be reasoned by analogy according to that of the first lid vertical channel 3095(b)) of the ILC 3091" may be a through-hole going through the lid module 3090(b). Thus, the internal surface of the lid module 3090(b) may also include the central hole of the ILC 3091". In some embodiments, the central hole of the ILC 3091" may be communicated with the one or more lid lateral channels 3096(b). Thus, when the thermal-management liquid flows into the lid module 3090(b) through the ILC 3091", the thermal-management liquid may flow out of the lid module 3090(b) through the one or more lid lateral channels 3096(b). In some embodiments, when the thermal-management liquid flows out of the lid module 3090(b) through the ILC 3091", the thermal-management liquid may flow into the lid module 3090(b) through the one or more lid lateral channels 3096(b).

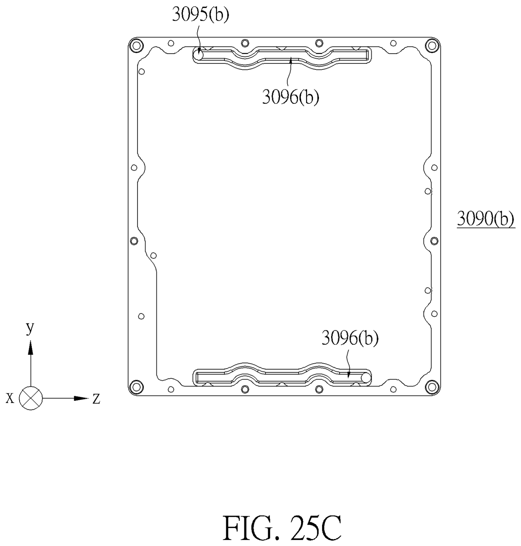

FIG. 25C illustrates a back view of the lid module 3090(b) illustrated in FIG. 25B without the flow divider 3109(b), according to an example implementation of the present disclosure. In some embodiments, the one or more lid lateral channels 3096(b) and the outlet hole of the ILC 3091(b) may be exposed on the internal surface of the lid module 3090(b) when the flow divider 3109(b) is removed from the lid module 3090(b). As shown in FIG. 25C, compared to FIG. 25B, in some embodiments, the outlet hole of the ILC 3091(b) may not be aligned with the one or more second lid vertical channels 3097(b).

In some embodiments, the flow divider 3109(b) may have one or more divider ports 31091(b), and the related description of the divider ports 31091(b) could be reasoned by analogy according to that of the divider ports 31091(a). In some embodiments, the one or more divider ports 31091(b) may be different from each other. For example, shapes of the one or more divider ports 31091(b) may be identical to each other, but sizes of the one or more divider ports 31091(b) may be different from each other. Alternatively, shapes and sizes of the one or more divider ports 31091(b) may be different from each other.

In some embodiments, when the lid module 3090(b) includes the flow divider 3109(b), the one or more divider ports 31091(b) may be regarded as the one or more second lid vertical channels 3097(b). Thus, in some embodiments, the one or more second lid vertical channels 3097(b) may be different from each other. For example, shapes of the one or more second lid vertical channels 3097(b) may be identical to each other, but sizes of the one or more second lid vertical channels 3097(b) may be different from each other. Alternatively, shapes and sizes of the one or more second lid vertical channels 3097(b) may be different from each other.

In some embodiments, the flow divider 3109(b) may be directly integrated with the lid module 3090(b) to form a single component (e.g., by a one-piece molding process). Thus, the lid module 3090(b) may include one or more second fluid cavities (not shown in the figures, such as an integrally-formed manifold structure). In some embodiments, the one or more second fluid cavities may be communicated with each other for the thermal-management liquid to flow between the one or more second fluid cavities and communicated with at least one of the one or more second lid vertical channels 3097(b) for the thermal-management liquid to flow into the lid module 3090(b). In addition, the outlet hole of the ILC 3091(b) may be directly communicated with one of the one or more second fluid cavities for the thermal-management liquid to flow out of the lid module 3090(b).

With reference to FIG. 23 and FIG. 25B, in some embodiments, the number of one or more second lid vertical channels 3097(b) may be equal to the number of one or more second module-wall-vertical-channels 3098(b), since each of the one or more second lid vertical channels 3097(b) is communicated with a corresponding one of the one or more second module-wall-vertical-channels 3098(b). In some embodiments, the number of one or more second lid vertical channels 3097(b) may be equal to one, and the number of one or more second module-wall-vertical-channels 3098(b) may also be equal to one. In some embodiments, as shown in FIG. 25B, the number of one or more second lid vertical channels 3097(b) may be equal to three, and the number of one or more second module-wall-vertical-channels 3098(b) may also be equal to three. In other words, the lid module 3090(b) may include the plurality of second lid vertical channels 3097(b), and the BM 3010 may include the same number of second module-wall-vertical-channels 3098(b).

With reference to FIG. 23 and FIG. 25B, in some embodiments, when the number of one or more second lid vertical channels 3097(b) is greater than one, one of the one or more second lid vertical channels 3097(b) neighboring the outlet hole of the ILC 3091(b) may be larger than one of the one or more second lid vertical channels 3097(b) further from the outlet hole of the ILC 3091(b). In some embodiments, the sizes of the one or more second lid vertical channels 3097(b) may be determined based on distances from the outlet hole of the ILC 3091(b) to the one or more second lid vertical channels 3097(b). In some embodiments, the sizes of the one or more second lid vertical channels 3097(b) may be larger when the distances from the outlet hole of the ILC 3091(b) to the one or more second lid vertical channels 3097(b) are increased. Thus, in FIG. 25B, the second lid vertical channels 3097(b) at the leftmost side of the flow divider 3109(b) may be the smallest one of the second lid vertical channels 3097(b), and the second lid vertical channels 3097(b) at the rightmost side of the flow divider 3109(b) may be the largest one of the second lid vertical channels 3097(b). In such a manner, the flow divider 3109(b) provided by the present disclosure can control the flow rate/velocity of the liquid flow at different divider ports 31091(b), so as to make the liquid flow in the BP-space 3032 more uniform.

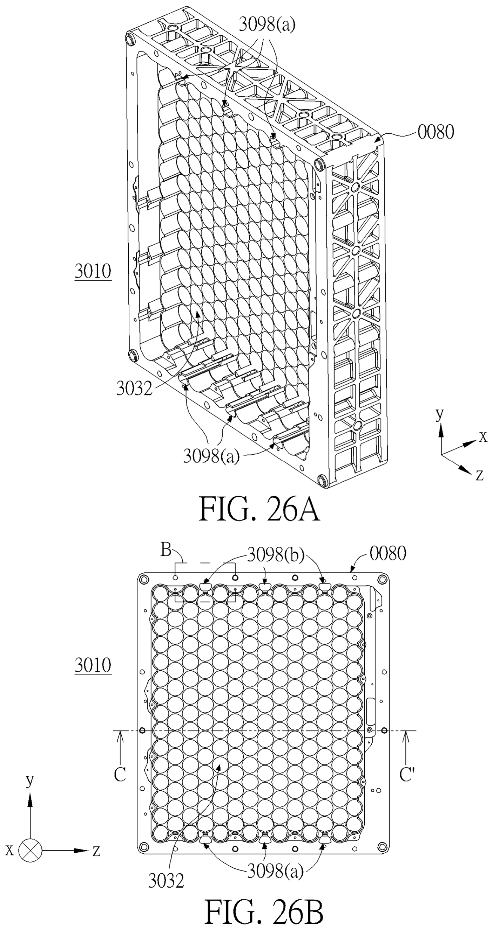

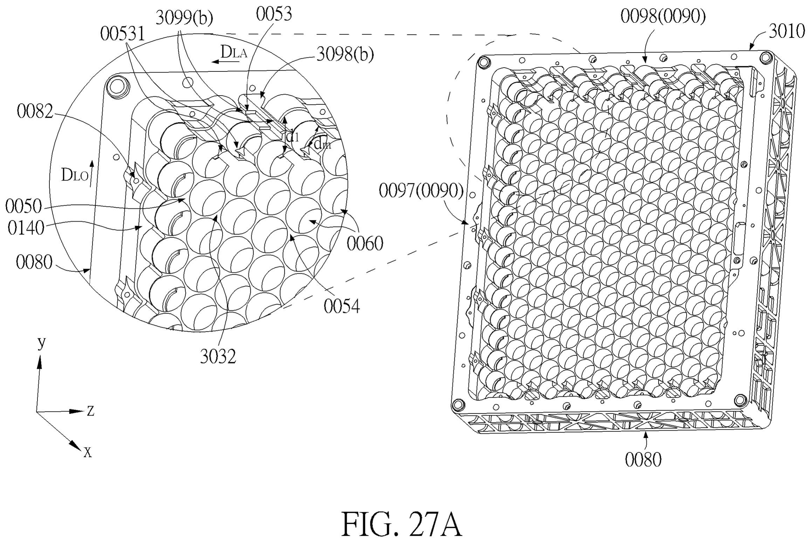

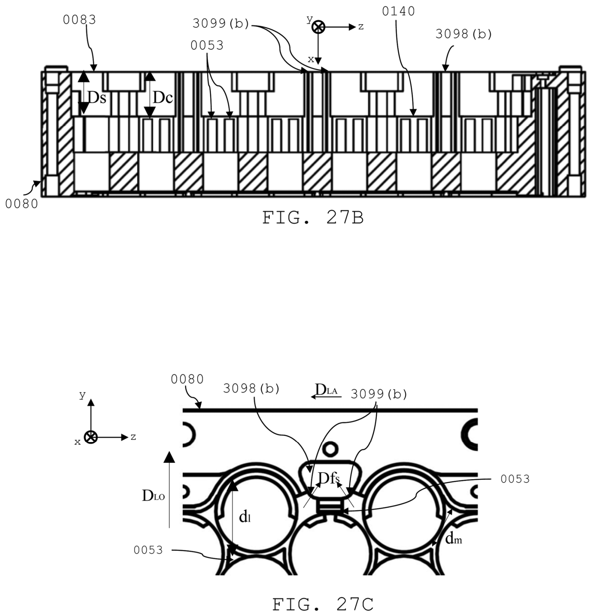

FIG. 26A illustrates a perspective view of the BM 3010 illustrated in FIG. 23, according to an example implementation of the present disclosure, and FIG. 26B illustrates a front view of the BM 3010 illustrated in FIG. 23, according to an example implementation of the present disclosure. FIG. 27A illustrates a partially enlarged view of a top-left corner of the BM 3010 illustrated in FIG. 26A, according to an example implementation of the present disclosure. FIG. 27B illustrates a cross-sectional view of the BM 3010 taken along line C-C' of FIG. 26B, according to an example implementation of the present disclosure. FIG. 27C illustrates an enlarged view of a region B illustrated in FIG. 26B, according to an example implementation of the present disclosure. Components both mentioned in this embodiment and the aforesaid embodiments or with similar reference numerals represent components with similar structures or functions, and the related description is omitted herein.

In some embodiments, the BM 3010 may further include the cell holder 0050. In some embodiments, the LLC 0080 may further include the four side walls 0091 (i.e., the east wall 0096, the south wall 0097, the west wall 0098 and the north wall 0099 of the peripheral wall 0090), a plurality of cell-holder fixing structures 0082 extended from the peripheral wall 0090, and the cell-holder stopping structures 0140 extended from the peripheral wall 0090. In some embodiments, the cell-holder fixing structures 0082 and the cell-holder stopping structures 0140 may be used to support a cell support (e.g., the cell holder 0050). In some embodiments, the cell support may be used to receive and support the plurality of BCs 0020 (not shown). For example, the cell support and the cell holder 0050 may receive two electrode sides of the BCs 0020.

In some embodiments, each of the one or more second module-wall-vertical-channels 3098(b) may further include one or more module-wall-lateral-channels 3099(b) and a flow guide 0053 for guiding the thermal-management liquid to flow from the BP-space 3032 into a corresponding one of the one or more second module-wall-vertical-channels 3098(b) for cooling the BCs 0020 in the BP-space 3032. Thus, the BP-space 3032 may be communicated with the one or more second module-wall-vertical-channels 3098(b) for allowing the thermal-management liquid to flow from the BP-space 3032 into the one or more second module-wall-vertical-channels 3098(b) and to flow out of the ILC 3091(b) of the BP 3030. In some embodiments, the one or more module-wall-lateral-channels 3099(b) and the flow guide 0053 cooperatively form at least one lateral slit for the second module-wall-vertical-channel 3098(b). An angle between the peripheral wall 0090 and a flowing direction Dfs of the thermal-management liquid flowing through one of the at least one lateral slit may be an acute angle as shown in FIG. 27C. In some embodiments, the at least one lateral slit may guide the module-wall-lateral-flow 3105 flow in the flowing direction Dfs to have a lateral flow component, for guiding the thermal-management liquid to flow towards the corners of the BP-space 3032. Thus, the thermal-management liquid may fully flow through the BM 3010 and the temperature of the thermal-management liquid in the BM 3010 may be decreased more uniformly.

In some embodiments, a plurality of cell receiving structures 0060 included in the BP-space 3032 may be formed by the cell holder 0050 connected to the LLC 0080. Each of the cell receiving structures 0060 formed by the cell holder 0050 may be used to receive one of the two electrode sides of the BCs 0020.

As shown in FIG. 27A, the cell holder 0050 may have an internal surface 0054 facing the BCs 0020 (i.e., facing the cell zone 0051) when the cell holder 0050 is assembled with the LLC 0080 and the BCs 0020 to form the BM 3010 and further have an external surface opposite to the internal surface 0054. In some embodiments, the flow guide 0053 may extend from the internal surface 0054 of the cell holder 0050 and is disposed between the cell-holder stopping structures 0140 or between the cell-holder stopping structures 0140 and the module-wall-lateral-channels 3099 (but not limited thereto, meaning that the position of the flow guide 0053 on the internal surface 0054 can be changed according to the needs of liquid flow control and heat dissipation).

When the two cell holders are fixed within the BP-space 3032, a height of the flow guide 0053 in the x-direction is less than or equal to a shortest distance between the internal surfaces 0054 of the two cell holders. When any two BCs 0020 are fixed between the two adjacent cell-holder stopping structures 0082, a cross-sectional area of the flow guide 0053 in the x-y or x-z plane (hereinafter referred to as a flow-guide sectional area) is less than or equal to a cross-sectional area of space between the two BCs 0020 in the x-y or x-z plane (hereinafter referred to as a BC sectional area). The liquid flow rate between the two BCs 0020 decreases as the flow-guide sectional area increases. When the flow-guide sectional area is almost equal to the BC sectional area, the liquid flow rate between the two BCs 0020 is zero. In other words, the arrangement of the plurality of flow guides 0053 on the internal surface 0054 of the cell holder 0050 may determine the direction of the liquid flow within the BP-space 3032, ensuring uniform heat dissipation for the components within the BP-space 3032.

In some embodiments, the flow guide 0053 may include a plurality of extended columns 00531 (e.g., in a triangular pillar shape, but not limited thereto) extending from the internal surface 0054 of the cell holder 0050. In some embodiments, the extended columns 00531 may be disposed along the east wall 0096 and the west wall 0098. Thus, with reference to FIG. 26A and FIG. 27A, a portion of the extended columns 00531 may neighbor (e.g., within a diameter range of the BC 0020) the side wall 0091 having the one or more first module-wall-vertical-channels 3098(a) (e.g., the east wall 0096), and the other portion of the extended columns 00531 may neighbor (e.g., within the diameter range of the BC 0020) the side wall 0091 having the one or more second module-wall-vertical-channels 3098(b) (e.g., the west wall 0098), so as to change the flow direction of the module-wall- lateral- flow 3105 when entering the BP-space 3032. In other words, a portion of the extended columns 00531 may neighbor the one or more first module-wall-vertical-channels 3098(a), and the remaining portion of the extended columns 00531 may neighbor the one or more second module-wall-vertical-channels 3098(b).

In some embodiments, each of the extended columns 00531 may be disposed between three neighboring cell receiving structures 0060. In some embodiments, the extended columns 00531 may be disposed neighboring one of the west wall 0098 and the east wall 0096. In some embodiments, distances from the extended columns 00531 to the one of the west wall 0098 and the east wall 0096 may be close to a diameter of the cell receiving structure 0060. In some embodiments, distances from the extended columns 00531 to the one of the west wall 0098 and the east wall 0096 may be equal to or less than the diameter of the cell receiving structure 0060. In some embodiments, the minimum distance dm from the extended columns 00531 to the one of the west wall 0098 and the east wall 0096 may be less than the diameter of the cell receiving structures 0060. In some embodiments, the distance dl from an axial center of the extended column 00531 and a curved wall edge of the one of the west wall 0098 and the east wall 0096 along a direction DLO (i.e., the y-direction as shown in FIG. 27A) may be less than the diameter of the cell receiving structure 0060.

In some embodiments, distances Ds from the cell-holder stopping structures 0140 to a top wall surface 0083 of the LLC 0080 may be slightly shorter than distances Dc from the extended columns 00531 to the top wall surface 0083. To be noted, as shown in FIG. 27B, the distance Ds could be defined as the minimal vertical distance from the cell-holder stopping structure 0140 to the top wall surface 0083 and the distance Dc could be defined as the minimal vertical distance from the extended column 00531 to the top wall surface 0083. Thus, when the cell support is assembled with the LLC 0080, a distance from the cell support to the extended columns 00531 may be equal to a difference between the distances Ds and Dc. In addition, the distance from the cell support to the extended columns 00531 may be reduced to prevent the thermal-management liquid from flowing through one or more extended columns 00531. In other words, the thermal-management liquid may not flow through the extended columns 00531, such that the extended columns 00531 may guide the thermal-management liquid to flow, along a lateral direction DLA (i.e., the z-direction as shown in FIG. 27A), towards the corners of the BP-space 3032 when the thermal-management liquid flows through the at least one lateral slit. Thus, the thermal-management liquid may fully flow through the BM 3010 and the temperature of the thermal-management liquid in the BM 3010 may be decreased more uniformly.

With reference to FIG. 26A and FIG. 27A, in some embodiments, the one or more module-wall-lateral-channels 3099(a) and the flow guide 0053 cooperatively form at least one lateral slit for the first module-wall-vertical-channel 3098(a), so as to guide the thermal-management liquid to flow from the first module-wall-vertical-channels 3098(a) into the BP-space 3032 for cooling the BCs 0020 in the BP-space 3032. In some embodiments, an angle between one of the west wall 0098 and the east wall 0096 and the flowing direction Dfs of the thermal-management liquid flowing through one of the at least one lateral slit may be an acute angle. In some embodiments, the at least one lateral slit may guide the module-wall-lateral-flow 3105 flow in the flowing direction Dfs to have a lateral flow component, for guiding the thermal-management liquid to flow towards the corners of the BP-space 3032. Thus, the thermal-management liquid may fully flow through the BM 3010 and the temperature of the thermal-management liquid in the BM 3010 may be decreased more uniformly.

In some embodiments, the flowing direction of the thermal-management liquid flowing through the one or more first module-wall-vertical-channels 3098(a) may be parallel to an assembly direction between the BM 3010 and the lid module 3090(a) and may be perpendicular to the flowing direction Dfs of the thermal-management liquid flowing through the at least one lateral slit. In some embodiments, the flowing direction of the thermal-management liquid flowing through the one or more second module-wall-vertical-channels 3098(b) may be parallel to the assembly direction and perpendicular to the flowing direction Dfs of the thermal-management liquid flowing through the at least one lateral slit.

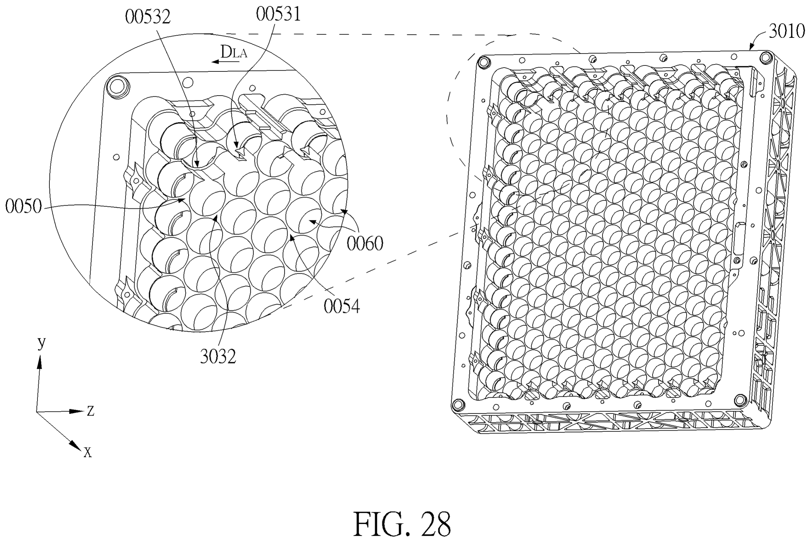

FIG. 28 illustrates a partially enlarged view of a top-left corner of the BM 3010, according to another example implementation of the present disclosure. Components both mentioned in this embodiment and the aforesaid embodiments or with similar reference numerals represent components with similar structures or functions, and the related description is omitted herein.

In some embodiments, the plurality of cell receiving structures 0060 may be formed by the cell holder 0050 connected to the LLC 0080 for accommodating the BCs 0020 in the BP-space 3032. Each of the cell receiving structures 0060 formed by the cell holder 0050 may be used to receive one of the two electrode sides of the BCs 0020. In some embodiments, the flow guide 0053 may include the plurality of extended columns 00531 and a plurality of extended walls 00532, each extending from the internal surface 0054 of the cell holder 0050. In some embodiments, the extended walls 00532 may be disposed at four corners of the cell holder 0050. In some embodiments, each of the extended walls 00532 may be extended from the cell holder 0050 and may be sandwiched between two neighboring cell receiving structures 0060.

With reference to FIG. 27B and FIG. 28, the flow guide 0053 may further include the plurality of extended walls 00532 (e.g., in a curved sheet shape, but not limited thereto) extending from the internal surface 0054 of the cell holder 0050. In some embodiments, the distance Ds from the cell-holder stopping structures 0140 to the top wall surface 0083 may be slightly shorter than the distances Dc from the extended columns 00531 to the top wall surface 0083, which are identical to the distances from the extended walls 00532 to the top wall surface 0083. To be noted, as shown in FIG. 27B, the distance Ds could be defined as the minimal vertical distance from the cell-holder stopping structure 0140 to the top wall surface 0083 and the distance Dc could be defined as the minimal vertical distance from the extended wall 00532 to the top wall surface 0083. Thus, when the cell support is assembled with the LLC 0080, a distance from the cell support to each extended wall 00532 may be equal to the difference between the distances Ds and Dc. In addition, the distance from the cell support to each extended wall 00532 may be reduced to prevent the thermal-management liquid from flowing through one or more extended walls 00532. In other words, the thermal-management liquid may not flow through the extended walls 00532, resulting in the extended walls 00532 guiding the thermal-management liquid to flow, along the lateral direction DLA (i.e., the z-direction as shown in FIG. 28), towards the corners of the BP-space 3032. Thus, the thermal-management liquid may fully flow through the BM 3010 and the temperature of the thermal-management liquid in the BM 3010 may be decreased more uniformly.

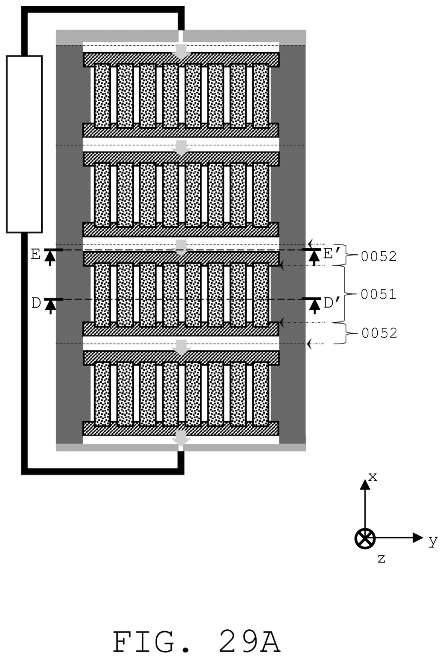

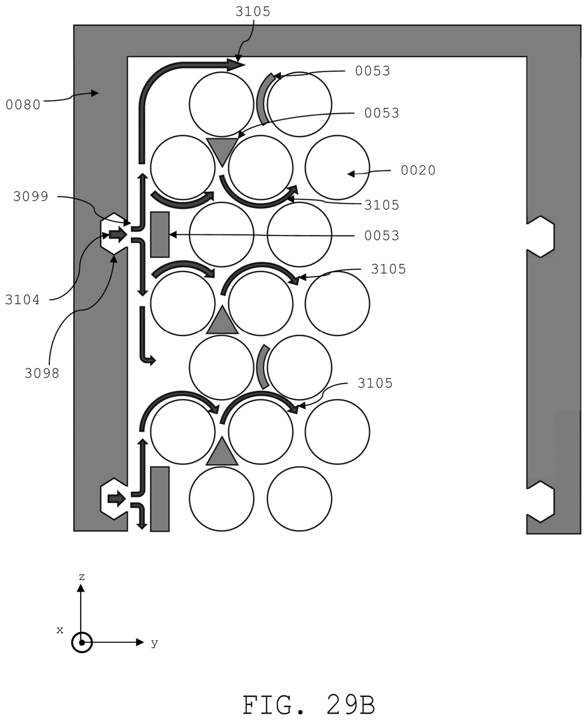

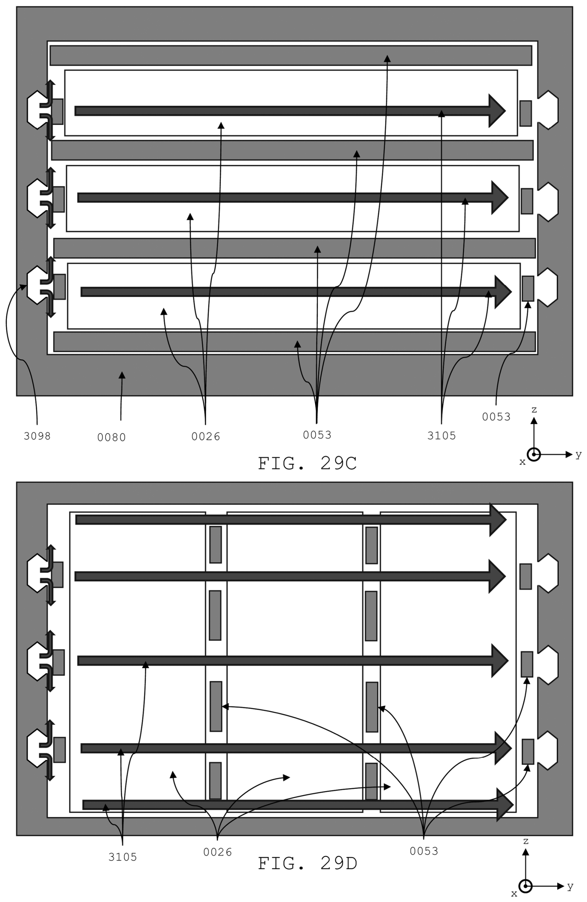

Please refer to FIG. 29A, FIG. 29B, FIG. 29C, and FIG. 29D. FIG. 29A is a conceptual perspective diagram of a cross-sectional view of the BP 3030. FIG. 29B is a partial cross-sectional view of the BP 3030 in FIG. 29A along line D-D'. FIG. 29C and FIG. 29D are cross-sectional views of the BP 3030 in FIG. 29A along line E-E'. To be noted, the term "lateral" refers to any vector on the y-z plane in FIG. 29A, FIG. 29B, FIG. 29C, and FIG. 29D. For example, a lateral liquid flow could be a liquid flow on the y-z plane that moves only in the z-direction; a lateral channel could be a channel located on the y-z plane that extends only in the z-direction. Components both mentioned in this embodiment and the aforesaid embodiments or with similar reference numerals represent components with similar structures or functions, and the related description is omitted herein.

Please refer to FIG. 29B, which is a cross-sectional view of the cell zone 0051. Along the y-direction, the LLC 0080 has the module-wall-lateral-channels 3099 formed on the two opposite side walls 0091. The module-wall-vertical-flow 3104 flows from the module-wall-lateral-channel 3099 into the BP-space 3032 to form the module-wall-lateral-flow 3105. Without the flow guides 0053, the module-wall-lateral-flow 3105 primarily flows along the space between the BCs 0020 in the y-direction with less flow along the z-direction. This results in some areas of the BP-space 3032 having little or no liquid flow, thereby preventing heat dissipation and leading to uneven cooling. For increasing the lateral liquid flow in the z-direction, the cell holder 0050 has the plurality of flow guides 0053 disposed corresponding to the module-wall-lateral-channels 3099 and between the cell receiving structures 0060. The module-wall-lateral-flow 3105 is blocked by the flow guides 0053 and the BCs 0020 and then flows simultaneously in both the z-direction and the y-direction, so as to result in a more uniform liquid temperature distribution within the BP-space 3032 for improving the cooling efficiency of the BP 3030 and solving the uneven cooling problem.

Please refer to FIG. 29C, which is a cross-sectional view of the edge zone 0052. Along the y-direction, the LLC 0080 has the module-wall-lateral-channels 3099 formed on the two opposite side walls 0091. In the edge zone 0052, the plurality of flow guides 0053 could be disposed corresponding to the module-wall-lateral-channels 3099 and arranged along the y-direction. The flow guides 0053 can guide the module-wall-lateral-flow 3105 to flow along the z-direction and the y-direction, so as to result in a more uniform liquid temperature distribution within the BP-space 3032 for improving the cooling efficiency of the BP 3030. Furthermore, the flow guides 0053 can also limit the positions of the BCCMs 0026.

Please refer to FIG. 29D, which is a cross-sectional view of the edge zone 0052 according to another embodiment of the present disclosure. In this embodiment, the plurality of flow guides 0053 could be disposed along the z-direction. The space between the flow guides 0053 can guide the module-wall-lateral-flow 3105 to flow along the z-direction and the y-direction, so as to result in a more uniform liquid temperature distribution within the BP-space 3032 for improving the cooling efficiency of the BP 3030. Furthermore, the flow guides 0053 can also limit the positions of the BCCMs 0026. It could be understood that, in one embodiment, the flow guides 0053 disposed respectively along the y-direction and the z-direction could be used in combination as needed, and are not limited to being only disposed along one single direction.

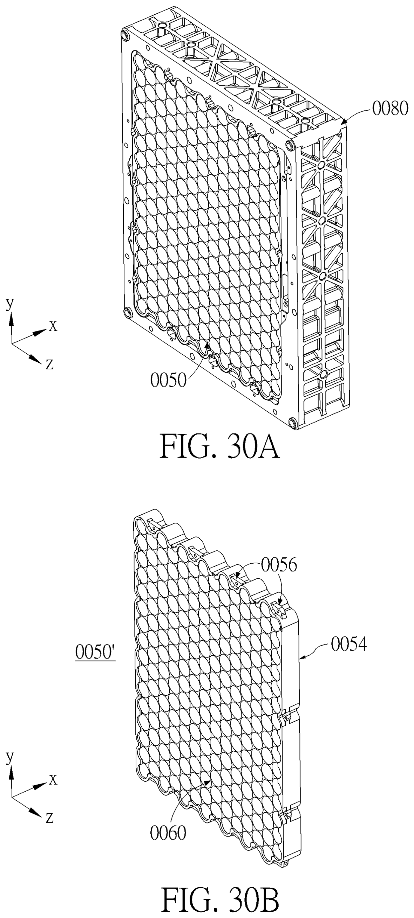

FIG. 30B illustrates a perspective view of a cell holder 0050' (i.e., the cell support), according to an example implementation of the present disclosure, and FIG. 30A illustrates a perspective view of a combination of the BM 3010 illustrated in FIG. 26A and the cell holder 0050' illustrated in FIG. 30B, according to an example implementation of the present disclosure. Components both mentioned in this embodiment and the aforesaid embodiments or with similar reference numerals represent components with similar structures or functions, and the related description is omitted herein.

In some embodiments, the cell holder 0050' may include the plurality of cell receiving structures 0060, a plurality of fixing planes 0056, and the internal surface 0054. With reference to FIG. 27A and 30A, the cell receiving structures 0060 of the cell holder 0050 and the cell holder 0050' may receive the two opposite electrode sides of the BCs 0020. In some embodiments, the fixing planes 0056 may be fixed to the cell-holder fixing structures 0082, and the internal surface 0054 of the cell holder 0050' may be connected to the cell-holder stopping structure 0140 of the cell holder 0050 when the cell holder 0050 and the cell holder 0050' are assembled within the LLC 0080. To be noted, the fixing plane 0056 extends outward from the peripheral edge of the cell holder 0050' in the y-direction or the z-direction, and has a fixing hole formed thereon. When the fixing hole is aligned with the cell-holder fixing structure 0082, the fixing fastener 0152 can pass through the fixing plane 0056 to be locked into the cell-holder fixing structure 0082, so that the cell holder 0050' is fixed within the LLC 0080 by the fixing fastener 0152. In one embodiment, a thickness of the fixing plane 0056 in the x-direction is less than a thickness of the cell holder 0050' in the x-direction.

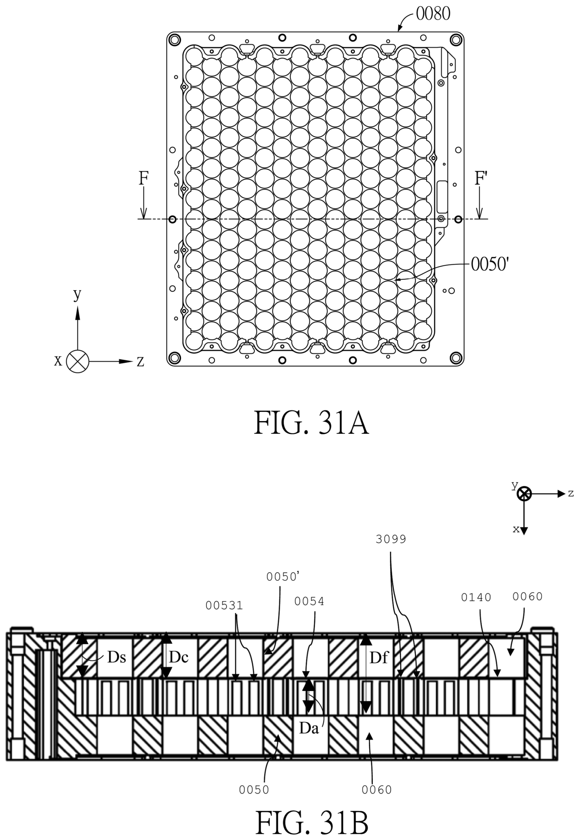

FIG. 31A illustrates a front view of the combination of the BM 3010 and the cell holder 0050' illustrated in FIG. 30B, according to an example implementation of the present disclosure. FIG. 31B illustrates a cross-sectional view of the combination of the BM 3010 and the cell holder 0050' illustrated in FIG. 31A, taken along line F-F' of FIG. 31A, according to an example implementation of the present disclosure. Components both mentioned in this embodiment and the aforesaid embodiments or with similar reference numerals represent components with similar structures or functions, and the related description is omitted herein.

In some embodiments, each of the cell receiving structures 0060 formed by the cell holder 0050 may be aligned with the cell receiving structures 0060 of the cell holder 0050'. With reference to FIG. 27B and FIG. 31B, the cell holder 0050' may be supported by the cell-holder stopping structure 0140 of the LLC 0080. In some embodiments, since the cell holder 0050' is assembled in the LLC 0080, a portion of each module-wall-lateral-channel 3099 may be blocked by the cell holder 0050'. Thus, the thermal-management liquid may flow from the BP-space 3032 into the one or more second module-wall-vertical-channels 3098(b) through unblocked portions of each module-wall-lateral-channel 3099. Similarly, with reference to FIG. 26B and FIG. 31A, in some embodiments, since the cell holder 0050' is assembled in the LLC 0080, a portion of each inlet slit of the first module-wall-vertical-channels 3098(a) may be blocked by the cell holder 0050'. Thus, the thermal-management liquid may flow into the BP-space 3032 from the one or more first module-wall-vertical-channels 3098(a) through unblocked portions of each inlet slit of the first module-wall-vertical-channels 3098(a).

With reference to FIG. 27A and FIG. 31B, In some embodiments, a distance Df from the internal surface 0054 of the cell holder 0050 to the top wall surface 0083 of the LLC 0080 may be substantially longer than a distance Da from the internal surface 0054 of the cell holder 0050 to the internal surface 0054 of the cell holder 0050'. In some embodiments, the lengths of the unblocked portion of each module-wall-lateral-channel 3099 may be equal to the distance Da. Thus, when the thermal-management liquid flows into the second module-wall-vertical-channels 3098(b), the thermal-management liquid may flow through the unblocked portions of each module-wall-lateral-channel 3099 into the second module-wall-vertical-channels 3098(b) since the lengths of the unblocked portions of each module-wall-lateral-channel 3099 may be long enough for the thermal-management liquid to easily flow into the second module-wall-vertical-channels 3098(b).

Similarly, with reference to FIG. 26B and FIG. 31A, in some embodiments, the length of the unblocked portion of each inlet slit may be equal to the distance Da. Thus, when the thermal-management liquid flows into the BP-space 3032 from the first module-wall-vertical-channels 3098(a), the thermal-management liquid may flow through the unblocked portions of each inlet slit from the first module-wall-vertical-channels 3098(a) into the BP-space 3032 since the lengths of the unblocked portion of each inlet slit of the first module-wall-vertical-channels 3098(a) may be long enough for the thermal-management liquid to flow into the BP-space 3032.

In some embodiments, the distance Ds from the cell-holder stopping structure 0140 to the top wall surface 0083 of the LLC 0080 may be slightly shorter than the distance Dc from the extended columns 00531 to the top wall surface 0083 of the LLC 0080. Thus, when the cell holder 0050' is assembled with the LLC 0080, a distance from the cell holder 0050' to the extended columns 00531 may be equal to the difference between the distances Ds and Dc. In addition, the distance from the cell holder 0050' to the extended columns 00531 may be reduced to prevent the thermal-management liquid from flowing through on one or more extended columns 00531. In other words, the thermal-management liquid may not flow through the extended columns 00531, resulting in the extended columns 00531 guiding the thermal-management liquid to flow, along the lateral direction DLA in FIG. 27C, towards the corners of the BP-space 3032. Thus, the thermal-management liquid may fully flow through the BMs 3010 and the temperature of the thermal-management liquid in the BMs 3010 may be decreased more uniformly.

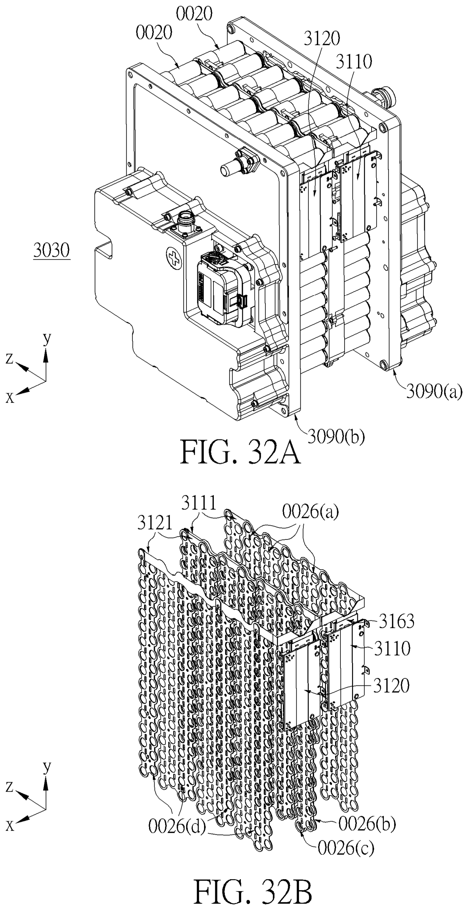

FIG. 32A illustrates a perspective view of the BP 3030 illustrated in FIG. 22B without the LLCs 0080 illustrated in FIG. 23, according to an example implementation of the present disclosure. FIG. 32B illustrates electronic connection structures of cell monitoring circuits 3110 and 3120 illustrated in FIG. 32A, according to example implementations of the present disclosure.

Components both mentioned in this embodiment and the aforesaid embodiments or with similar reference numerals represent components with similar structures or functions, and the related description is omitted herein.

With reference to FIG. 22B and FIG. 32A, in some embodiments, each of the BMs 3010 may include a corresponding one of the cell monitoring circuits 3110 and 3120 (i.e., the cell monitoring devices 0260 as shown in FIG. 12A) installed in a corresponding one of the BMs 3010. In some embodiments, the cell monitoring circuit 3110 may be electrically connected to the cell monitoring circuit 3120 for transmission of monitoring data or control signals. In some embodiments, an electrical connector of the cell monitoring circuit 3110 may be installed on the BM 3010 and may be exposed on the LLC 0080. An electrical connector of the cell monitoring circuit 3120 may be installed on the BM 3010 and may be exposed on the LLC 0080. When the BMs 3010 are connected to each other, the electrical connector of the cell monitoring circuit 3110 may also be directly or electrically connected to the electrical connector of the cell monitoring circuit 3120. Thus, the electrical connectors of the cell monitoring circuit 3110 and the cell monitoring circuit 3120 may not be exposed out of the BMs 3010 when the BMs are connected to each other.

In some embodiments, as FIGs 32A, 32B depicted, the BM 3010 may further comprise at least one PCB for certain functions. Such functional PCBs may be arranged in the BP-space 3032, or, as previously disclosed (see FIG.12A and its description), located in the vertical wall channel 0230, or located in both the two mentioned spaces.

In some embodiments, as FIG. 32B depicted, the BM 3010 may further comprise at least one FPC component for certain functions. Such functional FPC components may be arranged in the BP-space 3032, or, as previously disclosed (see FIG.12A and its description), located in the vertical wall channel 0230, or located in both the two mentioned spaces.

In some embodiments, as FIG. 32B depicted, the BM 3010 may further comprise at least one PCB-FPC interface 3163 that is configured for electrically or signally connect the PCB and the FPC. In some embodiments, the PCB-FPC interface 3163 may be a pair of inter-connectable connectors that is arranged on the PCB and the FPC respectively.

For example, as FIG. 32B depicted, each of the BM 3010 of the BP 3030 comprises a PCB that is arranged in the vertical wall channel 0230 (not shown in this figure), two FPC components that are arranged both in another vertical wall channel (or in the same vertical wall channel where the PCB is arranged), and in the BP-space 3032. The PCB-FPC interface 3163 is arranged in the vertical wall channel and on the PCB.

As FIG. 32B depicted, each of the two FPC components comprise a first part that is in the vertical wall channel and a second part that is in the BP-space 3032. In the vertical wall channel, the first parts of the two FPC components signally and eclectically connects to the PCB-FPC interfaces 3163 and to the PCB. In the vertical wall channel, the body of each of the first parts of FPC components extends along the vertical direction to a vertical position of the vertical wall channel; therefore, in such a vertical position, the body of each of the FPC continuously extends along the z-direction and therefore enters the BP-space 3032 (and this part is considered as the second part of the FPC).

In some embodiments, the second part of the FPC may extended in the BP-space 3032 along the lateral direction to directly attach on the BCA 0010 at any lateral direction to form electrical and/or signal connection to the BCA 0010.

For example, as FIG. 32B depicted, the second part of the FPC extends along the positive-y edge (along the z-direction) of the BCA 0010 and connects and contacts directly to each BCCM 0026.

For example, as FIG. 32B depicted, the second part of the FPC may further comprise branches that extends from the positive-y edge of the BCA 0010, along the negative-y-direction of the BCA 0010 to reach certain lateral positions of the BCA 0010 and connects and contacts directly to the BCCM 0026 at such certain lateral positions.

In some embodiments, the functional purpose of the PCB and FPC circuit configuration may be cell monitoring. For example, the PCB may be a cell monitoring device that comprises processors, controllers, drivers that are used to control sensors that sense the status of the BC 0020 or the BCA 0010. Such sensors and the connection for sensing may be arranged on the FPC components and form a loop to the PCB where the cell monitoring device is arranged.

In some embodiments, the functional purpose of the PCB and FPC circuit configuration may be BP heating. For example, the PCB may be a cell heating device that comprises processors, controllers, drivers that are used to control heaters that generate heat to warm the BP-space 3032. Such heaters and the connection for heating may be arranged on the FPC components and form a loop to the PCB where the cell monitoring device is arranged.

In some embodiments, each of the BMs 3010 may also include the plurality of BCs 0020. In some embodiments, the first one of the BMs 3010 may further include a plurality of BCCMs 0026(a) and a plurality of BCCMs 0026(b), and each of the BCs 0020 of the first one of the BMs 3010 may be electrically connected to one of the BCCMs 0026(a) and one of the BCCMs 0026(b). In some embodiments, the last one of the BMs 3010 may further include a plurality of BCCMs 0026(c) and a plurality of BCCMs 0026(d), and each of the BCs 0020 of the last one of the BMs 3010 may be electrically connected to one of the BCCMs 0026(c) and one of the BCCMs 0026(d). In some embodiments, the plurality of BCCMs 0026(a), BCCMs 0026(b), BCCMs 0026(c), and BCCMs 0026(d) may be used to electrically connect the BCs 0020 to each other. In addition, the BCs 0020 may be electrically connected to each other in series or in parallel by the plurality of BCCMs 0026(a), BCCMs 0026(b), BCCMs 0026(c), and BCCMs 0026(d). With reference to FIG. 22A, FIG. 22B and FIG. 32A, in some embodiments, one of the plurality of BCCMs 0026(a) may be electrically connected to the HVIC 3063 on the lid module 3090(a), and one of the plurality of BCCMs 0026(d) may be electrically connected to the HVIC 3063 on the lid module 3090(b). In addition, one of the plurality of BCCMs 0026(b) may be electrically connected to one of the plurality of BCCMs 0026(c). Thus, electrical power may be discharging from or stored into the BCs 0020 through the HVIC 3063 on the lid module 3090(a) and the HVIC 3063 on the lid module 3090(b).

In some embodiments, the cell monitoring circuit 3110 may be electrically connected to the BCCMs 0026(a) and 0026(b) and a plurality of cell sensing circuits 3111. The cell sensing circuits 3111 may be electrically connected to at least one of the BCCMs 0026(a) and at least one of the BCCMs 0026(b). In some embodiments, the BCCMs 0026(a) and 0026(b) and the cell sensing circuits 3111 may be accommodated in the BP-space 3032 of the BM 3010, such that the BCCMs 0026(a) and 0026(b) and the cell sensing circuits 3111 may be immersed in the thermal-management liquid contained in the BM 3010 for heat dissipation of the BCCMs 0026(a) and 0026(b) and the cell sensing circuits 3111. In some embodiments, the cell monitoring circuit 3120 may be electrically connected to the BCCMs 0026(c) and 0026(d) through a plurality of cell sensing circuits 3121. The plurality of cell sensing circuits 3121 may be electrically connected to the BCCMs 0026(c) and the BCCMs 0026(d). In some embodiments, the BCCMs 0026(c) and 0026(d) and the cell sensing circuits 3121 may be immersed in the thermal-management liquid contained in the BM 3010 for heat dissipation of the BCCMs 0026(c) and 0026(d) and the cell sensing circuits 3121. In some embodiments, the cell sensing circuits 3111 and 3121 may be flexible printed circuits (FPCs).

In some embodiments, the cell sensing circuits 3111 and 3121 may be used to measure voltages and temperatures of the BCCMs 0026(a), BCCMs 0026(b), BCCMs 0026(c), and BCCMs 0026(d) to provide measured results to the cell monitoring circuits 3110 and 3120. In some embodiments, the cell monitoring circuits 3110 and 3120 may control temperatures and voltages of the BCs 0020, and the cell sensing circuits 3111 and 3121 based on the measured results for controlling the temperature of the thermal-management liquid. For example, the cell monitoring circuit 3110 may control/use the cell sensing circuits 3111 to convert the electrical power of the BCs 0020, that each is electrically connected to the BCCMs 0026(a) and 0026(b), into heat for controlling the voltages and the temperatures of the BCs 0020. In some embodiments, the manner in which the cell monitoring circuits 3110 and 3120 control the temperatures and voltages of the BCs 0020, and further control the operation of the cell sensing circuits 3111 and 3121, may be accomplished through programmable driving signals. For example, the cell monitoring circuit 3110 may generate switching control signals, current-limiting commands, or pulse-width-modulation (PWM) signals to cause a controlled current to pass through the BCs 0020 or through a heating component within the cell sensing circuit 3111. This controlled current may be converted into heat due to the internal resistance of the BCs 0020 or the heating component of the cell sensing circuits 3111, thereby increasing or stabilizing the temperature of the BCs 0020 or the thermal-management liquid. Similarly, voltage regulation may be achieved by adjusting the magnitude, duration, or duty cycle of the current supplied through the cell sensing circuit 3111, so as to control the voltage levels of the BCs 0020.

In some embodiments, the cell monitoring circuit 3120 may control/use the cell sensing circuits 3121 to convert the electrical power of the BCs 0020 into heat for controlling the voltages and the temperatures of the BCs 0020. Thus, the electrical power of the BCs 0020 may be directly used to heat the thermal-management liquid and the BCs 0020 for increasing the temperature of the thermal-management liquid when the cell monitoring circuits 3110 and 3120 controls the temperature of the cell sensing circuits 3111 and 3121. Therefore, due to functions of the voltage control and the temperature control of the cell monitoring circuits 3110 and 3120, there is no need to install additional heating equipment in the BM 3010. In addition, since the cell monitoring circuits 3110 and 3120, and the cell sensing circuits 3111 and 3121 may be installed in the BMs 3010 rather than exposed out of the BM 3010, the possibility of component damage may be decreased while the possibility of component durability may be increased. In some embodiments, the cell sensing circuits 3111 and 3121 may include heating traces that generate heat when a current flows through the cell sensing circuits 3111 and 3121 under the control of the cell monitoring circuits 3110 and 3120. Thus, the resistive losses produced by the cell sensing circuits 3111 and 3121 may be dissipated as thermal energy, and then the thermal energy may be transferred from the cell monitoring circuits 3110 and 3120 to the thermal-management liquid. In such a manner, the temperature of the thermal-management liquid may be increased without requiring additional heating components.

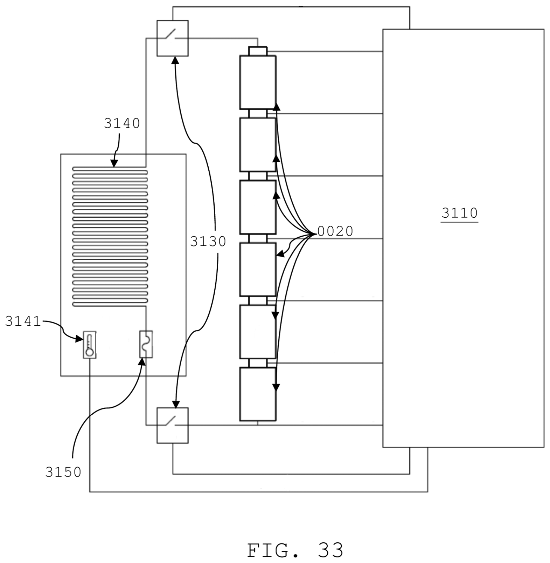

FIG. 33 illustrates a circuit diagram of the BCs 0020, the cell monitoring circuit 3110, and the cell sensing circuits 3111 illustrated in FIG. 32A and FIG. 32B, according to an example implementation of the present disclosure.

Components both mentioned in this embodiment and the aforesaid embodiments or with similar reference numerals represent components with similar structures or functions, and the related description is omitted herein.

With reference to FIG. 32B and FIG. 33, in some embodiments, the BM 3010 may further include one or more switches 3130 and a heating module 3140. In some embodiments, the one or more switches 3130 may be electrically connected to the BCs 0020, the cell monitoring circuit 3110, and the heating module 3140. In some embodiments, the cell monitoring circuit 3110 may send a switch signal to control the one or more switches 3130 to be turned ON or OFF. In some embodiments, when the one or more switches 3130 are turned OFF by the cell monitoring circuit 3110, the current of the BCs 0020 may not flow through the heating module 3140. Thus, the heating module 3140 may not convert the electrical power of the BCs 0020 into heat. In some embodiments, when the one or more switches 3130 are turned ON by the cell monitoring circuit 3110, the current of the BCs 0020 may flow through the heating module 3140. Thus, the heating module 3140 may convert the electrical power of the BCs 0020 into heat to heat the BCs 0020 and the thermal-management liquid contained in the BM 3010. In some embodiments, the heating module 3140 may be a heating copper trace. In some embodiments, the cell monitoring circuit 3110 may control the one or more switches 3130 by generating driving signals, such as gate-control voltages, base currents, or pulse-width-modulated signals, depending on the type of the switch 3130 (e.g., MOSFETs, BJTs, or other semiconductor switching devices). These driving signals may selectively drive the one or more switches 3130 into a turned-off state or a turned-on state. To be noted, in practical applications, the BM 3010 could comprise at least two of the cell monitoring circuits, the cell sensing circuits and the heating module.

In some embodiments, the BM 3010 may further include an electrical safety device 3150 electrically connected to the one or more switches 3130 and the heating module 3140. In some embodiments, the electrical safety device 3150 may include a wire or strip of fusible metal that melts or interrupts the circuit when the current exceeds a threshold current. Thus, when the current of the heating module 3140 exceeds the threshold current, the electrical safety device 3150 may shut down the current to stop heating the thermal-management liquid and the BCs 0020. In some embodiments, when the electrical safety device 3150 melts due to the excessive current, the conductive path between the one or more switches 3130 and the heating module 3140 may be physically broken. As a result, the electrical connection that supplies current to the heating module 3140 may be interrupted, causing the heating module 3140 to stop receiving electrical power. Therefore, the heating module 3140 may immediately stop generating heat, thereby shutting down the heating operation for the thermal-management liquid and the BCs 0020.

In some embodiments, the heating module 3140 may further include a temperature sensor 3141 electrically connected to the cell monitoring circuit 3110. The cell monitoring circuit 3110 may control the temperature sensor 3141 to monitor the temperature of the thermal-management liquid and the BCs 0020. In some embodiments, the cell monitoring circuit 3110 may control the temperature sensor 3141 by providing sensing-control signals to activate the temperature-measurement function of the temperature sensor 3141. For example, the cell monitoring circuit 3110 may periodically send a reference voltage or current to the cell monitoring circuit 3110 so that the temperature sensor 3141 may generate a temperature sensing signal. The cell monitoring circuit 3110 may then receive the temperature sensing signal to determine the temperature of the thermal-management liquid and the BCs 0020. To be noted, the functional purpose of the aforesaid cell sensing circuits still comprise temperature sensing, and the cell sensing circuits and the temperature sensor 3141 sense temperatures of different components in the BP 3030.

Therefore, the electrical power of the BCs 0020 may be directly used to heat the thermal-management liquid and the BCs 0020. Due to the functions of voltage control and temperature control of the cell monitoring circuit 3110, no additional heating equipment may be required to be installed in the BM 3010. In addition, since the cell monitoring circuit 3110, the one or more switches 3130 and the heating module 3140 may be all installed within the BM 3010 rather than being exposed out of the BM 3010, the possibility of damaging the cell monitoring circuit 3110 and the cell sensing circuits 3111 may be decreased and the durability of the cell monitoring circuit 3110 and the cell sensing circuits 3111 may be increased.

In some embodiments, the cell sensing circuit 3111 may increase the temperature of the thermal-management liquid because the heating module 3140 (e.g., a heating copper trace or resistive element) may generate heat when a current flows through the heating module 3140. When the cell monitoring circuit 3110 turns ON the one or more switches 3130, the current may pass through the heating module 3140, and the resistive losses produced by the heating module 3140 may be converted into thermal energy. As such, the thermal energy may be transferred to the thermal-management liquid, thereby increasing the temperature of the thermal-management liquid.

In some embodiments, the PCB (e.g., cell monitoring circuit 3110) may further comprise a vertical stacking connector 3160 disposed at a vertical end of the at least one battery module.

This vertical stacking connector 3160 may be configured to be the signal interface between the PCB (e.g., cell monitoring circuit 3110) of the underlying BM 3010 and another PCB (e.g., cell monitoring circuit 3110) of an adjacent BM 3010. The vertical stacking connector 3160 may electrically couple the two adjacent BMs (i.e., the BMs 3010 that stacked directly with each other).

In some embodiments, the two vertical stacking connectors 3160 that are configured to be connected with each other may be configured to achieve blind-mating (or automatic mating). This blind-mating capability means that the connectors are mechanically self-aligning upon the vertical stacking of the BMs 3010, ensuring a fast and reliable electrical connection. This feature significantly enhances the efficiency and automation level of the battery pack manufacturing process.

In some embodiments, the PCB (e.g., the cell monitoring circuit 3110) disposed within the module-wall-vertical-channel 3098 may further comprise a vertical interface connector 3162 disposed at a vertical end thereof.

The vertical interface connector 3162 is configured to electrically connect the circuit board to a corresponding connector disposed on one of the two lid modules 3090 when the BM 3010 and the lid module 3090 are vertically assembled. The primary purpose of this connection is to transmit state information (such as voltage, temperature, or current) collected by the circuit board to the main electronic control unit located in the lid module 3090.

Specifically, the EEIM 3100 disposed on one of the two lid modules 3090 is configured to house or be electrically coupled to a circuit for battery management for further processing or control.

In some implementations, the vertical stacking connector 3160 and the vertical interface connector 3162 may be implemented as a single physical connector located on the circuit board, wherein the single connector is configured with separate pins or contacts to perform both the module-to-module stacking connection and the module-to-EEIM signal interface functions.

Accordingly, the vertical interface connector 3162 is configured to electrically connect the cell monitoring circuit 3110 to the circuit for battery management residing within the EEIM 3100. This arrangement facilitates the modular transmission of precise cell data directly to the circuit for battery management for control and protection purposes, thereby substantially improving the modularity and serviceability of the battery pack.

The embodiments shown and described above are only examples. Many details are often found in the art. Therefore, many such details are neither shown nor described. Even though numerous characteristics and advantages of the present disclosure have been set forth in the foregoing description, together with details of the structure and function of the present disclosure, the present disclosure is illustrative only, and changes may be made in the details. It will therefore be appreciated that the embodiment described above may be modified within the scope of the claims.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A battery pack (3030), comprising:
at least one battery module (3010) that comprises:
a plurality of battery cells (BCs), wherein each of the BCs (0020) comprises a positive electrode and a negative electrode, and wherein at least part of the electrodes of the BCs (0020) collectively define an electrode surface (0024);
at least one cell holder (0050, 0050') configured to limit the position of each of the BCs (0020), comprising a plurality of cell receiving structures (0060) distributed along a lateral direction, wherein a part of a body of each of the BCs (0020) is disposed in a corresponding one of the cell receiving structures (0060); **characterized by**:
at least one battery-cell-connecting member (BCCM) configured to electrically connect the electrodes of the BCs (0020), wherein the BCCM (0026) is disposed on the cell holder (0050, 0050') and arranged on the electrode surface (0024), and wherein the BCCM (0026) is mechanically engaged with the cell holder (0050, 0050') to limit a relative movement between the BCCM (0026) and the cell holder (0050, 0050');
a liquid-limiting casing (LLC) configured as a tubing structure, comprising:
a peripheral wall (0090) that laterally surrounds a space and extends vertically from a first vertical end to a second vertical end, wherein the space is configured to accommodate the BCs (0020), the at least one cell holder (0050, 0050'), and the at least one BCCM (0026), and wherein the first and the second vertical ends of the peripheral wall (0090) define a first opening and a second opening respectively; and
at least one mechanical interlocking structure disposed on the first or the second vertical end of the LLC (0080); and
at least one modular-electric-energy-interface (MEEI) electrically connected to the at least one BCCM (0026); and
two lid modules arranged at two opposite vertical ends of the at least one battery module (3010), wherein the two lid modules comprise:
at least one high-voltage interface connector (HVIC) configured to relay electrical energy of the battery pack (3030) to a downstream load;
at least one interface liquid connector (ILC) configured to introduce a thermal-management liquid into or out of the battery pack (3030);
at least one lid interlocking structure configured to be mechanically engaged with the mechanical interlocking structure of the LLC (0080) to limit a relative displacement between the lid modules and the at least one battery module (3010);
at least one lid electrical interface electrically connected to the HVIC (3063) and the MEEI (3020); and
at least one lid liquid channel in fluid communication with the ILC (3091, 3091', 3091") and the first opening and the second opening of the LLC (0080);
wherein the peripheral wall (0090) of the LLC (0080) of the at least one battery module (3010) and the two lid modules are vertically stacked and assembled to collectively form a liquid-tight battery-pack enclosure (3031);
wherein the liquid-tight battery-pack enclosure (3031) encloses a battery-pack space (3032) that is configured to accommodate the thermal-management liquid such that the plurality of BCs (0020), the at least one cell holder (0050, 0050'), and the at least one BCCM (0026) are immersed in the thermal-management liquid; and
wherein the LLC (0080) further comprises at least one cell-holder stopping structure (0140) protruding from an inner wall surface (0101) of the peripheral wall (0090) and configured to abut against the at least one cell holder (0050, 0050') so as to limit a vertical movement of the at least one cell holder (0050, 0050') within the LLC (0080).

2. The battery pack (3030) of claim 1, **characterized in that**: the peripheral wall (0090) comprises four side walls (0091) arranged to form a rectangular tubing structure.

3. The battery pack (3030) of claim 1, **characterized in that**: the at least one cell-holder stopping structure (0140) protrudes laterally and inwardly from the inner wall surface (0101) of the peripheral wall (0090) of the LLC (0080).

4. The battery pack (3030) of claim 3, **characterized in that**: the at least one cell holder (0050, 0050') comprises two cell holders, and wherein the at least one cell-holder stopping structure (0140) has a height smaller than a height of the peripheral wall (0090) such that a first space is defined between the first opening of the LLC (0080) and the at least one cell-holder stopping structure (0140) and a second space is defined between the second opening of the LLC (0080) and the at least one cell-holder stopping structure (0140), each of the first space and the second space being configured to accommodate a respective one of the two cell holders.

5. The battery pack (3030) of claim 3, **characterized in that**: the LLC (0080) comprises two of the at least one cell-holder stopping structures (0140) respectively disposed on inner surfaces of two opposite side walls (0091) of the peripheral wall (0090).

6. The battery pack (3030) of claim 3, **characterized in that**: the at least one cell-holder stopping structure (0140) comprises an inner boundary (0141) facing the at least one cell holder (0050), the inner boundary (0141) being spaced from the inner wall surface (0101) of the peripheral wall (0090) by a predetermined lateral distance so as to laterally position the at least one cell holder (0050) within the LLC (0080).

7. The battery pack (3030) of claim 6, **characterized in that**: the inner boundary (0141) is formed as a curved surface having a radius of curvature corresponding to a curved periphery of the at least one cell holder (0050) and/or the plurality of BCs (0020), such that the inner boundary (0141) at least partially surrounds the plurality of BCs (0020) and provides additional space to accommodate the plurality of BCs (0020).

8. The battery pack (3030) of claim 3, **characterized in that**: the at least one cell-holder stopping structure (0140) is a plurality of discrete cell-holder stopping structures (0140) that are disposed on the inner wall surface (0101) of one of the side walls (0091) of the peripheral wall (0090).

9. The battery pack (3030) of claim 3, **characterized in that**: the at least one cell holder (0050, 0050') comprises an internal surface (0054) configured to abut against the at least one cell-holder stopping structure (0140) when the at least one cell holder (0050, 0050') is assembled within the LLC (0080).

10. The battery pack (3030) of claim 9, **characterized in that**: the LLC (0080) further comprises at least one cell-holder fixing structure (0150) extending from the inner wall surface (0101) of the peripheral wall (0090) and having a fastener hole (0151) formed therein, and wherein the at least one cell holder (0050, 0050') comprises at least one fixing plane (0056) protruding laterally from a peripheral edge of the at least one cell holder (0050, 0050') and having a fixing hole aligned with the fastener hole (0151), such that a fixing fastener (0152) is vertically inserted through the fixing plane (0056) and the cell-holder fixing structure (0150) to fix the at least one cell holder (0050, 0050') to the LLC (0080) while the at least one cell-holder stopping structure (0140) vertically supports the at least one cell holder (0050, 0050').

11. The battery pack (3030) of claim 10, **characterized in that**: the at least one fixing plane (0056) is a side plane disposed at a lateral side of the at least one cell holder (0050, 0050'), the side plane extending outward from the peripheral edge of the at least one cell holder (0050, 0050') in a lateral direction and having the fixing hole formed thereon.

12. The battery pack (3030) of claim 11, **characterized in that**: a thickness of the side plane in a radial direction of the plurality of BCs (0020) is smaller than a thickness of the at least one cell holder (0050, 0050') in the radial direction.

13. The battery pack (3030) of claim 1, **characterized in that**: inner wall surfaces (0101) of the peripheral wall (0090) are formed as curved surfaces conforming to a curved periphery of the at least one cell holder (0050, 0050') and/or the plurality of BCs (002) so that a volume of the at least one battery module (3010) is reduced and the curved inner wall surfaces serve as guide structures when the at least one cell holder (0050, 0050') is placed into the LLC (0080) during assembly.

14. The battery pack (3030) of claim 1, **characterized in that**: the peripheral wall (0090) of the LLC (0080) comprises one or more module-wall-vertical-channels (3098) extending in a vertical direction and module-wall-lateral-channels (3099) formed on inner wall surfaces (0101) of two opposite side walls (0091) of the peripheral wall (0090), the one or more module-wall-vertical-channels (3098) being communicated with the module-wall-lateral-channels (3099) such that a module-wall-vertical-flow (3104) of the thermal-management liquid flowing within the one or more module-wall-vertical-channels (3098) flows through the module-wall-lateral-channels (3099) into the battery-pack space (3032) as a module-wall-lateral-flow (3105).

15. The battery pack (3030) of claim 14, **characterized in that**: the at least one cell holder (0050, 0050') comprises a plurality of flow guides (0053) disposed on an internal surface (0054) of the at least one cell holder (0050, 0050') and between the cell receiving structures (0060), the plurality of flow guides (0053) being disposed corresponding to the module-wall-lateral-channels (3099) so as to at least partially block and redirect the module-wall-lateral-flow (3105) and guide the thermal-management liquid to flow simultaneously in both a first lateral direction and a second lateral direction within the battery-pack space (3032), thereby resulting in a more uniform liquid temperature distribution within the battery-pack space (3032) and limiting positions of the at least one BCCM (0026).
